(19)

Europäisches Patentamt

European Patent Office

Office européen des brevets

(11) **EP 4 543 125 A1**

(12) **EUROPEAN PATENT APPLICATION**
published in accordance with Art. 153(4) EPC

(43) Date of publication:
**23.04.2025 Bulletin 2025/17**

(21) Application number: **23823820.8**

(22) Date of filing: **08.06.2023**

(51) International Patent Classification (IPC):
*H04W 72/232* [(2023.01)]  *H04W 72/1268* [(2023.01)]

(52) Cooperative Patent Classification (CPC):
**H04W 72/1268; H04W 72/232**

(86) International application number:
**PCT/JP2023/021340**

(87) International publication number:
**WO 2023/243529 (21.12.2023 Gazette 2023/51)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **17.06.2022 JP 2022097704**

(71) Applicant: **Sharp Kabushiki Kaisha
Sakai City, Osaka 590-8522 (JP)**

(72) Inventors:
• **FUKUI Takahisa
Sakai City, Osaka 590-8522 (JP)**
• **YOKOMAKURA Kazunari
Sakai City, Osaka 590-8522 (JP)**
• **MORIMOTO Ryota
Sakai City, Osaka 590-8522 (JP)**
• **WAN Hua
Sakai City, Osaka 590-8522 (JP)**

(74) Representative: **Müller-Boré & Partner
Patentanwälte PartG mbB
Friedenheimer Brücke 21
80639 München (DE)**

(54) **TERMINAL DEVICE, BASE STATION DEVICE, AND COMMUNICATION METHOD**

(57)     A terminal apparatus includes a receiver configured to receive a PDCCH to which a DCI format indicating transmission of a PUSCH is mapped, a transmitter configured to transmit the PUSCH, and the transmitter configured to generate a DMRS for the PUSCH and a PTRS for the PUSCH, wherein a first higher layer parameter is related to the maximum number of DMRS ports for the DMRS, in a case that the first higher layer parameter is not configured, a first field in the DCI format is configured to include the first number of bits, in a case that the first higher layer parameter is configured, the first field in the DCI format is configured to include the second number of bits, and a PTRS port for the PTRS is determined based on the first field and one or multiple DMRS ports for the DMRS.

FIG. 9

**EP 4 543 125 A1**

## Description

Technical Field

The present invention relates to a terminal apparatus, a base station apparatus, and a communication method.
This application claims priority to JP 2022-97704 filed on June 17, 2022, the contents of which are incorporated herein by reference.

Background Art

In the 3rd Generation Partnership Project (3GPP, trade name), a radio access method and a radio network for cellular mobile communications (hereinafter also referred to as "Long Term Evolution (LTE)" or "Evolved Universal Terrestrial Radio Access (EUTRA)") have been studied. In LTE, a base station apparatus is also referred to as an evolved NodeB (eNodeB) and a terminal apparatus is also referred to as a User Equipment (UE). LTE is a cellular communication system in which multiple areas covered by base station apparatuses are arranged in a form of cells. A single base station apparatus may manage multiple serving cells.
The 3GPP has been studying a next generation standard (New Radio or NR) (NPL 1) to make a proposal for International Mobile Telecommunication (IMT)-2020, a standard for a next generation mobile communication system developed by the International Telecommunication Union (ITU). NR is to satisfy requirements for three scenarios including enhanced Mobile BroadBand (eMBB), massive Machine Type Communication (mMTC), and Ultra Reliable and Low Latency Communication (URLLC) in a single technology framework.
In the 3GPP, extension of services supported by NR has been studied (NPL 2).

Citation List

Non Patent Literature

NPL 1: "New SID proposal: Study on New Radio Access Technology", RP-160671, NTT docomo, 3GPP TSG RAN Meeting #71, Goteborg, Sweden, 7th - 10th March, 2016.
NPL 2: "Release 17 package for RAN", RP-193216, RAN chairman, RAN1 chairman, RAN2 chairman, RAN3 chairman, 3GPP TSG RAN Meeting #86, Sitges, Spain, 9th - 12th December, 2019
NPL 3: "Release 18 package summary", RP-213469, RAN chairman, RAN1 chairman, RAN2 chairman, RAN3 chairman, 3GPP TSG RAN Meeting #94-e, 6th-17th December, 2021

Summary of Invention

Technical Problem

An aspect of the present invention provides a terminal apparatus that efficiently performs communication, a communication method used for the terminal apparatus, a base station apparatus that efficiently performs communication, and a communication method used for the base station apparatus.

Solution to Problem

(1) A first aspect of the present invention is a terminal apparatus including a receiver configured to receive a PDCCH to which a DCI format indicating transmission of a PUSCH is mapped, a transmitter configured to transmit the PUSCH, and the transmitter configured to generate a DMRS for the PUSCH and a PTRS for the PUSCH, wherein a first higher layer parameter is related to the maximum number of DMRS ports for the DMRS, in a case that the first higher layer parameter is not configured, a first field in the DCI format is configured to include the first number of bits, in a case that the first higher layer parameter is configured, the first field in the DCI format is configured to include the second number of bits, and a PTRS port for the PTRS is determined based on the first field and one or multiple DMRS ports for the DMRS.
(2) A second aspect of the present invention is a base station apparatus including a transmitter configured to transmit a PDCCH to which a DCI format indicating transmission of a PUSCH is mapped, and a receiver configured to receive the PUSCH, wherein a DMRS for the PUSCH and a PTRS for the PUSCH are generated, a first higher layer parameter is related to the maximum number of DMRS ports for the DMRS, in a case that the first higher layer parameter is not configured, a first field in the DCI format is configured to include the first number of bits, in a case that the first higher layer parameter is configured, the first field in the DCI format is configured to include the second number of bits, and a PTRS port for the PTRS is determined based on the first field and one or multiple DMRS ports for the DMRS.

(3) A third aspect of the present invention is a communication method used in a terminal apparatus, the method including the steps of receiving a PDCCH to which a DCI format indicating transmission of a PUSCH is mapped, transmitting the PUSCH, and generating a DMRS for the PUSCH and a PTRS for the PUSCH, wherein a first higher layer parameter is related to the maximum number of DMRS ports for the DMRS, in a case that the first higher layer parameter is not configured, a first field in the DCI format is configured to include the first number of bits, in a case that the first higher layer parameter is configured, the first field in the DCI format is configured to include the second number of bits, and a PTRS port for the PTRS is determined based on the first field and one or multiple DMRS ports for the DMRS.

(4) A fourth aspect of the present invention is a communication method used in a base station apparatus, the method including transmitting a PDCCH to which a DCI format indicating transmission of a PUSCH is mapped and receiving the PUSCH, wherein a DMRS for the PUSCH and a PTRS for the PUSCH are generated, a first higher layer parameter is related to the maximum number of DMRS ports for the DMRS, in a case that the first higher layer parameter is not configured, a first field in the DCI format is configured to include the first number of bits, in a case that the first higher layer parameter is configured, the first field in the DCI format is configured to include the second number of bits, and a PTRS port for the PTRS is determined based on the first field and one or multiple DMRS ports for the DMRS.

Advantageous Effects of Invention

According to an aspect of the present invention, the terminal apparatus can efficiently perform communication. The base station apparatus can efficiently perform communication.

Brief Description of Drawings

FIG. 1 is a conceptual diagram of a radio communication system according to an aspect of the present embodiment.
FIG. 2 is an example illustrating a relationship between the subcarrier spacing configuration $\mu$, the number of OFDM symbols per slot $N^{slot}_{symb}$, and a cyclic Prefix (CP) configuration according to an aspect of the present embodiment.
FIG. 3 is a diagram illustrating an example of a configuration method of a resource grid according to an aspect of the present embodiment.
FIG. 4 is a diagram illustrating a configuration example of a resource grid 3001 according to an aspect of the present embodiment.
FIG. 5 is a schematic block diagram illustrating a configuration example of a base station apparatus 3 according to an aspect of the present embodiment.
FIG. 6 is a schematic block diagram illustrating a configuration example of a terminal apparatus 1 according to an aspect of the present embodiment.
FIG. 7 is a diagram illustrating a configuration example of an SS/PBCH block according to an aspect of the present embodiment.
FIG. 8 is a diagram illustrating an example of monitoring occasions for search space sets according to an aspect of the present embodiment.
FIG. 9 is a diagram illustrating an example of mapping of DMRSs to antenna ports according to an aspect of the present embodiment.

Description of Embodiments

An embodiment of the present invention will be described below.
floor(C) may be a floor function for a real number C. For example, floor(C) may be a function that outputs a maximum integer in a range of not exceeding the real number C. ceil(D) may be a ceiling function for a real number D. For example, ceil(D) may be a function that outputs a minimum integer in a range of not falling below the real number D. mod(E, F) may be a function that outputs a remainder obtained by dividing E by F. mod(E, F) may be a function that outputs a value corresponding to the remainder obtained by dividing E by F. exp(G) = e^G. Here, e is a Napier's constant. H^I represents H to the power of I. max(J, K) is a function that outputs a maximum value out of J and K. Here, in a case that J and K are equal, max(J, K) is a function that outputs J or K. min(L, M) is a function that outputs a maximum value out of L and M. Here, in a case that L and M are equal, min(L, M) is a function that outputs L or M. round(N) is a function that outputs an integer value of a value closest to N. "·" represents multiplication.

In the radio communication system according to an aspect of the present embodiment, at least Orthogonal Frequency Division Multiplex (OFDM) is used. The OFDM symbol is a time domain unit of the OFDM. The OFDM symbol includes at least one or multiple subcarriers. The OFDM symbol is converted into a time-continuous signal in baseband signal generation. In a downlink, at least Cyclic Prefix-Orthogonal Frequency Division Multiplex (CP-OFDM) is used. In an uplink, either CP-OFDM or Discrete Fourier Transform-spread-Orthogonal Frequency Division Multiplex (DFT-s-OFDM) is used. DFT-s-OFDM may be given by applying Transform precoding to the CP-OFDM.

The OFDM symbol may be a term including a CP added to the OFDM symbol. That is, a certain OFDM symbol may include the certain OFDM symbol and the CP added to the certain OFDM symbol.

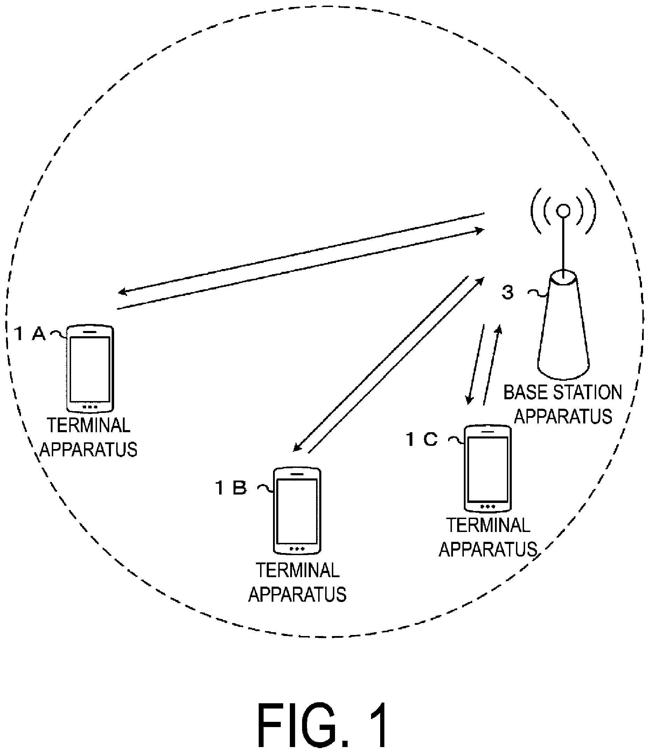

FIG. 1 is a conceptual diagram of a radio communication system according to an aspect of the present embodiment. In FIG. 1, the radio communication system includes at least terminal apparatuses 1A to 1C and a base station apparatus 3 (Base station #3 (BS #3)). Hereinafter, the terminal apparatuses 1A to 1C are also referred to as a terminal apparatus 1 (User Equipment #1 (UE #1)).

The base station apparatus 3 may include one or multiple transmission apparatuses (or transmission points, transmission and/or reception apparatuses, transmission and/or reception points). In a case that the base station apparatus 3 includes multiple transmission apparatuses, the multiple transmission apparatuses may be arranged at different positions.

The base station apparatus 3 may provide one or multiple serving cells. Each serving cell may be defined as a set of resources used for radio communication. The serving cell is also referred to as a cell.

The serving cell may include one or both of one downlink component carrier (downlink carrier) and one uplink component carrier (uplink carrier). The serving cell may include either or both of two or more downlink component carriers, and/or two or more uplink component carriers. The downlink component carrier and the uplink component carrier are also collectively referred to as a component carrier (carrier).

For example, for each component carrier, one resource grid may be given. For each set of one component carrier and a certain subcarrier spacing configuration $\mu$, one resource grid may be given. Here, the subcarrier spacing configuration $\mu$ is also referred to as numerology. For example, for a set of a certain antenna port p, a certain subcarrier spacing configuration $\mu$, and a certain transmission direction x, one resource grid may be given.

The subcarrier spacing (subcarrier spacing configuration) $\mu$ may be any of 0, 1, 3, and 4 for a synchronization channel. The subcarrier spacing configuration (subcarrier spacing configuration) $\mu$ may be 0, 1, 2, or 3 for a data channel. The synchronization channel may be a generic term for a PSS, an SSS, and a PBCH. The data channel may be a generic term for at least a PDSCH, a PUSCH, a PDCCH, and a PUCCH.

The resource grid includes $N^{size, \mu}_{grid, x} N^{RB}_{sc}$ subcarriers. Here, the resource grid starts from a common resource block $N^{start, \mu}_{grid, x}$. The common resource block $N^{start, \mu}_{grid, x}$ is also referred to as a reference point of the resource grid.

The resource grid includes $N^{subframe, \mu}_{symb}$ OFDM symbols.

The subscript x added to the parameter associated with the resource grid indicates the transmission direction. For example, the subscript x may be used to indicate either of a downlink or an uplink.

$N^{size, \mu}_{grid, x}$ is an offset configuration indicated by a parameter provided by the RRC layer (e.g., parameter CarrierBandwidth). $N^{start, \mu}_{grid, x}$ is a band configuration indicated by a parameter provided by the RRC layer (e.g., parameter, OffsetToCarrier). The offset configuration and the band configuration are configurations used for configuring an SCS-specific carrier.

The SubCarrier Spacing (SCS) $\Delta f$ for a certain subcarrier spacing configuration $\mu$ may be $\Delta f = 2^\mu \cdot 15$ kHz. Here, the subcarrier spacing configuration $\mu$ may indicate one of 0, 1, 2, 3, or 4.

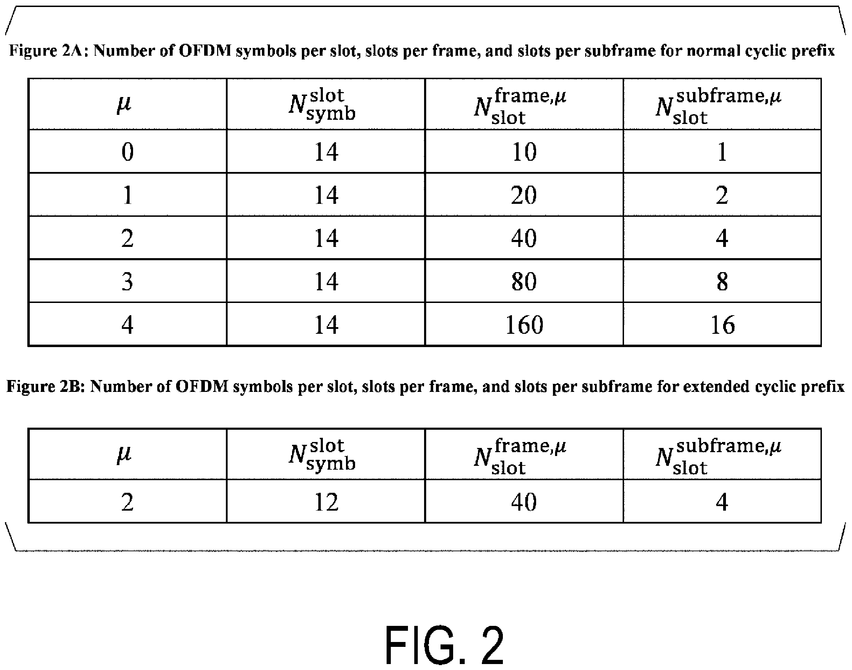

FIG. 2 is an example illustrating a relationship between the subcarrier spacing configuration $\mu$, the number of OFDM symbols per slot $N^{slot}_{symb}$, and a cyclic Prefix (CP) configuration according to an aspect of the present embodiment. In FIG. 2A, for example, in a case that the subcarrier spacing configuration $\mu$ is two and the CP configuration is a normal cyclic prefix (normal CP), $N^{slot}_{symb} = 14$, $N^{frame, \mu}_{slot} = 40$, and $N^{subframe, \mu}_{slot} = 4$. In FIG. 2B, for example, in a case that the subcarrier spacing configuration $\mu$ is two and the CP configuration is an extended cyclic prefix (extended CP), $N^{slot}_{symb} = 12$, $N^{frame, \mu}_{slot} = 40$, and $N^{subframe, \mu}_{slot} = 4$.

The time unit $T_c$ may be used to represent the length of the time domain. The time unit $T_c$ is $T_c = 1/(\Delta f_{max} \cdot N_f)$. $\Delta f_{max} = 480$ kHz. $N_f = 4096$. A constant $\kappa$ is $\kappa = \Delta f_{max} \cdot N_f/(\Delta f_{ref} N_{f, ref}) = 64$. $\Delta f_{ref}$ is 15 kHz. $N_{f, ref}$ is 2048.

Transmission of a signal in the downlink and/or transmission of a signal in the uplink may be organized into a radio frame (system frame, frame) having the length $T_f$. $T_f = (\Delta f_{max} N_f/100) \cdot T_s = 10$ ms. The radio frame includes 10 subframes. The length $T_{sf}$ of the subframe is $(\Delta f_{max} N_f/1000) \cdot T_s = 1$ ms. The number of OFDM symbols per subframe is $N^{subframe, \mu}_{symb} = N^{slot}_{symb} N^{subframe, \mu}_{slot}$.

The OFDM symbol is a time domain unit of one communication scheme. For example, the OFDM symbol may be a time domain unit of CP-OFDM. The OFDM symbol may be a time domain unit of DFT-s-OFDM.

The slot may include multiple OFDM symbols. For example, $N^{slot}_{symb}$ continuous OFDM symbols may constitute one slot. For example, in normal CP configuration, $N^{slot}_{symb}$ may be 14. In extended CP configuration, $N^{slot}_{symb}$ may be 12.

For a certain subcarrier spacing configuration $\mu$, the number and indices of slots included in the subframe may be given. For example, slot indices $n^{\mu}_{s}$ may be given in ascending order in the subframe with integer values within a range of 0 to $N^{subframe,\ \mu}_{slot}$ - 1. For the subcarrier spacing configuration $\mu$, the number and indices of slots included in the radio frame may be given. Slot indices $n^{\mu}_{s,\ f}$ may be given in ascending order in the radio frame with integer values within a range of 0 to $N^{frame,\ \mu}_{slot}$ - 1.

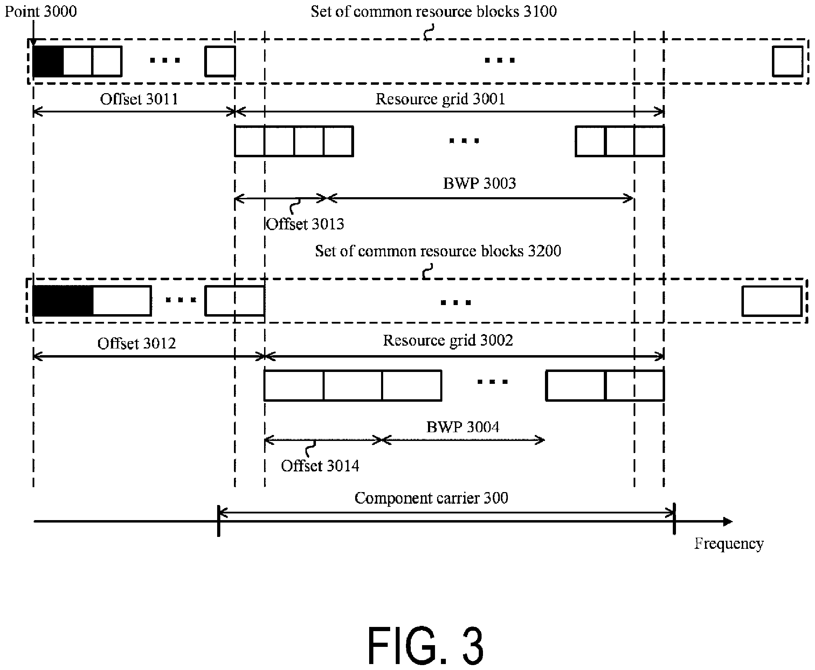

FIG. 3 is a diagram illustrating an example of a configuration method of the resource grid according to an aspect of the present embodiment. The horizontal axis of FIG. 3 represents a frequency domain. FIG. 3 illustrates a configuration example of a resource grid of a subcarrier spacing $\mu_1$ in a component carrier 300, and a configuration example of a resource grid of a subcarrier spacing $\mu_2$ in the certain component carrier. As described above, for a certain component carrier, one or multiple subcarrier spacings may be configured. In FIG. 3, it is assumed that $\mu_1 = \mu_2$ - 1, but various aspects of the present embodiment are not limited to the condition of $\mu_1 = \mu_2$ - 1.

The component carrier 300 is a band having a predetermined width in the frequency domain.

A Point 3000 is an identifier for identifying a certain subcarrier. The point 3000 is also referred to as a point A. A Common resource block (CRB) set 3100 is a set of common resource blocks for the subcarrier spacing configuration $\mu_1$.

In the common resource block set 3100, a common resource block (solid black block in the common resource block set 3100 in FIG. 3) including the point 3000 is also referred to as a reference point of the common resource block set 3100. The reference point of the common resource block set 3100 may be a common resource block having an index of 0 in the common resource block set 3100.

An offset 3011 is an offset from the reference point of the common resource block set 3100 to a reference point of a resource grid 3001. The offset 3011 is represented by the number of common resource blocks for the subcarrier spacing configuration $\mu_1$. The resource grid 3001 includes $N^{size,\ \mu}_{grid1,\ x}$ common resource blocks starting from the reference point of the resource grid 3001.

An offset 3013 is an offset from the reference point of the resource grid 3001 to a reference point ($N^{start,\ \mu}_{BWP,\ i1}$) of a BandWidth Part (BWP) 3003 having an index of i1.

A common resource block set 3200 is a set of common resource blocks for the subcarrier spacing configuration $\mu_2$.

In the common resource block set 3200, a common resource block (solid black block in the common resource block set 3200 in FIG. 3) including the point 3000 is also referred to as a reference point of the common resource block set 3200. The reference point of the common resource block set 3200 may be a common resource block having an index of 0 in the common resource block set 3200.

An offset 3012 is an offset from the reference point of the common resource block set 3200 to a reference point of a resource grid 3002. The offset 3012 is represented by the number of common resource blocks for the subcarrier spacing configuration $\mu_2$. The resource grid 3002 includes $N^{size,\ \mu}_{grid2,\ x}$ common resource blocks starting from the reference point of the resource grid 3002.

An offset 3014 is an offset from the reference point of the resource grid 3002 to a reference point ($N^{start,\ \mu}_{BWP,\ i2}$) of a BWP 3004 having an index of i2.

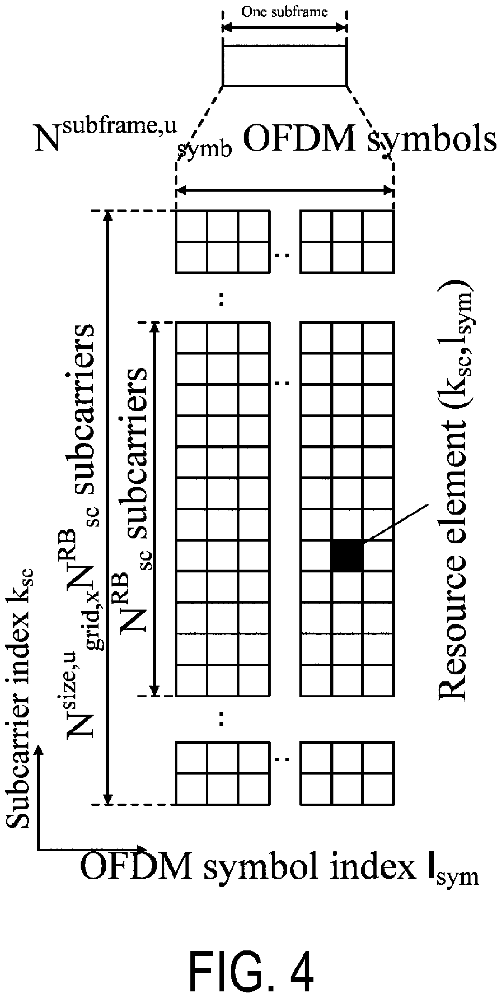

FIG. 4 is a diagram illustrating a configuration example of the resource grid 3001 according to an aspect of the present embodiment. In the resource grid of FIG. 4, the horizontal axis corresponds to an OFDM symbol index $I_{sym}$, and the vertical axis corresponds to a subcarrier index $k_{sc}$. The resource grid 3001 includes $N^{size,\ \mu}_{grid1,\ x}NR^{RB}_{c}$ subcarriers, and $N^{subframe,\ \mu}_{symb}$ OFDM symbols. In the resource grid, a resource identified by the subcarrier index $k_{sc}$ and the OFDM symbol index $I_{sym}$ is also referred to as a Resource Element (RE).

The Resource Block (RB) includes $N^{RB}_{sc}$ consecutive subcarriers. The resource block is a general term for a common resource block, a Physical Resource Block (PRB), and a Virtual Resource Block (VRB). Here, $N^{RB}_{sc}$ is 12.

A resource block unit is a set of resources corresponding to one OFDM symbol in one resource block. That is, one resource block unit includes 12 resource elements corresponding to one OFDM symbol in one resource block.

The common resource blocks for a certain subcarrier spacing configuration $\mu$ are assigned indices in ascending order from 0 in the frequency domain in a certain common resource block set (indexing). The common resource block having an index of 0 for a certain subcarrier spacing configuration $\mu$ includes (or collides with, matches) the point 3000. An index $n^{\mu}_{CRB}$ of the common resource block for a certain subcarrier spacing configuration $\mu$ satisfies a relationship of $n^{\mu}_{CRB} = ceil(k_{sc}/N^{RB}_{sc})$. Here, a subcarrier with $k_{sc} = 0$ is a subcarrier having the same center frequency as the center frequency of a subcarrier corresponding to the point 3000.

Physical resource blocks for a certain subcarrier spacing configuration $\mu$ are assigned indices in ascending order from 0 in the frequency domain in a certain BWP. An index $n^{\mu}_{PRB}$ of the physical resource block for a certain subcarrier spacing configuration $\mu$ satisfies a relationship of $n^{\mu}_{CRB} = n^{\mu}_{PRB} + N^{start,\ \mu}_{BWP,\ i}$. Here, $N^{start,\ \mu}_{BWP,\ i}$ indicates a reference point of the BWP having an index of i.

The BWP is defined as a subset of common resource blocks included in the resource grid. The BWP includes

$N^{size, \mu}_{BWP, i}$ common resource blocks starting from the reference point $N^{start, \mu}_{BWP, i}$ of the BWP. The BWP configured for the downlink carrier is also referred to as a downlink BWP. The BWP configured for the uplink component carrier is also referred to as an uplink BWP.

An antenna port is (may be) defined such that the channel over which a symbol on the antenna port is conveyed can be inferred from the channel over which another symbol on the same antenna port is conveyed. For example, the channel may correspond to a physical channel. The symbol may correspond to an OFDM symbol. The symbol may also correspond to the resource block unit. The symbol may correspond to the resource element.

The fact that a large scale property of a channel over which a symbol on one antenna port is conveyed can be inferred from a channel over which a symbol on another antenna port is conveyed is referred to as the two antenna ports are Quasi Co-Located (QCL). Here, the large scale property may include at least long term performance of a channel. The large scale property may include at least some or all of a delay spread, a Doppler spread, Doppler shift, an average gain, an average delay, and a beam parameter (spatial Rx parameters). The fact that the first antenna port and the second antenna port are QCL with respect to a beam parameter may mean that a reception beam assumed by a receiver side for the first antenna port and a reception beam assumed by the receiver side for the second antenna port are the same (or the reception beams correspond to each other). The fact that the first antenna port and the second antenna port are QCL with respect to a beam parameter may mean that a transmission beam assumed by a receiver side for the first antenna port and a transmission beam assumed by the receiver side for the second antenna port are the same (or the transmission beams correspond to each other). In a case that the large scale property of a channel over which a symbol on one antenna port is conveyed can be inferred from a channel over which a symbol on another antenna port is conveyed, the terminal apparatus 1 may assume that the two antenna ports are QCL. The fact that two antenna ports are QCL may mean that the two antenna ports are assumed to be QCL.

The fact that two antenna ports are QCLed with type A may mean that a first large scale property of a channel over which a symbol on one antenna port is conveyed can be inferred from a channel over which a symbol on another antenna port is conveyed. The fact that two antenna ports are QCLed with type B may mean that a second large scale property of a channel over which a symbol on one antenna port is conveyed can be inferred from a channel over which a symbol on another antenna port is conveyed. The fact that two antenna ports are QCLed with type C may mean that a third large scale property of a channel over which a symbol on one antenna port is conveyed can be inferred from a channel over which a symbol on another antenna port is conveyed. The fact that two antenna ports are QCLed with type D may mean that a fourth large scale property of a channel over which a symbol on one antenna port is conveyed can be inferred from a channel over which a symbol on another antenna port is conveyed. The first large scale property may include all of a Doppler shift, a Doppler spread, an average delay, and a delay spread. The second large scale property may include all of a Doppler shift and a Doppler spread. The third large scale property may include all of a Doppler shift and an average delay. The fourth large scale property may include spatial reception parameters (information of a spatial direction, information of a beam). An antenna port of a DMRS may be a DMRS port. For example, an antenna port of a PTRS may be a PTRS antenna port. An antenna port associated with a PTRS may be a PTRS port. An antenna port for an SRS may be an SRS port. An antenna port for a DMRS may be a DMRS port. An antenna port associated with a DMRS may be a DMRS port.

Carrier aggregation may mean that communication is performed by using multiple serving cells being aggregated. Carrier aggregation may mean that communication is performed by using multiple component carriers being aggregated. Carrier aggregation may mean that communication is performed by using multiple downlink component carriers being aggregated. Carrier aggregation may mean that communication is performed by using multiple uplink component carriers being aggregated.

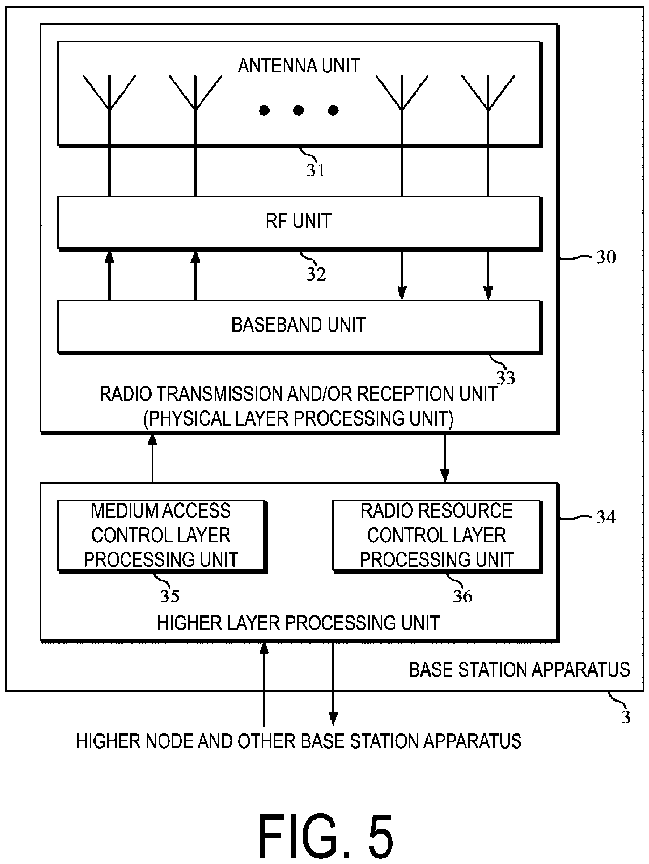

FIG. 5 is a schematic block diagram illustrating a configuration example of the base station apparatus 3 according to an aspect of the present embodiment. As illustrated in FIG. 5, the base station apparatus 3 includes at least a part or all of a radio transmission and/or reception unit (physical layer processing unit) 30 and/or a Higher layer processing unit 34. The radio transmission and/or reception unit 30 includes at least a part or all of an antenna unit 31, a Radio Frequency (RF) unit 32, and a baseband unit 33. The higher layer processing unit 34 includes at least a part or all of a medium access control layer processing unit 35 and a Radio Resource Control (RRC) layer processing unit 36.

The radio transmission and/or reception unit 30 includes at least a part or all of a radio transmission unit 30a and a radio reception unit 30b. Here, apparatus configurations of the baseband unit included in the radio transmission unit 30a and the baseband unit included in the radio reception unit 30b may be the same or different from each other. Apparatus configurations of the RF unit included in the radio transmission unit 30a and the RF unit included in the radio reception unit 30b may be the same or different from each other. Apparatus configurations of the antenna unit included in the radio transmission unit 30a and the antenna unit included in the radio reception unit 30b may be the same or different from each other.

For example, the radio transmission unit 30a may generate and transmit a baseband signal of the PDSCH. For example, the radio transmission unit 30a may generate and transmit a baseband signal of the PDCCH. For example, the radio transmission unit 30a may generate and transmit a baseband signal of the PBCH. For example, the radio transmission unit 30a may generate and transmit a baseband signal of a synchronization signal. For example, the radio transmission unit 30a may generate and transmit a baseband signal of the PDSCH DMRS. For example, the radio transmission unit 30a may generate and transmit a baseband signal of the PDCCH DMRS. For example, the radio transmission unit 30a may generate and transmit a baseband signal of the CSI-RS. For example, the radio transmission unit 30a may generate and transmit a baseband signal of the DL PTRS.

For example, the radio reception unit 30b may receive the PRACH. For example, the radio reception unit 30b may receive and demodulate the PUCCH. The radio reception unit 30b may receive and demodulate the PUSCH. For example, the radio reception unit 30b may receive the PUCCH DMRS. For example, the radio reception unit 30b may receive the PUSCH DMRS. For example, the radio reception unit 30b may receive the UL PTRS. For example, the radio reception unit 30b may receive the SRS.

The higher layer processing unit 34 outputs downlink data (a transport block) to the radio transmission and/or reception unit 30 (or the radio transmission unit 30a). The higher layer processing unit 34 performs processing operations of a Medium Access Control (MAC) layer, a Packet Data Convergence Protocol (PDCP) layer, a Radio Link Control (RLC) layer, and an RRC layer.

The medium access control layer processing unit 35 included in the higher layer processing unit 34 performs processing of the MAC layer.

The radio resource control layer processing unit 36 included in the higher layer processing unit 34 performs processing of the RRC layer. The radio resource control layer processing unit 36 manages various pieces of configuration information/parameters (RRC parameters) of the terminal apparatus 1. The radio resource control layer processing unit 36 sets the parameter based on an RRC message received from the terminal apparatus 1.

The radio transmission and/or reception unit 30 (or the radio transmission unit 30a) performs processing such as modulation and encoding. The radio transmission and/or reception unit 30 (or the radio transmission unit 30a) generates a physical signal through modulation, encoding, and baseband signal generation (conversion into the time-continuous signal) on the downlink data, and transmits the physical signal to the terminal apparatus 1. The radio transmission and/or reception unit 30 (or the radio transmission unit 30a) may map the physical signal to a certain component carrier and transmit the physical signal to the terminal apparatus 1.

The radio transmission and/or reception unit 30 (or the radio reception unit 30b) performs processing such as demodulation and decoding. The radio transmission and/or reception unit 30 (or the radio reception unit 30b) separates, demodulates, and decodes the received physical signal, and outputs the decoded information to the higher layer processing unit 34. The radio transmission and/or reception unit 30 (or the radio reception unit 30b) may perform a channel access procedure prior to transmission of the physical signal.

The RF unit 32 converts (down converts) a signal received via the antenna unit 31 into a baseband signal by means of orthogonal demodulation and removes unnecessary frequency components. The RF unit 32 outputs a processed analog signal to the baseband unit.

The baseband unit 33 converts an analog signal input from the RF unit 32 into a digital signal. The baseband unit 33 removes a portion corresponding to a Cyclic Prefix (CP) from the converted digital signal, performs a Fast Fourier Transform (FFT) on the signal from which the CP has been removed, and extracts a signal in the frequency domain.

The baseband unit 33 performs Inverse Fast Fourier Transform (IFFT) on the data to generate an OFDM symbol, adds a CP to the generated OFDM symbol, generates a baseband digital signal, and converts the baseband digital signal into an analog signal. The baseband unit 33 outputs the converted analog signal to the RF unit 32.

The RF unit 32 removes an unnecessary frequency component from the analog signal input from the baseband unit 33 by using a low-pass filter, up-converts the analog signal into a signal having a carrier frequency, and transmits the signal via the antenna unit 31. The RF unit 32 may have a function of controlling transmit power. The RF unit 32 is also referred to as a transmit power control unit.

For the terminal apparatus 1, one or multiple serving cells (or component carriers, downlink component carriers, uplink component carriers) may be configured.

Each of the serving cells configured for the terminal apparatus 1 may be one of a Primary cell (PCell), a Primary SCG cell (PSCell), or a Secondary Cell (SCell).

The PCell is a serving cell included in a Master Cell Group (MCG). The PCell is a cell in which an initial connection establishment procedure or a connection re-establishment procedure is performed (has been performed) by the terminal apparatus 1.

The PSCell is a serving cell included in a Secondary Cell Group (SCG). The PSCell is a serving cell in which random access is performed by the terminal apparatus 1.

The SCell may be included in either of the MCG or the SCG.

A serving cell group (cell group) is a term at least including an MCG and an SCG. The serving cell group may include one or multiple serving cells (or component carriers). One or multiple serving cells (or component carriers) included in the serving cell group may be operated by means of carrier aggregation.

One or multiple downlink BWPs may be configured for each of the serving cells (or downlink component carriers). One or multiple uplink BWPs may be configured for each of the serving cells (or uplink component carriers).

Among one or multiple downlink BWPs configured for the serving cell (or the downlink component carrier), one downlink BWP may be configured as an active downlink BWP (or one downlink BWP may be activated). Among one or multiple uplink BWPs configured for the serving cell (or the uplink component carrier), one uplink BWP may be configured as an active uplink BWP (or one uplink BWP may be activated).

The PDSCH, the PDCCH, and the CSI-RS may be received in the active downlink BWP. The terminal apparatus 1 may attempt to receive the PDSCH, the PDCCH, and the CSI-RS in the active downlink BWP. The PUCCH and the PUSCH may be transmitted in the active uplink BWP. The terminal apparatus 1 may transmit the PUCCH and the PUSCH in the active uplink BWP. The active downlink BWP and the active uplink BWP are also collectively referred to as an active BWP.

The PDSCH, the PDCCH, and the CSI-RS need not be received in downlink BWPs (inactive downlink BWPs) other than the active downlink BWP. The terminal apparatus 1 need not attempt to receive the PDSCH, the PDCCH, and the CSI-RS in downlink BWPs that are not the active downlink BWP. The PUCCH and the PUSCH need not be transmitted in uplink BWPs (inactive uplink BWPs) that are not the active uplink BWP. The terminal apparatus 1 need not transmit the PUCCH and the PUSCH in uplink BWPs that are not the active uplink BWP. The inactive downlink BWP and the inactive uplink BWP are also collectively referred to as an inactive BWP.

Downlink BWP switch is a procedure for deactivating one active downlink BWP of a certain serving cell and activating any one of the inactive downlink BWPs of the certain serving cell. The downlink BWP switch may be controlled by a BWP field included in downlink control information. The downlink BWP switch may be controlled based on a higher layer parameter.

Uplink BWP switch is used for deactivating one active uplink BWP and activating any one of the inactive uplink BWPs that are not the one active uplink BWP. The uplink BWP switch may be controlled by a BWP field included in downlink control information. The uplink BWP switch may be controlled based on a higher layer parameter.

Among one or multiple downlink BWPs configured for the serving cell, two or more downlink BWPs need not be configured for the active downlink BWP. For the serving cell, at certain times, one downlink BWP may be active.

Among one or multiple uplink BWPs configured for the serving cell, two or more uplink BWPs need not be configured for the active uplink BWP. For the serving cell, at certain times, one uplink BWP may be active.

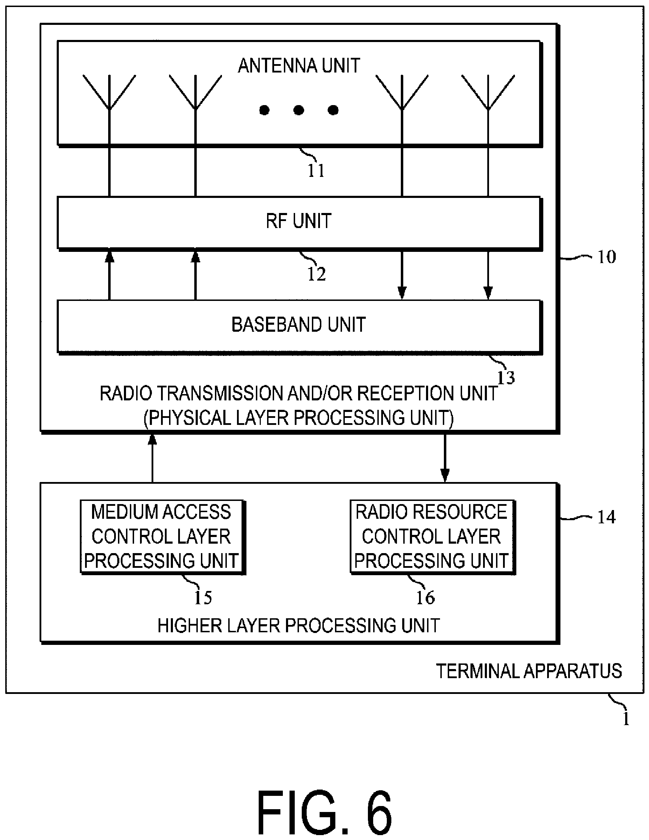

FIG. 6 is a schematic block diagram illustrating a configuration example of the terminal apparatus 1 according to an aspect of the present embodiment. As illustrated in FIG. 6, the terminal apparatus 1 includes at least one or all of a radio transmission and/or reception unit (physical layer processing unit) 10 and a higher layer processing unit 14. The radio transmission and/or reception unit 10 includes at least a part or all of an antenna unit 11, an RF unit 12, and a baseband unit 13. The higher layer processing unit 14 includes at least a part or all of a medium access control layer processing unit 15 and a radio resource control layer processing unit 16.

The radio transmission and/or reception unit 10 includes at least a part or all of a radio transmission unit 10a and a radio reception unit 10b. Here, apparatus configurations of the baseband unit 13 included in the radio transmission unit 10a and the baseband unit 13 included in the radio reception unit 10b may be the same or different from each other. Apparatus configurations of the RF unit 12 included in the radio transmission unit 10a and the RF unit 12 included in the radio reception unit 10b may be the same or different from each other. Apparatus configurations of the antenna unit 11 included in the radio transmission unit 10a and the antenna unit 11 included in the radio reception unit 10b may be the same or different from each other.

For example, the radio transmission unit 10a may generate and transmit a baseband signal of the PRACH. For example, the radio transmission unit 10a may generate and transmit a baseband signal of the PUCCH. The radio transmission unit 10a may generate and transmit a baseband signal of the PUSCH. For example, the radio transmission unit 10a may generate and transmit a baseband signal of the PUCCH DMRS. For example, the radio transmission unit 10a may generate and transmit a baseband signal of the PUSCH DMRS. For example, the radio transmission unit 10a may generate and transmit a baseband signal of the UL PTRS. For example, the radio transmission unit 10a may generate and transmit a baseband signal of the SRS. Generating the baseband signal of the SRS may mean generating an SRS sequence.

For example, the radio reception unit 10b may receive and demodulate the PDSCH. For example, the radio reception unit 10b may receive and demodulate the PDCCH. For example, the radio reception unit 10b may receive and demodulate the PBCH. For example, the radio reception unit 10b may receive the synchronization signal. For example, the radio reception unit 10b may receive the PDSCH DMRS. For example, the radio reception unit 10b may receive the PDCCH DMRS. For example, the radio reception unit 10b may receive the CSI-RS. For example, the radio reception unit 10b may receive the DL PTRS.

The higher layer processing unit 14 outputs uplink data (a transport block) to the radio transmission and/or reception unit 10 (or the radio transmission unit 10a). The higher layer processing unit 14 performs processing operations of the MAC layer, a packet data convergence protocol layer, a radio link control layer, and the RRC layer.

The medium access control layer processing unit 15 included in the higher layer processing unit 14 performs processing of the MAC layer.

The radio resource control layer processing unit 16 included in the higher layer processing unit 14 performs processing of the RRC layer. The radio resource control layer processing unit 16 manages various pieces of configuration information/parameters (RRC parameters) of the terminal apparatus 1. The radio resource control layer processing unit 16 sets the RRC parameters based on an RRC message received from the base station apparatus 3.

The radio transmission and/or reception unit 10 (or the radio transmission unit 10a) performs processing such as modulation and encoding. The radio transmission and/or reception unit 10 (or the radio transmission unit 10a) generates a physical signal through modulation, encoding, and baseband signal generation (conversion into the time-continuous signal) on the uplink data and transmits the physical signal to the base station apparatus 3. The radio transmission and/or reception unit 10 (or the radio transmission unit 10a) may map the physical signal to a certain BWP (an active uplink BWP) and transmit the physical signal to the base station apparatus 3.

The radio transmission and/or reception unit 10 (or the radio reception unit 10b) performs processing such as demodulation and decoding. The radio transmission and/or reception unit 10 (or the radio reception unit 30b) may receive a physical signal in a certain BWP (active downlink BWP) of a certain serving cell. The radio transmission and/or reception unit 10 (or the radio reception unit 10b) separates, demodulates, and decodes the received physical signal and outputs the decoded information to the higher layer processing unit 14. The radio transmission and/or reception unit 10 (radio reception unit 10b) may perform the channel access procedure prior to the transmission of the physical signal.

The RF unit 12 converts (down converts) a signal received via the antenna unit 11 into a baseband signal by means of orthogonal demodulation and removes unnecessary frequency components. The RF unit 12 outputs a processed analog signal to the baseband unit 13.

The baseband unit 13 converts the analog signal input from the RF unit 12 into a digital signal. The baseband unit 13 removes a portion corresponding to a Cyclic Prefix (CP) from the converted digital signal, performs a Fast Fourier Transform (FFT) on the signal from which the CP has been removed, and extracts a signal in the frequency domain.

The baseband unit 13 performs Inverse Fast Fourier Transform (IFFT) on the uplink data to generate an OFDM symbol, adds a CP to the generated OFDM symbol, generates a baseband digital signal, and converts the baseband digital signal into an analog signal. The baseband unit 13 outputs the converted analog signal to the RF unit 12.

The RF unit 12 removes unnecessary frequency components from the analog signal input from the baseband unit 13 through a low-pass filter, up-converts the analog signal into a signal having a carrier frequency, and transmits the signal via the antenna unit 11. The RF unit 12 may have a function of controlling transmit power. The RF unit 12 is also referred to as a transmit power control unit.

The physical signal (signal) will be described below.

The physical signal is a general term for a downlink physical channel, a downlink physical signal, an uplink physical channel, and an uplink physical channel. The physical channel is a general term for a downlink physical channel and an uplink physical channel. The physical signal is a general term for a downlink physical signal and an uplink physical signal.

The uplink physical channel may correspond to a set of resource elements for conveying information that is generated in a Higher layer. The uplink physical channel may be a physical channel used in the uplink component carrier. The uplink physical channel may be transmitted by the terminal apparatus 1. The uplink physical channel may be received by the base station apparatus 3. In the radio communication system according to an aspect of the present embodiment, at least a part or all of the following uplink physical channels may be used.

- Physical Uplink Control CHannel (PUCCH)
- Physical Uplink Shared CHannel (PUSCH)
- Physical Random Access CHannel (PRACH)

The PUCCH may be used to transmit Uplink Control Information (UCI). The PUCCH may be transmitted for conveying (delivering, transmitting) the uplink control information. The uplink control information may be mapped to the PUCCH. The terminal apparatus 1 may transmit the PUCCH to which the uplink control information is mapped. The base station apparatus 3 may receive the PUCCH to which the uplink control information is mapped.

The uplink control information (uplink control information bit, uplink control information sequence, uplink control information type) includes at least a part or all of Channel State Information (CSI), a Scheduling Request (SR), and Hybrid Automatic Repeat request ACKnowledgement (HARQ-ACK) information.

The channel state information is also referred to as a channel state information bit or a channel state information sequence. The scheduling request is also referred to as a scheduling request bit or a scheduling request sequence. The HARQ-ACK information is also referred to as a HARQ-ACK information bit or a HARQ-ACK information sequence.

The HARQ-ACK information may include at least a HARQ-ACK bit corresponding to a Transport block (TB). The HARQ-ACK may indicate an acknowledgement (ACK) or a negative-acknowledgement (NACK) corresponding to the transport block. The ACK may indicate that decoding of the transport block has been decoded successfully. The NACK may indicate that decoding of the transport block has not been decoded successfully. The HARQ-ACK information may include a HARQ-ACK codebook including one or multiple HARQ-ACK bits.

The transport block is a sequence of information bits delivered from a higher layer. Here, the sequence of information bits is also referred to as a bit sequence. Here, the transport block may be delivered through an UpLink - Shared CHannel (UL-SCH) of a Transport layer.

One information bit may indicate "0" or "1". A field included in the DCI format may include one or multiple information bits. A unit of the number of information bits may be a bit. The number n of information bits may represent up to $\hat{2}n$ (2 to nth power).

A HARQ-ACK for the transport block may be referred to as a HARQ-ACK for the PDSCH. The "HARQ-ACK for the PDSCH" indicates the HARQ-ACK for the transport block included in the PDSCH.

The HARQ-ACK may indicate an ACK or a NACK corresponding to one Code Block Group (CBG) included in the transport block.

The scheduling request may be at least used for requesting a resource of the UL-SCH for new transmission. The scheduling request bit may be used for indicating either of a positive SR or a negative SR. The scheduling request bit indicating the positive SR is also referred to as "the positive SR being conveyed". The positive SR may indicate that the terminal apparatus 1 requests resources of the UL-SCH for initial transmission. The positive SR may indicate that a scheduling request is triggered by a higher layer. The positive SR may be conveyed in a case that the higher layer indicates the scheduling request. The scheduling request bit indicating the negative SR is also referred to as "the negative SR being transmitted". The negative SR may indicate that the terminal apparatus 1 requests no resources of the UL-SCH for initial transmission. The negative SR may indicate that the scheduling request is not triggered by the higher layer. The negative SR may be conveyed in a case that the higher layer indicates no scheduling request.

Channel state information may include at least a part or all of a Channel Quality Indicator (CQI), a Precoder Matrix Indicator (PMI), and a Rank Indicator (RI). The CQI is an indicator related to quality (for example, propagation strength) of a propagation path or quality of a physical channel, and the PMI is an indicator related to a precoder. The RI is an indicator related to a transmission rank (or the number of transmission layers).

The channel state information is an indicator related to a reception state of a physical signal (for example, CSI-RS) at least used for channel measurement. The channel state information may be determined by the terminal apparatus 1 based on the reception state assumed by the physical signal at least used for channel measurement. Channel measurement may include interference measurement.

The PUCCH may correspond to a PUCCH format. The PUCCH may be a set of resource elements used for conveying the PUCCH format. The PUCCH may include the PUCCH format. The PUCCH format may be transmitted with a certain PUCCH format. Note that the PUCCH format may be interpreted as a form of information. The PUCCH format may be interpreted as a set of information set to a certain form of information.

The PUSCH may be used for conveying one or both of the transport block and the uplink control information. The transport block may be mapped to the PUSCH. The transport block delivered by the UL-SCH may be mapped to the PUSCH. The uplink control information may be mapped to the PUSCH. The terminal apparatus 1 may transmit the PUSCH to which one or both of the transport block and the uplink control information are mapped. The base station apparatus 3 may receive the PUSCH to which one or both of the transport block and the uplink control information are mapped.

The PRACH may be transmitted for conveying a random access preamble. The terminal apparatus 1 may transmit the PRACH. The base station apparatus 3 may receive the PRACH. A PRACH sequence $x_{u,v}(n)$ is defined by $x_{u,v}(n) = x_u(\mod(n + C_v, L_{RA}))$. Here, $x_u$ is a Zadoff Chu (ZC) sequence. $x_u$ may be defined by $x_u = \exp(-j\pi ui(i + 1)/L_{RA})$. j is an imaginary unit. $\pi$ is the ratio of the circumference of a circle to its diameter. $C_v$ corresponds to a cyclic shift of the PRACH sequence. $L_{RA}$ corresponds to the length of the PRACH sequence. $L_{RA}$ is 839, or 139. i is an integer in the range from 0 to $L_{RA}$ - 1. u is a sequence index for the PRACH sequence.

For each PRACH occasion, 64 random access preambles are defined. The random access preambles are identified based on the cyclic shift $C_v$ of the PRACH sequence and the sequence index u for the PRACH sequence. Each of the 64 identified random access preambles may be assigned an index.

The uplink physical signal may correspond to a set of resource elements. The uplink physical signal need not be used to convey information generated in a higher layer. Note that the uplink physical signal may be used to convey information generated in a physical layer. The uplink physical signal may be a physical signal used in the uplink component carrier. The terminal apparatus 1 may transmit the uplink physical signal. The base station apparatus 3 may receive the uplink physical signal. In the radio communication system according to an aspect of the present embodiment, at least a part or all of the following uplink physical signals may be used.

- UpLink Demodulation Reference Signal (UL DMRS)
- Sounding Reference Signal (SRS)
- UpLink Phase Tracking Reference Signal (UL PTRS)

The UL DMRS is a general term for a DMRS for the PUSCH and a DMRS for the PUCCH.

A set of antenna ports of the DMRS for the PUSCH (DMRS related to the PUSCH, DMRS included in the PUSCH, DMRS corresponding to the PUSCH) may be given based on a set of antenna ports for the PUSCH. For example, the set of antenna ports of the DMRS for the PUSCH may be the same as a set of antenna ports of the PUSCH.

Transmission of the PUSCH and transmission of the DMRS for the PUSCH may be indicated (or may be scheduled) by one DCI format. The PUSCH and the DMRS for the PUSCH may be collectively referred to as a PUSCH. Transmission of the PUSCH may mean transmission of the PUSCH and the DMRS for the PUSCH.

A propagation path of the PUSCH may be inferred from the DMRS for the PUSCH.

A set of antenna ports of the DMRS for the PUCCH (DMRS related to the PUCCH, DMRS included in the PUCCH, DMRS corresponding to the PUCCH) may be the same as a set of antenna ports of the PUCCH.

Transmission of the PUCCH and transmission of the DMRS for the PUCCH may be indicated (or may be triggered) by one DCI format. One or both of resource element mapping of the PUCCH and resource element mapping of the DMRS for the PUCCH may be given by one PUCCH format. The PUCCH and the DMRS for the PUCCH may be collectively referred to as a PUCCH. Transmission of the PUCCH may mean transmission of the PUCCH and the DMRS for the PUCCH.

A propagation path of the PUCCH may be inferred from the DMRS for the PUCCH.

The downlink physical channel may correspond to a set of resource elements for conveying information generated in a higher layer. The downlink physical channel may be a physical channel used in a downlink component carrier. The base station apparatus 3 may transmit the downlink physical channel. The terminal apparatus 1 may receive the downlink physical channel. In the radio communication system according to an aspect of the present embodiment, at least a part or all of the following downlink physical channels may be used.

- Physical Broadcast Channel (PBCH)
- Physical Downlink Control Channel (PDCCH)
- Physical Downlink Shared Channel (PDSCH)

The PBCH may be transmitted for conveying one or both of a Master Information Block (MIB) and physical layer control information. Here, the physical layer control information is information generated in the physical layer. The MIB is a set of parameters mapped to a Broadcast Control CHannel (BCCH) that is a logical channel of the MAC layer. The BCCH is mapped to the BCH that is a channel of the transport layer. The BCH may be mapped to the PBCH. The terminal apparatus 1 may receive the PBCH to which one or both of the MIB and the physical layer control information are mapped. The base station apparatus 3 may transmit the PBCH to which one or both of the MIB and/or the physical layer control information are mapped.

For example, the physical layer control information may include 8 bits. The physical layer control information may include at least a part or all of the following 0A to 0D.

0A) Radio frame bit
0B) Half radio frame (half system frame, half frame) bit
0C) SS/PBCH block index bit
0D) Subcarrier offset bit

The radio frame bit is used for indicating a radio frame in which the PBCH is transmitted (radio frame including a slot in which the PBCH is transmitted). The radio frame bit includes 4 bits. The radio frame bit may include 4 bits out of a 10-bit radio frame indicator. For example, the radio frame indicator may be at least used for identifying radio frames from index 0 to index 1023.

The half radio frame bit is used for indicating, out of the radio frame in which the PBCH is transmitted, which of the first five subframes or the last five subframes is used for transmission of the PBCH. Here, the half radio frame may include five subframes. The half radio frame may include the first five subframes out of the 10 subframes included in the radio frame. The half radio frame may include the last five subframes out of the 10 subframes included in the radio frame.

The SS/PBCH block index bit is used for indicating an SS/PBCH block index. The SS/PBCH block index bit includes 3 bits. The SS/PBCH block index bit may include 3 bits out of a 6-bit SS/PBCH block index indicator. The SS/PBCH block index indicator may be at least used for identifying SS/PBCH blocks from index 0 to index 63.

The subcarrier offset bit is used for indicating a subcarrier offset. The subcarrier offset may be used for indicating a difference between the first subcarrier to which the PBCH is mapped and the first subcarrier to which the control resource set having an index of 0 is mapped.

The PDCCH may be used for conveying Downlink Control Information (DCI). The downlink control information may be mapped to the PDCCH. The terminal apparatus 1 may receive the PDCCH to which the downlink control information is mapped. The base station apparatus 3 may transmit the PDCCH to which the downlink control information is mapped.

The downlink control information may be transmitted with a DCI format. Note that the DCI format may also be interpreted to be in the format of downlink control information. The DCI format may be interpreted as a set of downlink control information set to a certain format of downlink control information.

A DCI format 0_0, a DCI format 0_1, a DCI format 1_0, and a DCI format 1_1 are DCI formats. An uplink DCI format is a general term for the DCI format 0_0 and the DCI format 0_1. A downlink DCI format is a general term for the DCI format 1_0 and the DCI format 1_1.

The DCI format 0_0 is at least used for scheduling of the PUSCH mapped to a certain cell. The DCI format 0_0 includes at least a part or all of fields listed from 1A to 1E.

1A) Identifier field for DCI formats
1B) Frequency domain resource assignment field
1C) Time domain resource assignment field
1D) Frequency hopping flag field
1E) Modulation and Coding Scheme (MCS) field

The identifier field for DCI formats may indicate whether the DCI format including the identifier field for DCI formats is an uplink DCI format or a downlink DCI format. In other words, each of the uplink DCI format and the downlink DCI format may include the identifier field for DCI formats. Here, the identifier field for DCI formats included in the DCI format 0_0 may indicate 0.

A frequency domain resource assignment field included in the DCI format 0_0 may be used for indicating assignment of frequency resources for the PUSCH.

A time domain resource assignment field included in the DCI format 0_0 may be used for indicating assignment of time resources for the PUSCH.

A frequency hopping flag field may be used for indicating whether frequency hopping is applied to the PUSCH.

An MCS field included in the DCI format 0_0 may be at least used for indicating one or both of a modulation scheme for the PUSCH and a target encoding rate. The target coding rate may be a target encoding rate for the transport block mapped to the PUSCH. The Transport Block Size (TBS) of the PUSCH mapped to the PUSCH may be determined based on one or both of the target encoding rate and the modulation scheme for the PUSCH.

The DCI format 0_0 need not include a field used for a CSI request.

The DCI format 0_0 need not include a carrier indicator field. In other words, for the uplink component carrier to which the PUSCH scheduled by the DCI format 0_0 is mapped, the serving cell to which this uplink component carrier belongs may be the same as the serving cell of the uplink component carrier to which the PDCCH including the DCI format 0_0 is mapped. Based on detection of the DCI format 0_0 in a certain downlink component carrier of a certain serving cell, the terminal apparatus 1 may recognize that the PUSCH scheduled by the DCI format 0_0 is mapped to the uplink component carrier of the certain serving cell.

The DCI format 0_0 need not include the BWP field. Here, the DCI format 0_0 may be a DCI format for scheduling the PUSCH without changing the active uplink BWP. The terminal apparatus 1 may recognize that the PUSCH is transmitted without switching the active uplink BWP based on detection of the DCI format 0_0 used for the scheduling of the PUSCH.

The DCI format 0_1 is at least used for scheduling of the PUSCH of a certain cell (mapped to a certain cell). The DCI format 0_1 includes at least a part or all of fields listed from 2A to 2H.

2A) Identifier field for DCI formats
2B) Frequency domain resource assignment field
2C) Uplink time domain resource assignment field
2D) Frequency hopping flag field
2E) MCS field
2F) CSI request field
2G) BWP field
2H) Carrier indicator field

The identifier field for DCI formats included in the DCI format 0_1 may indicate 0.

The frequency domain resource assignment field included in the DCI format 0_1 may be used for indicating assignment of frequency resources for the PUSCH.

The time domain resource assignment field included in the DCI format 0_1 may be used for indicating assignment of time resources for the PUSCH.

The MCS field included in the DCI format 0_1 may be at least used for indicating a part or all of a modulation scheme for the PUSCH and/or a target encoding rate.

The BWP field of the DCI format 0_1 may be used for indicating an uplink BWP to which the PUSCH scheduled by the DCI format 0_1 is mapped. In other words, the DCI format 0_1 may be accompanied by a change in the active uplink BWP. The terminal apparatus 1 may recognize the uplink BWP to which the PUSCH is mapped based on detection of the DCI format 0_1 used for scheduling of the PUSCH.

The DCI format 0_1 not including the BWP field may be a DCI format for scheduling the PUSCH without changing the active uplink BWP. The terminal apparatus 1 may recognize that the PUSCH is transmitted without switching the active uplink BWP based on detection of the DCI format D0_1 which is the DCI format 0_1 used for the scheduling of the PUSCH and does not include the BWP field.

In a case that the BWP field is included in the DCI format 0_1 but the terminal apparatus 1 does not support the function of switching the BWP according to the DCI format 0_1, the terminal apparatus 1 may ignore the BWP field. In other words, the terminal apparatus 1 which does not support the function of switching the BWP may recognize that the PUSCH is transmitted without switching the active uplink BWP based on detection of the DCI format 0_1 which is the DCI format 0_1 used for the scheduling of the PUSCH and includes the BWP field. Here, in a case of supporting the function of switching the BWP, the terminal apparatus 1 may report, in a function information reporting procedure of the RRC layer, that "the terminal apparatus 1 supports the function of switching the BWP".

The CSI request field is used for indicating the report of the CSI.

In a case that the carrier indicator field is included in the DCI format 0_1, the carrier indicator field may be used for indicating the uplink component carrier to which the PUSCH is mapped. In a case that the carrier indicator field is not included in the DCI format 0_1, the uplink component carrier to which the PUSCH is mapped may be the same as the uplink component carrier to which the PDCCH including the DCI format 0_1 used for scheduling of the PUSCH is mapped. In a case that the number of uplink component carriers configured for the terminal apparatus 1 in a certain serving cell group is two or more (case that uplink carrier aggregation is operated in a certain serving cell group), the number of bits of the carrier indicator field included in the DCI format 0_1 used for scheduling of the PUSCH mapped to the certain serving cell group may be 1 bit or more (for example, 3 bits). In a case that the number of uplink component carriers configured for the terminal apparatus 1 in a certain serving cell group is one (case that uplink carrier aggregation is not operated in a certain serving cell group), the number of bits of the carrier indicator field included in the DCI format 0_1 used for scheduling of the PUSCH mapped to the certain serving cell group may be 0 bits (or the carrier indicator field need not be included in the DCI format 0_1 used for scheduling of the PUSCH mapped to the certain serving cell group).

The DCI format 1_0 is at least used for scheduling of the PDSCH mapped to a certain cell. The DCI format 1_0 includes at least a part or all of 3A to 3F.

3A) Identifier field for DCI formats
3B) Frequency domain resource assignment field
3C) Time domain resource assignment field
3D) MCS field
3E) PDSCH_HARQ feedback timing indicator field (PDSCH to HARQ feedback timing indicator field)
3F) PUCCH resource indicator field

The identifier field for DCI formats included in the DCI format 1_0 may indicate 1.

The frequency domain resource assignment field included in the DCI format 1_0 may be at least used for indicating assignment of frequency resources for the PDSCH.

The time domain resource assignment field included in the DCI format 1_0 may be at least used for indicating assignment of time resources for the PDSCH.

The MCS field included in the DCI format 1_0 may be at least used for indicating one or both of the modulation scheme for the PDSCH and the target encoding rate. The target coding rate may be a target encoding rate for the transport block mapped to the PDSCH. The Transport Block Size (TBS) of the PDSCH mapped to the PDSCH may be determined based on one or both of the target encoding rate and the modulation scheme for the PDSCH.

The PDSCH_HARQ feedback timing indicator field may be used for indicating an offset from the slot including the last OFDM symbol of the PDSCH to the slot including the first OFDM symbol of the PUCCH.

The PUCCH resource indicator field may be a field indicating an index of any of one or multiple PUCCH resources included in a PUCCH resource set. The PUCCH resource set may include one or multiple PUCCH resources.

The DCI format 1_0 need not include the carrier indicator field. In other words, the downlink component carrier to which the PDSCH scheduled by using a DCI format 1_0 is mapped may be the same as the downlink component carrier to which the PDCCH including the DCI format 1_0 is mapped. Based on detection of the DCI format 1_0 in a certain downlink component carrier, the terminal apparatus 1 may recognize that the PDSCH scheduled by the DCI format 1_0 is mapped to the downlink component carrier.

The DCI format 1_0 need not include the BWP field. Here, DCI format 1_0 may be a DCI format for scheduling the PDSCH without changing the active downlink BWP. The terminal apparatus 1 may recognize that the PDSCH is received without switching the active downlink BWP based on detection of the DCI format 1_0 used in the scheduling of the PDSCH.

The DCI format 1_1 is at least used for scheduling of the PDSCH mapped to a certain cell. The DCI format 1_1 includes at least a part or all of 4A to 4I.

4A) Identifier field for DCI formats
4B) Frequency domain resource assignment field
4C) Time domain resource assignment field
4E) MCS field
4F) PDSCH_HARQ feedback timing indicator field
4G) PUCCH resource indicator field
4H) BWP field
4I) Carrier indicator field

The identifier field for DCI formats included in the DCI format 1_1 may indicate 1.

The frequency domain resource assignment field included in the DCI format 1_1 may be at least used for indicating assignment of frequency resources for the PDSCH.

The time domain resource assignment field included in the DCI format 1_1 may be at least used for indicating assignment of time resources for the PDSCH.

The MCS field included in the DCI format 1_1 may be at least used for indicating one or both of the modulation scheme for the PDSCH and the target encoding rate.

In a case that the PDSCH _HARQ feedback timing indicator field is included in the DCI format 1_1, the PDSCH_HARQ feedback timing indicator field may be at least used for indicating an offset from the slot including the last OFDM symbol of the PDSCH to the slot including the first OFDM symbol of the PUCCH. In a case that the PDSCH_HARQ feedback timing indicator field is not included in the DCI format 1_1, an offset from the slot including the last OFDM symbol of the PDSCH to the slot including the first OFDM symbol of the PUCCH may be identified by a higher layer parameter.

The PUCCH resource indicator field may be a field indicating an index of any of one or multiple PUCCH resources included in a PUCCH resource set.

The BWP field of the DCI format 1_1 may be used to indicate the downlink BWP to which the PDSCH scheduled by the DCI format 1_1 is mapped. In other words, the DCI format 1_1 may be accompanied by a change in the active downlink BWP. The terminal apparatus 1 may recognize the downlink BWP to which the PUSCH is mapped based on detection of the DCI format 1_1 used for the scheduling of the PDSCH.

The DCI format 1_1 not including the BWP field may be a DCI format for scheduling the PDSCH without changing the active downlink BWP. The terminal apparatus 1 may recognize that the PDSCH is received without switching the active downlink BWP based on detection of the DCI format 1_1 which is used for the scheduling of the PDSCH and does not include the BWP field.

In a case that the DCI format 1_1 includes the BWP field but the terminal apparatus 1 does not support the function of switching the BWP according to the DCI format 1_1, the terminal apparatus 1 may ignore the BWP field. In other words, the terminal apparatus 1 which does not support the function of switching the BWP may recognize that the PDSCH is received without switching the active downlink BWP based on detection of the DCI format 1_1 which is used for the scheduling of the PDSCH and includes the BWP field. Here, in a case of supporting the function of switching the BWP, the terminal apparatus 1 may report, in a function information reporting procedure of the RRC layer, that "the terminal apparatus 1 supports the function of switching the BWP".

In a case that the carrier indicator field is included in the DCI format 1_1, the carrier indicator field may be used for indicating the downlink component carrier to which the PDSCH is mapped. In a case that the carrier indicator field is not included in the DCI format 1_1, the downlink component carrier to which the PDSCH is mapped may be the same as the downlink component carrier to which the PDCCH including the DCI format 1_1 used for scheduling of the PDSCH is mapped. In a case that the number of downlink component carriers configured for the terminal apparatus 1 in a certain serving cell group is two or more (case that downlink carrier aggregation is operated in a certain serving cell group), the number of bits of the carrier indicator field included in the DCI format 1_1 used for scheduling of the PDSCH mapped to the certain serving cell group may be 1 bit or more (for example, 3 bits). In a case that the number of downlink component carriers configured for the terminal apparatus 1 in a certain serving cell group is one (case that downlink carrier aggregation is not operated in a certain serving cell group), the number of bits of the carrier indicator field included in the DCI format 1_1 used for scheduling of the PDSCH mapped to the certain serving cell group may be 0 bits (or the carrier indicator field need not be included in the DCI format 1_1 used for scheduling of the PDSCH mapped to the certain serving cell group).

The PDSCH may be used for conveying the transport block. The PDSCH may be used for transmitting the transport block delivered by the DL-SCH. The PDSCH may be used for conveying the transport block. The transport block may be mapped to the PDSCH. The transport block corresponding to the DL-SCH may be mapped to the PDSCH. The base station apparatus 3 may transmit the PDSCH. The terminal apparatus 1 may receive the PDSCH.

The downlink physical signal may correspond to a set of resource elements. The downlink physical signal need not carry information generated in a higher layer. The downlink physical signal may be a physical signal used in the downlink component carrier. The downlink physical signal may be transmitted by the base station apparatus 3. The downlink physical signal may be transmitted by the terminal apparatus 1. In the radio communication system according to an aspect of the present embodiment, at least a part or all of the following downlink physical signals may be used.

- Synchronization signal (SS)
- DownLink DeModulation Reference Signal (DL DMRS)
- Channel State Information-Reference Signal (CSI-RS)
- DownLink Phase Tracking Reference Signal (DL PTRS)

The synchronization signal may be used for the terminal apparatus 1 to take synchronization in one or both of the frequency domain and the time domain in the downlink. The synchronization signal is a general term for the Primary Synchronization Signal (PSS) and the Secondary Synchronization Signal (SSS).

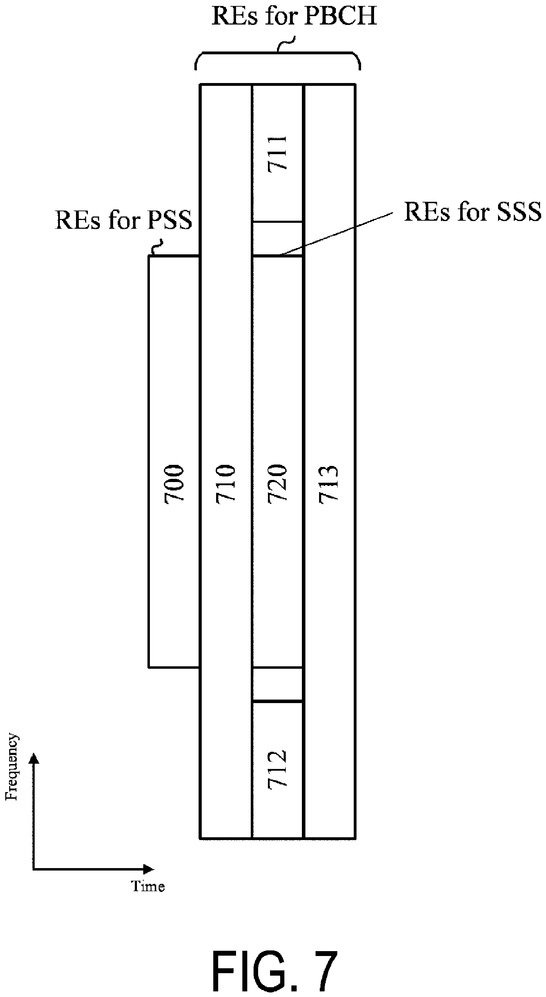

FIG. 7 is a diagram illustrating a configuration example of the SS/PBCH block according to an aspect of the present embodiment. In FIG. 7, the horizontal axis corresponds to a time axis (OFDM symbol index $l_{sym}$), and the vertical axis represents the frequency domain. A block 700 represents a set of resource elements for the PSS. A block 720 represents a set of resource elements for the SSS. Four blocks (blocks 710, 711, 712, and 713) represent a set of resource elements for the PBCH and the DMRS for the PBCH (DMRS related to the PBCH, DMRS included in the PBCH, DMRS corresponding to the PBCH).

As illustrated in FIG. 7, the SS/PBCH block includes the PSS, the SSS, and the PBCH. The SS/PBCH block includes four consecutive OFDM symbols. The SS/PBCH block includes 240 subcarriers. The PSS is mapped to the 57th to 183rd subcarriers in the first OFDM symbol. The SSS is mapped to the 57th to 183rd subcarriers in the third OFDM symbol. Zero may be set to the 1st to 56th subcarriers of the first OFDM symbol. Zero may be set to the 184th to 240th subcarriers of the first OFDM symbol. Zero may be set to the 49th to 56th subcarriers of the third OFDM symbol. Zero may be set to the 184th to 192nd subcarriers of the third OFDM symbol. The PBCH is mapped to subcarriers which are the 1st to 240th subcarriers of the second OFDM symbol and to which the DMRS for the PBCH is not mapped. The PBCH is mapped to subcarriers which are the 1st to 48th subcarriers of the third OFDM symbol and to which the DMRS for the PBCH is not mapped. The PBCH is mapped to subcarriers which are the 193rd to 240th subcarriers of the third OFDM symbol and to which the DMRS for the PBCH is not mapped. The PBCH is mapped to subcarriers which are the 1st to 240th subcarriers of the fourth OFDM symbol and to which the DMRS for the PBCH is not mapped.

The PSS, the SSS, the PBCH, and the antenna port of the DMRS for the PBCH may be the same.

The PBCH over which the symbol of the PBCH on a certain antenna port is conveyed may be inferred from the DMRS for the PBCH mapped to the slot to which the PBCH is mapped and for the PBCH included in the SS/PBCH block including the PBCH.

The DL DMRS is a general term for a DMRS for the PBCH, a DMRS for the PDSCH, and a DMRS for the PDCCH.

A set of antenna ports of the DMRS for the PDSCH (DMRS related to the PDSCH, DMRS included in the PDSCH, DMRS corresponding to the PDSCH) may be given based on a set of antenna ports for the PDSCH. In other words, the set of antenna ports of the DMRS for the PDSCH may be the same as the set of antenna ports for the PDSCH.

Transmission of the PDSCH and transmission of the DMRS for the PDSCH may be indicated (or may be scheduled) by one DCI format. The PDSCH and the DMRS for the PDSCH may be collectively referred to as a PDSCH. Transmission of the PDSCH may mean transmission of the PDSCH and the DMRS for the PDSCH.

A propagation path of the PDSCH may be inferred from the DMRS for the PDSCH. In a case that a set of resource elements in which the symbol of a certain PDSCH is conveyed and a set of resource elements in which the symbol of the DMRS for the certain PDSCH is conveyed are included in the same Precoding Resource Group (PRG), the PDSCH over which the symbol of the PDSCH on a certain antenna port is conveyed may be inferred from the DMRS for the PDSCH.

The antenna port of the DMRS for the PDCCH (DMRS related to the PDCCH, DMRS included in the PDCCH, DMRS corresponding to the PDCCH) may be the same as the antenna port for the PDCCH.

The PDCCH may be inferred from the DMRS for the PDCCH. In other words, a propagation path of the PDCCH may be inferred from the DMRS for the PDCCH. In a case that the same precoder is (assumed to be) applied to a set of resource elements in which the symbol of a certain PDCCH is conveyed and a set of resource elements in which the symbol of the DMRS for the certain PDCCH is conveyed, the PDCCH over which the symbol of the PDCCH on a certain antenna port is conveyed may be inferred from the DMRS for the PDCCH.

A Broadcast CHannel (BCH), an Uplink-Shared CHannel (UL-SCH), and a Downlink-Shared CHannel (DL-SCH) are transport channels. A transport channel defines the relationship between a physical layer channel and a MAC layer channel (also referred to as a logical channel).

The BCH of the transport layer is mapped to the PBCH of the physical layer. In other words, a transport block passing through the BCH of the transport layer is delivered to the PBCH of the physical layer. The UL-SCH of the transport layer is mapped to the PUSCH of the physical layer. In other words, the transport block passing through the UL-SCH of the transport layer is delivered to the PUSCH of the physical layer. The DL-SCH of the transport layer is mapped to the PDSCH of the physical layer. In other words, a transport block passing through the DL-SCH of the transport layer is delivered to the PDSCH of the physical layer.

For each serving cell, one UL-SCH and one DL-SCH may be given. The BCH may be given to the PCell. The BCH need not be given to the PSCell and the SCell.

The MAC layer controls the Hybrid Automatic Repeat reQuest (HARQ) for each transport block.

A Broadcast Control CHannel (BCCH), a Common Control CHannel (CCCH), and a Dedicated Control CHannel (DCCH) are logical channels. For example, the BCCH is a channel of the RRC layer used for transmitting the MIB or system information. The Common Control CHannel (CCCH) may be used for transmitting a common RRC message in multiple terminal apparatuses 1. Here, the CCCH may be, for example, used for the terminal apparatus 1 that is not in a state of RRC connection. The Dedicated Control CHannel (DCCH) may be at least used for transmitting an RRC message dedicated to the terminal apparatus 1. Here, the DCCH may be, for example, used for the terminal apparatus 1 that is in a state of RRC connection.

The higher layer parameter common to the multiple terminal apparatuses 1 is also referred to as a common higher layer parameter. Here, the common higher layer parameter may be defined as a parameter specific to the serving cell. Here, the parameter specific to the serving cell may be a parameter common to terminal apparatuses configured with the serving cell (for example, the terminal apparatuses 1-A, 1-B, and 1-C).

For example, an RRC message delivered to the BCCH may include the common higher layer parameter. For example, an RRC message delivered on the DCCH may include the common higher layer parameter.

Among certain higher layer parameters, a higher layer parameter different from the common higher layer parameter is also referred to as a dedicated higher layer parameter. Here, the dedicated higher layer parameter may provide a dedicated RRC parameter to the terminal apparatus 1-A configured with the serving cell. In other words, the dedicated RRC parameter is a higher layer parameter capable of providing a unique configuration to each of the terminal apparatuses 1-A, 1-B, and 1-C.

The BCCH of the logical channel may be mapped to the BCH or the DL-SCH of the transport layer. For example, a transport block including the information of the MIB is delivered to the BCH of the transport layer. A transport block including system information other than the MIB is delivered to the DL-SCH of the transport layer. The CCCH is mapped to the DL-SCH or the UL-SCH. In other words, a transport block mapped to the CCCH is delivered to the DL-SCH or the UL-SCH. The DCCH is mapped to the DL-SCH or the UL-SCH. In other words, a transport block mapped to the DCCH is delivered to the DL-SCH or the UL-SCH.

The RRC message includes one or multiple parameters managed in the RRC layer. Here, the parameters managed in the RRC layer are also referred to as RRC parameters. For example, the RRC message may include the MIB. The RRC message may include the system information. The RRC message may include a message corresponding to the CCCH. The RRC message may include a message corresponding to the DCCH. The RRC message including a message corresponding to the DCCH is also referred to as a dedicated RRC message.

The higher layer parameter is an RRC parameter or a parameter included in a Medium Access Control Control Element (MAC CE). In other words, the higher layer parameter is a general term for the MIB, the system information, a message corresponding to the CCCH, a message corresponding to the DCCH, and parameters included in the MAC CE. The parameters included in the MAC CE are transmitted by a MAC Control Element (CE) command.

Procedures performed by the terminal apparatus 1 include at least a part or all of the following 5A to 5C.

    5A) Cell search
    5B) Random access
    5C) Data communication

The cell search is a procedure used for the terminal apparatus 1 synchronizing with a certain cell related to the time domain and the frequency domain and detecting a physical cell identity (physical cell ID). In other words, by means of the cell search, the terminal apparatus 1 may perform synchronization with a certain cell in the time domain and the frequency domain and detect a physical cell ID.

A sequence of the PSS is given based at least on the physical cell ID. A sequence of the SSS is given based at least on the physical cell ID.

An SS/PBCH block candidate indicates a resource allowed to (possible to, scheduled to, configured to, defined to, having a possibility to) transmit the SS/PBCH block.

A set of SS/PBCH block candidates in a certain half radio frame is also referred to as an SS burst set. The SS burst set is also referred to as a transmission window (transmissionwindow), an SS transmission window, or a Discovery Reference Signal transmission window (DRS transmission window). The SS burst set is a general term including at least a first SS burst set and a second SS burst set.

The base station apparatus 3 transmits SS/PBCH blocks with one or multiple indices in a prescribed periodicity. The terminal apparatus 1 may detect at least one SS/PBCH block out of the SS/PBCH blocks with one or multiple indices and attempt decoding of the PBCH included in the at least one SS/PBCH block.

The random access is a procedure including at least a part or all of a message 1, a message 2, a message 3, and a message 4.

The message 1 is a procedure in which the PRACH is transmitted by the terminal apparatus 1. The terminal apparatus 1 transmits the PRACH in one PRACH occasion selected out of one or multiple PRACH occasions based at least on the index of the SS/PBCH block candidate detected based on the cell search. Each of the PRACH occasions is defined based at least on resources in the time domain and the frequency domain.

The terminal apparatus 1 transmits one random access preamble selected out of the PRACH occasions corresponding to the indices of the SS/PBCH block candidates in which the SS/PBCH block is detected.

The message 2 is a procedure for attempting to detect a DCI format 1_0 with a Cyclic Redundancy Check (CRC) scrambled by a Random Access - Radio Network Temporary Identifier (RA-RNTI) by the terminal apparatus 1. The terminal apparatus 1 attempts detection of the PDCCH including the DCI format in a control resource set given based on the MIB, which is included in the PBCH included in the SS/PBCH block detected based on cell search, and in resources indicated based on a configuration of a search space set. The message 2 is also referred to as a random access response.

The message 3 is a procedure for transmitting the PUSCH scheduled by using a random access response grant included in a DCI format 1_0 detected through the procedure of the message 2. Here, the random access response grant (random access responsegrant) is indicated by the MAC CE included in the PDSCH scheduled by using the DCI format 1_0.

The PUSCH scheduled based on the random access response grant is either a message 3 PUSCH or a PUSCH. The message 3 PUSCH includes a contention resolution identifier (contention resolution ID) MAC CE. The contention resolution ID MAC CE includes a contention resolution ID.

Retransmission of the message 3 PUSCH is scheduled by using a DCI format 0_0 with a CRC scrambled based on a Temporary Cell - Radio Network Temporary Identifier (TC-RNTI).

The message 4 is a procedure for attempting to detect a DCI format 1_0 with a CRC scrambled based on either of a Cell - Radio Network Temporary Identifier (C-RNTI) or a TC-RNTI. The terminal apparatus 1 receives a PDSCH scheduled based on the DCI format 1_0. The PDSCH may include a contention resolution ID.

Data communication is a general term for downlink communication and uplink communication.

In the data communication, the terminal apparatus 1 attempts detection of the PDCCH (monitors the PDCCH, supervises the PDCCH) in a control resource set and resources identified based on a search space set.

The control resource set is a set of resources including a certain number of resource blocks and a certain number of OFDM symbols. In the frequency domain, the control resource set may include continuous resources (non-interleaved mapping) or may include distributed resources (interleaver mapping).

A set of resource blocks constituting the control resource set may be indicated by the higher layer parameter. The number of OFDM symbols constituting the control resource set may be indicated by the higher layer parameter.

The terminal apparatus 1 attempts detection of the PDCCH in a search space set. Here, an attempt to detect the PDCCH in the search space set may mean an attempt to detect a candidate of the PDCCH in the search space set, may mean an attempt to detect a DCI format in the search space set, may mean an attempt to detect the PDCCH in the control resource set, may mean an attempt to detect a candidate of the PDCCH in the control resource set, or may mean an attempt to detect a DCI format in the control resource set.

The search space set is defined as a set of candidates of the PDCCH. The search space set may be a Common Search Space (CSS) set or may be a UE-specific Search Space (USS) set. The terminal apparatus 1 attempts detection of candidates of the PDCCH in a part or all of a Type 0 PDCCH common search space set, a Type 0a PDCCH common search space set, a Type 1 PDCCH common search space set, a Type 2 PDCCH common search space set, a Type 3 PDCCH common search space set, and/or a UE-specific PDCCH search space set (UE-specific search space set).

The Type 0 PDCCH common search space set may be used as a common search space set having an index of 0. The Type 0 PDCCH common search space set may be a common search space set having an index of 0.

The CSS set is a general term for the Type 0 PDCCH common search space set, the Type 0a PDCCH common search space set, the Type 1 PDCCH common search space set, the Type 2 PDCCH common search space set, and the Type 3 PDCCH common search space set. The USS set is also referred to as a UE-specific PDCCH search space set.

A certain search space set is related to (included in, corresponds to) a certain control resource set. The index of the control resource set related to the search space set may be indicated by the higher layer parameter.

For a certain search space set, a part or all of 6A to 6C may be indicated by at least the higher layer parameter.

6A) PDCCH monitoring periodicity
6B) PDCCH monitoring pattern within a slot
6C) PDCCH monitoring offset

The monitoring occasion of a certain search space set may correspond to the OFDM symbol to which the first OFDM symbol of a control resource set related to the certain search space set is mapped. The monitoring occasion of a certain search space set may correspond to a resource of a control resource set starting from the first OFDM symbol of the control resource set related to the certain search space set. The monitoring occasion of the search space set is given based at least on a part or all of the monitoring periodicity of the PDCCH, the monitoring pattern of the PDCCH in a slot, and the monitoring offset of the PDCCH.

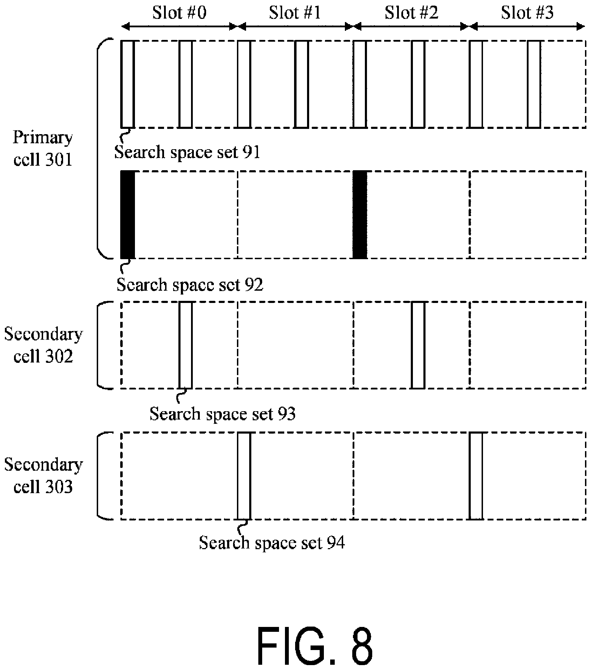

FIG. 8 is a diagram illustrating an example of the monitoring occasions for the search space sets according to an aspect of the present embodiment. In FIG. 8, a search space set 91 and a search space set 92 are configured in a primary cell 301, a search space set 93 is configured in a secondary cell 302, and a search space set 94 is configured in a secondary cell 303.

In FIG. 8, solid white blocks in the primary cell 301 represent a search space set 91, solid black blocks in the primary cell 301 represent a search space set 92, blocks in the secondary cell 302 represent a search space set 93, and blocks in the secondary cell 303 represent a search space set 94.

The monitoring periodicity of the search space set 91 is set to one slot, the monitoring offset of the search space set 91 is set to zero slots, and the monitoring pattern of the search space set 91 is set to [1, 0, 0, 0, 0, 0, 0, 1, 0, 0, 0, 0, 0, 0]. In other words, the monitoring occasions for the search space set 91 corresponds to the first OFDM symbol (OFDM symbol #0) and the eighth OFDM symbol (OFDM symbol #7) in each of the slots.

The monitoring periodicity of the search space set 92 is set to two slots, the monitoring offset of the search space set 92 is set to zero slots, and the monitoring pattern of the search space set 92 is set to [1, 0, 0, 0, 0, 0, 0, 0, 0, 0, 0, 0, 0, 0]. In other words, the monitoring occasion for the search space set 92 corresponds to the first OFDM symbol (OFDM symbol #0) in each of the even-numbered slots.

The monitoring periodicity of the search space set 93 is set to two slots, the monitoring offset of the search space set 93 is set to zero slots, and the monitoring pattern of the search space set 93 is set to [0, 0, 0, 0, 0, 0, 0, 1, 0, 0, 0, 0, 0, 0]. In other words, the monitoring occasion for the search space set 93 corresponds to the eighth OFDM symbol (OFDM symbol #7) in each of the even-numbered slots.

The monitoring periodicity of the search space set 94 is set to two slots, the monitoring offset of the search space set 94 is set to one slot, and the monitoring pattern of the search space set 94 is set to [1, 0, 0, 0, 0, 0, 0, 0, 0, 0, 0, 0, 0, 0]. In other words, the monitoring occasion for the search space set 94 corresponds to the first OFDM symbol (OFDM symbol #0) in each of the odd-numbered slots.

The Type 0 PDCCH common search space set may be at least used for the DCI format with a Cyclic Redundancy Check (CRC) sequence scrambled by a System Information-Radio Network Temporary Identifier (SI-RNTI).

The Type 0a PDCCH common search space set may be at least used for the DCI format with a Cyclic Redundancy Check (CRC) sequence scrambled by a System Information-Radio NetworkTemporary Identifier (SI-RNTI).

The Type 1 PDCCH common search space set may be at least used for the DCI format with a CRC sequence scrambled by a Random Access-Radio Network Temporary Identifier (RA-RNTI) and/or a CRC sequence scrambled by a Temporary Cell-Radio Network Temporary Identifier (TC-RNTI).

The Type 2 PDCCH common search space set may be used for the DCI format with a CRC sequence scrambled by a Paging- Radio Network Temporary Identifier (P-RNTI).

The Type 3 PDCCH common search space set may be used for the DCI format with a CRC sequence scrambled by a Cell-Radio Network Temporary Identifier (C-RNTI).

The UE-specific PDCCH search space set may be at least used for the DCI format with a CRC sequence scrambled by a C-RNTI.

In the downlink communication, the terminal apparatus 1 detects a downlink DCI format. The detected downlink DCI format is at least used for resource assignment of the PDSCH. The detected downlink DCI format is also referred to as a downlink assignment. The terminal apparatus 1 attempts reception of the PDSCH. Based on the PUCCH resource indicated based on the detected downlink DCI format, the HARQ-ACK corresponding to the PDSCH (HARQ-ACK corresponding to the transport block included in the PDSCH) is reported to the base station apparatus 3.

In the uplink communication, the terminal apparatus 1 detects an uplink DCI format. The detected DCI format is at least used for resource assignment of the PUSCH. The detected uplink DCI format is also referred to as an uplink grant. The terminal apparatus 1 performs transmission of the PUSCH.

In configured scheduling (configured grant), the uplink grant for scheduling the PUSCH is configured for each transmission periodicity of the PUSCH. A part or all of pieces of information indicated by an uplink DCI format in a case that the PUSCH is scheduled by the uplink DCI format may be indicated by the uplink grant configured in a case of the configured grant.

The UL slot may be a slot including UL symbols. The special slot may be a slot including a UL symbol, a flexible symbol, and a DL symbol. The DL slot may be a slot including DL symbols.

The UL symbol may be an OFDM symbol configured or indicated for the uplink in time division duplex. The UL symbol may be an OFDM symbol configured or indicated for the PUSCH, the PUCCH, the PRACH, or the SRS. The UL symbol may be provided by a higher layer parameter tdd-UL-DL-ConfigurationCommon. The UL symbol may be provided by a higher layer parameter tdd-UL-DL-ConfigurationDedicated. The UL slot may be provided by the higher layer parameter tdd-UL-DL-ConfigurationCommon. The UL slot may be provided by the higher layer parameter tdd-UL-DL-ConfigurationDedicated.

The DL symbol may be an OFDM symbol configured or indicated for the downlink in time division duplex. The DL symbol may be an OFDM symbol configured or indicated for the PDSCH or the PDCCH. The DL symbol may be provided by the higher layer parameter tdd-UL-DL-ConfigurationCommon. The DL symbol may be provided by the higher layer parameter tdd-UL-DL-ConfigurationDedicated. The DL slot may be provided by the higher layer parameter tdd-UL-DL-ConfigurationCommon. The DL slot may be provided by the higher layer parameter tdd-UL-DL-ConfigurationDedicated.

The flexible symbol may be an OFDM symbol that is not configured or indicated as a UL symbol or a DL symbol among the OFDM symbols within a certain periodicity. The certain periodicity may be a periodicity given by a higher layer parameter dl-UL-TransmissionPeriodicity. The flexible symbol may be an OFDM symbol configured or indicated for the PDSCH, the PDCCH, the PUSCH, the PUCCH, or the PRACH.

The higher layer parameter tdd-UL-DL-ConfigurationCommon may be a parameter that configures one of a UL slot, and a DL slot, a special slot for each of one or multiple slots. The higher layer parameter tdd-UL-DL-ConfigurationDedicated may be a parameter that configures any one of a UL symbol, and a DL symbol, a flexible symbol for a flexible symbol in each of the one or multiple slots. tdd-UL-DL-ConfigurationCommon may be a common higher layer parameter. tdd-UL-DL-ConfigurationDedicated may be a dedicated higher layer parameter.

PUSCH-Config may be a dedicated higher layer parameter. PUSCH-ConfigCommon may be a common higher layer parameter. PUSCH-Config may be configured per BWP for PUSCH transmission. PUSCH-Config may include multiple higher layer parameters related to the PUSCH transmission. PUSCH-Config may be a UE-specific configuration. For example, PUSCH-Config for the terminal apparatus 1A, and the terminal apparatus 1B, the terminal apparatus 1C in one cell, or multiple higher layer parameters included in PUSCH-Config may vary. PUSCH-ConfigCommon may be configured per BWP for the PUSCH transmission. PUSCH-ConfigCommon may include multiple higher layer parameters related to the PUSCH transmission. PUSCH-ConfigCommon may be a cell-specific configuration. For example, PUSCH-ConfigCommon for the terminal apparatus 1A, and the terminal apparatus 1B, the terminal apparatus 1C in one cell may be common. For example, PUSCH-ConfigCommon may be provided in system information.

The terminal apparatus 1 may decode the PDSCH. For example, in response to detecting the PDCCH, the terminal apparatus 1 may decode the corresponding PDSCH. In a transmission scheme 1 for the PDSCH, the terminal apparatus 1 may assume that the transmission by the base station apparatus 3 is performed over the PDSCH. The transmission by the base station apparatus 3 over the PDSCH may be performed in up to eight transmission layers on antenna ports 1000 to 1011. The transmission by the base station apparatus 3 over the PDSCH may be performed on the antenna ports 1000 to 1023. The transmission by the base station apparatus 3 over the PDSCH may be performed in up to eight transmission layers on the antenna ports 1000 to 1023.

The PDCCH may be scheduled by the PDSCH. A DMRS reception procedure for a first PDSCH scheduled by a PDCCH with DCI format 1_1 may be applied to a second PDSCH. The second PDSCH may be a PDSCH scheduled by a PDCCH with DCI format 1_2. The second PDSCH may be a PDSCH scheduled by a PDCCH with DCI format 4_2.

As assumption 1, the terminal apparatus 1 may assume that the PDSCH is not present in the OFDM symbol conveying the DMRS. As assumption 2, the terminal apparatus 1 may assume that the PDSCH other than the first PDSCH is not present in the OFDM symbol conveying the DMRS. The first PDSCH may be a PDSCH with an allocation duration of two OFDM symbols. As assumption 3, the terminal apparatus 1 may assume that a single symbol front-loaded DMRS of a configuration type 1 is transmitted on the DMRS port 1000. As assumption 4, the terminal apparatus 1 may assume that the remaining antenna ports other than the DMRS port 1000 are not associated with PDSCH transmission to another terminal apparatus. As assumption 5, the terminal apparatus 1 may assume that a higher layer parameter dmrs-AdditionalPosition is 'pos2' and that up to two additional single symbol DMRSs are present in one slot. The terminal apparatus 1 may assume assumption 5 for the PDSCHs with mapping type A and mapping type B. As assumption 6, the terminal apparatus 1 may assume that the PDSCH is present in the symbol conveying the DMRS. The terminal apparatus 1 may assume assumption 6 for the PDSCH with mapping type B and with the allocation duration of two OFDM symbols.

The PDSCH may be scheduled by the DCI format. In a case that the PDSCH is scheduled by a first DCI format, or in a case that the PDSCH is received before a dedicated higher layer configuration of any of one or multiple higher layer parameters, the terminal apparatus 1 may assume some or all of assumption 1, assumption 2, assumption 3, assumption 4, assumption 5, and assumption 6. The first DCI format may be the DCI format 1_0, the DCI format 4_0, or the DCI format 4_1. The one or multiple higher layer parameters may be some or all of the higher layer parameter dmrs-AdditionalPosition, a higher layer parameter maxLength, and a higher layer parameter dmrs-Type.

In a case that the PDSCH is scheduled by the second DCI format, the terminal apparatus 1 may be configured with the higher layer parameter dmrs-Type, and a configured DMRS configuration type (configuration type) may be used for a receiving PDSCH. In the case that the PDSCH is scheduled by the second DCI format, the maximum number of front-loaded DMRS symbols for the PDSCH may be configured by the higher layer parameter maxLength given by a higher layer parameter DMRS-DownlinkConfig. The higher layer parameter maxLength may be set to 'len1' or 'len2'. The DMRS may be scheduled by the DCI (DCI format). In a case that the higher layer parameter maxLength is set to 'len1', the single symbol DMRS (single symbol front-loaded DMRS) may be scheduled for the terminal apparatus 1 by the DCI (the DCI format). In the case that the higher layer parameter maxLength is set to 'len1', the terminal apparatus 1 may be configured with an additional DMRS for the PDSCH by the higher layer parameter dmrs-AdditionalPosition which is set to 'pos0', 'pos1', 'pos2', or 'pos3'. In a case that the higher layer parameter maxLength is set to 'len2', the single symbol DMRS and a double symbol DMRS (double symbol front-loaded DMRS) may be scheduled for the terminal apparatus 1 by the DCI. In the case that the higher layer parameter maxLength is set to 'len2', an additional DMRS for the PDSCH may be configured by the higher layer parameter dmrs-AdditionalPosition set to 'pos0' or 'pos1'. The terminal apparatus 1 may assume to receive the additional DMRS. The second DCI format may be the DCI format 1_1 by the PDCCH with a CRC scrambled by the C-RNTI, the MCS-C-RNTI, or the CS-RNTI. The second DCI format may be the DCI format 4_2 by the PDCCH with a CRC scrambled by a G-RNTI or a G-CS-RNTI.

The reference signal may be a generic term for a DMRS, a PTRS, and a CSI-RS. For a terminal apparatus-specific reference signal, the terminal apparatus 1 may be configured with one or two scrambling identities (IDs) by the higher layer. The scrambling ID may be the same for both the PDSCH mapping type A and the PDSCH mapping type B. The terminal apparatus 1 may be scheduled with some DMRS ports. The terminal apparatus 1 may be scheduled with some DMRS ports by an antenna port index (antenna port number) in the DCI format 1_1.

In a DMRS configuration type 1, in a first case, a second case, or a third case, the terminal apparatus 1 may assume that one or multiple antenna ports are not associated with the PDSCH transmission to another terminal apparatus. The first case may be a case where the terminal apparatus 1 is scheduled with one codeword and the terminal apparatus 1 is assigned with the antenna port mapped to any index of {2, 9, 10, 11, 30} (a value of the antenna port field). The second case may be a case where the terminal apparatus 1 is scheduled with one codeword and the terminal apparatus 1 is assigned with the antenna port mapped to any index of {2, 9, 10, 11, 12} (a value of the antenna port field). The third case may be a case where the terminal apparatus 1 is scheduled with two codes. The one or multiple antenna ports may be the remaining orthogonal antenna ports. The first case may be a case where the terminal apparatus 1 is assigned with the antenna port mapped to the index of {2, 9, 10, 11, 30} (the value of the antenna port field) in a case that the terminal apparatus 1 is scheduled with one codeword and DMRS extension is not applied. The first case may be a case where the terminal apparatus 1 is assigned with the antenna port mapped to the index of {2, 9, 10, 11, 18, 19, 20} (the value of the antenna port field) in a case that the terminal apparatus 1 is scheduled with one codeword and the DMRS extension is applied and in a case that the higher layer parameter maxLength is 1. The first case may be determined based on whether the DMRS extension is applied. The first case may be determined based on whether the DMRS extension is applied and the higher layer parameter maxLength.

The DMRS extension being applied may mean that a higher layer parameter ExtendedDMRSports is configured. The DMRS extension being applied may mean that a higher layer parameter ExtendedDMRSports is set to be valid. In a case that the terminal apparatus 1 reports a certain capability, the DMRS extension may be applied. In a case that the terminal apparatus 1 does not report the certain capability, the DMRS extension need not be applied. In the case that the terminal apparatus 1 does not report the certain capability, the terminal apparatus 1 need not expect that the DMRS extension is applied. For example, the certain capability may be reported for one or both of the uplink and the downlink. For example, the higher layer parameter ExtendedDMRSports may be configured for one or both of the uplink and the downlink. For example, the higher layer parameter ExtendedDMRSports may be configured in the higher layer parameter DMRS-DownlinkConfig or may be configured in a higher layer parameter DMRS-UplinkConfig.

Whether DMRS demodulation assistance is applied may be indicated by the DCI format. For example, whether the DMRS demodulation assistance is applied may be indicated by one or both of the DCI format 1_1 and the DCI format 1_2. For example, whether the DMRS demodulation assistance is applied may be indicated by one or both of the DCI format 0_1 and the DCI format 0_2.

In a DMRS configuration type 2, in a fourth case, a fifth case, or the third case, the terminal apparatus 1 may assume that one or multiple antenna ports are not associated with the PDSCH transmission to another terminal apparatus. The fourth case may be a case where the terminal apparatus 1 is scheduled with one codeword and the terminal apparatus 1 is assigned with the antenna port mapped to any index of {2, 10, 23} (DMRS port, DMRS port index). The fifth case may be a case where the terminal apparatus 1 is scheduled with one codeword and the terminal apparatus 1 is assigned with the antenna port mapped to any index of {2, 10, 23, 58} (DMRS port, DMRS port index).

In a case that the terminal apparatus 1 that receives the PDSCH scheduled by the first DCI format is configured with a first higher layer parameter, the terminal apparatus 1 may assume that a first configuration and a second configuration do not occur simultaneously for the received PDSCH. The first DCI format may be the DCI format 1_2. The first DCI format may be the DCI format 1_0 or the DCI format 1_1. The first higher layer parameter may be a higher layer parameter phaseTrackingRS in a higher layer parameter dmrs-DownlinkForPDSCH-MappingTypeA-DCI-1-2. The first higher layer parameter may be a higher layer parameter phaseTrackingRS in a higher layer parameter dmrs-DownlinkForPDSCH-MappingTypeB-DCI-1-2. The first higher layer parameter may be a higher layer parameter phase-

TrackingRS in a higher layer parameter dmrs-DownlinkForPDSCH-MappingTypeA. The first higher layer parameter may be a higher layer parameter phaseTrackingRS in a higher layer parameter dmrs-DownlinkForPDSCH-MappingTypeB. The first configuration may mean that one or multiple DMRS ports are scheduled for the terminal apparatus 1 and other terminal apparatuses share DMRS resource elements in the same CDM group. The one or multiple DMRS ports may be one or multiple of the DMRS ports 1004 to 1007. The one or multiple DMRS ports may be one or multiple of the DMRS ports 1006 to 1011. In the DMRS configuration type 1, the one or multiple DMRS ports may be one or multiple DMRS ports of the DMRS port 1004 to the DMRS port 1007. In the DMRS configuration type 2, the one or multiple DMRS ports may be one or multiple DMRS ports of the DMRS port 1006 to the DMRS port 1011. In the DMRS configuration type 1, the one or multiple DMRS ports may be one or multiple DMRS ports of the DMRS port 1004 to the DMRS port 1007 and the DMRS port 1012 to the DMRS port 1015. In DMRS configuration type 2, the one or multiple DMRS ports may be one or multiple DMRS ports of the DMRS port 1006 to the DMRS port 1011 and the DMRS port 1018 to the DMRS port 1023. In a case that the DMRS configuration type 1 is configured and in the case that the DMRS extension is applied, the one or multiple DMRS ports may be one or multiple DMRS ports of the DMRS port 1004 to the DMRS port 1007 and the DMRS port 1012 to the DMRS port 1015. In a case that the DMRS configuration type 2 is configured and in the case that the DMRS extension is applied, the one or multiple DMRS ports may be one or multiple DMRS ports of the DMRS port 1006 to the DMRS port 1011 and the DMRS port 1018 to the DMRS port 1023. The second configuration may mean that the PTRS is transmitted to the terminal apparatus 1. The DMRS extension being applied may mean that the higher layer parameter ExtendedDMRSports is configured. The DMRS extension being applied may mean that the higher layer parameter ExtendedDMRSports is set to be valid.

The terminal apparatus 1 need not expect that the double symbol front-loaded DMRS (double symbol front-loaded DMRS symbol) and the two or more additional DMRSs (additional DMRS symbols) are simultaneously configured. The double symbol front-loaded DMRS being configured may mean that the maximum number of front-loaded DMRS symbols for the PDSCH is configured by the higher layer parameter maxLength set to 'len2'. The additional DMRS may be given by the higher layer parameter dmrs-AdditionalPosition.

The terminal apparatus 1 need not expect to assume a DMRS configuration different from that of the co-scheduled terminal apparatus(es) (co-scheduled UE(s)). The DMRS configuration may be a DMRS configuration associated with an actual number of front-loaded DMRS symbols, an actual number of additional DMRSs, a DMRS symbol position, and a DMRS configuration type.

In a case that a PDSCH scheduled by the DCI format 1_1 is received, the terminal apparatus 1 may assume that the indicated CDM group includes a potential co-scheduled downlink terminal apparatus (a co-scheduled terminal apparatus, a co-scheduled downlink terminal apparatus) and the indicated CDM group is not used for data transmission. "1", "2", and "3" for the number of DMRS-CDM groups (CDM groups) may correspond to a CDM group 0, a CDM group {0, 1}, and a CDM group {0, 1, 2}, respectively.

The terminal apparatus 1 may assume that the number of DMRS-CDM groups (CDM groups) without data is one. For example, in a case that a PDSCH scheduled by the DCI format 1_0, 4_0, or 4_1 is received, the terminal apparatus 1 may assume that the number of first CDM groups without data is one. The first CDM group may correspond to the CDM group 0 for the PDSCH with the allocation duration of two OFDM symbols. The terminal apparatus 1 may assume that the number of DMRS-CDM groups without data is two. For example, in a case that a PDSCH scheduled by the DCI format 1_0, 4_0, or 4_1 is received, the terminal apparatus 1 may assume that the number of second CDM groups without data is two. The second CDM group may correspond to the CDM group {0, 1} for PDSCHs other than the PDSCH with the allocation duration of two OFDM symbols.

The terminal apparatus 1 need not expect to receive the first PDSCH. The first PDSCH may be scheduled with DCI indicating a CDM group with DMRS ports that overlap with configured CSI-RS resources.

The terminal apparatus 1 may receive a DMRS for the PDSCH. In a case that the terminal apparatus 1 receives the DMRS for the PDSCH and the SS/PBCH block in one or multiple OFDM symbols, the terminal apparatus 1 may assume that the DMRS and the SS/PBCH block are QCLed (or QCLed with Type D). The terminal apparatus 1 need not expect to receive the DMRS in one or multiple second resource elements overlapping with one or multiple first resource elements of the SS/PBCH block. The terminal apparatus 1 may expect that different or same subcarrier spacing is configured for the SS/PBCH block and the DMRS in one component carrier. For example, in a case that a first subcarrier spacing for the SS/PBCH block is 240 kHz, the terminal apparatus 1 may expect that a second subcarrier spacing for the DMRS is different from the first subcarrier spacing.

In a case that at least one TCI codepoint indicates two TCI states and in a case that the terminal apparatus 1 receives the DMRS for the PDSCH and the SS/PBCH block in the same OFDM symbol, the terminal apparatus 1 may assume that at least one DMRS port for the PDSCH and the SS/PBCH block are QCLed (or QCLed with Type D).

In a case that the terminal apparatus 1 is configured by a higher layer parameter PDCCH-Config and in a case that the terminal apparatus 1 receives the DMRS for the PDSCH and the SS/PBCH block in the same OFDM symbol, the terminal apparatus 1 may assume that at least one DMRS port for the PDSCH and the SS/PBCH block are QCLed (or QCLed with Type D). The higher layer parameter PDCCH-Config may include two different values of a higher layer parameter coresetPoolIndex in a higher layer parameter ControlResourceSet.

In a case that the terminal apparatus 1 is configured with the higher layer parameter PDCCH-Config including two different values of the higher layer parameter coresetPoolIndex, the terminal apparatus 1 may be scheduled with multiple PDSCHs overlapping in the time domain and the frequency domain by multiple PDCCHs. In this case, the terminal apparatus 1 need not expect to assume a different DMRS configuration. Further, in this case, the terminal apparatus 1 need not expect to assume the DMRS ports in one CDM group indicated by two transmission configuration indication (TCI) states. The DMRS configuration may be a DMRS configuration for some or all of an actual number of front-loaded DMRS symbols, an actual number of additional DMRS symbols, an actual DMRS symbol position, and a DMRS configuration type.

In a case that the terminal apparatus 1 is indicated by DCI including the time domain resource assignment field indicating an entry including a higher layer parameter repetitionNumber in a higher layer parameter PDSCH-Time-DomainResourceAllocation, the terminal apparatus 1 need not be configured with a higher layer parameter sfnSchemePdsch. In this case, two TCI states in the codepoints of the TCI field may be indicated, and DMRS ports in two CDM groups in the antenna port field may be indicated. In this case, a first TCI state may correspond to the first CDM group of the first antenna port, and a second TCI state may correspond to the second CDM group. The first antenna port may be indicated by an antenna port indication table (Antenna port indication table). The DCI (DCI format) may include a TCI field (Transmission Configuration Indication field). The DCI (DCI format) may include an antenna port field (Antenna port field).

The procedure in the PTRS reception may be applied to the terminal apparatus 1 that receives the PDSCH scheduled by the first DCI format. The first DCI format may be the DCI format 1_2 in the case that the higher layer parameter phaseTrackingRS is configured in the higher layer parameter dmrs-DownlinkForPDSCH-MappingTypeA-DCI-1-2 or the higher layer parameter dmrs-DownlinkForPDSCH-MappingTypeB-DCI-1-2. The first DCI format may be the DCI format 1_0 or DCI format 1_1 in the case that the higher layer parameter phaseTrackingRS is configured in the higher layer parameter dmrs-DownlinkForPDSCH-MappingTypeA or the higher layer parameter dmrs-DownlinkForPDSCH-MappingTypeB.

The terminal apparatus 1 may report an MCS and a bandwidth threshold. For example, the MCS and the bandwidth threshold may be reported based on a terminal capability (UE capability) at a particular carrier frequency. For example, the MCS and the bandwidth threshold may be reported assuming an MCS table with a maximum modulation order at each subcarrier frequency applied to a data channel at a particular carrier frequency. The MCS may be at least used for indicating a part or all of a modulation scheme and a target encoding rate.

In a case that the higher layer parameter phaseTrackingRS in the higher layer parameter DMRS-DownlinkConfig is configured for the terminal apparatus 1, some or all of the operation 1, an operation 2, an operation 3, and an operation 4 may be performed, indicated, assumed, or determined.

As the operation 1, higher layer parameters timeDensity and frequencyDensity may indicate three MCS threshold values and two RB threshold values, respectively.

As the operation 2, in a case that one or both of the higher layer parameters timeDensity and frequencyDensity are configured, the terminal apparatus 1 may assume the presence of the PTRS antenna port (PTRS port) and may assume that the pattern is a function of the first MCS and the first bandwidth. As the operation 2, in a case that one or both of the additional higher layer parameters timeDensity and frequencyDensity are configured, and in a case that the RNTI is the MCS-C-RNTI, the C-RNTI, or the CS-RNTI, in the terminal apparatus 1, the presence and pattern of the PTRS antenna port (PTRS port) may be a function of a first MCS and a first bandwidth. The first MCS may be an MCS of a corresponding codeword. The first bandwidth may be a bandwidth in a corresponding bandwidth part (BWP). In a case that the higher layer parameter timeDensity is not configured, the terminal apparatus 1 may assume that $L_{PTRS}$ is 1. $L_{PTRS}$ may be the number of OFDM symbols between two OFDM symbols to which the PTRS is mapped. For example, a PTRS may be present in one OFDM symbol among $L_{PTRS}$ OFDM symbols. In a case that the higher layer parameter frequencyDensity is not configured, the terminal apparatus may assume that $K_{PTRS}$ is 2. $K_{PTRS}$ may be the number of PRBs between two PRBs to which the PTRS is mapped. For example, a PTRS may be present in one PRB of the $K_{PTRS}$ PRBs.

As the operation 3, in a case that both the higher layer parameters timeDensity and frequencyDensity are not configured, the terminal apparatus 1 may assume that $L_{PTRS}$ is 1 and $K_{PTRS}$ is 2. As the operation 3, in a case that both the additional higher layer parameters timeDensity and frequencyDensity are not configured, in the case that the RNTI is the MCS-C-RNTI, the C-RNTI, or the CS-RNTI, and in a case that a condition 1 is not satisfied, the terminal apparatus 1 may assume that $L_{PTRS}$ is 1 and $K_{PTRS}$ is 2, and that the PTRS is present. As the operation 3, in the case that both the additional higher layer parameters timeDensity and frequencyDensity are not configured, in the case that the RNTI is the MCS-C-RNTI, the C-RNTI, or the CS-RNTI, and in a case that the condition 1 is satisfied, the terminal apparatus 1 may assume that the PTRS is not present. The condition 1 may mean that a value of the MCS is less than 10. The condition 1 may mean that the value of the MCS is less than 5. The condition 1 may mean that the value of the MCS is less than 15. The condition 1 may mean that the value of the MCS is less than 3. The condition 1 may mean that the number of PRBs (RBs) is less than 3.

As the operation 4, in a case that the RNTI is the RA-RNTI, the SI-RNTI, the MSGB-RNTI, or the P-RNTI, the terminal apparatus 1 may assume that the PTRS is not present.

A first MCS threshold, a second MCS threshold, and a third MCS threshold may be determined by a higher layer parameter. In a case that the value of the MCS is less than the first MCS threshold, the PTRS need not be present. In a case that the value of the MCS is equal to or greater than the first MCS threshold and less than the second MCS threshold, $L_{PTRS}$ may be 4. In a case that the value of the MCS is equal to or greater than the second MCS threshold and less than the third MCS threshold, $L_{PTRS}$ may be 2. In a case that the value of the MCS is at least equal to or greater than the third MCS threshold, $L_{PTRS}$ may be 1. In a case that a first MCS table is used, the higher layer parameter may provide the first MCS threshold, the second MCS threshold, and the third MCS threshold in a range of 0 to 29. In a case that a second MCS table is used, the higher layer parameter may provide the first MCS threshold, the second MCS threshold, and the third MCS threshold in a range of 0 to 28. In a case that a third MCS table is used, the higher layer parameter may provide the first MCS threshold, the second MCS threshold, and the third MCS threshold in a range of 0 to 27. The value of the MCS may not exceed a fourth MCS threshold. The fourth MCS threshold may be 29 in the case that the first MCS table is used, 28 in the case that the second MCS table is used, and 27 in the case that the third MCS table is used.

A first RB threshold and a second RB threshold may be determined by a higher layer parameter. In a case that the number of RBs is less than the first RB threshold, the PTRS need not be present. In a case that the number of RBs is equal to or greater than the first RB threshold and less than the second RB threshold, $K_{PTRS}$ may be 2. In a case that the number of RBs is at least equal to or greater than the second RB threshold, $K_{PTRS}$ may be 4. The higher layer parameter may provide the first RB threshold and the second RB threshold in a range of 1 to 276.

In a case that the higher layer parameter phaseTrackingRS is not configured, the terminal apparatus 1 may assume that the PTRS is not present. One or both of a PTRS time density ($L_{PTRS}$) and a PTRS frequency density ($K_{PTRS}$) may indicate that the PTRS is not present.

In a case that $L_{PTRS}$ is 2 or 4, and in a case that a PDSCH with an allocation duration of two OFDM symbols is received, the PTRS may be assumed to be not transmitted. In the case that $L_{PTRS}$ is 4 and in a case that a PDSCH with an allocation duration of 4 OFDM symbols is received, the PTRS may be assumed to be not transmitted.

The value of the MCS for the PTRS time density determination may be obtained from the DCI. For example, in a case that the terminal apparatus 1 is scheduled with an MCS index (the value of the MCS) larger than a first value and in a case that a PDSCH for retransmission is received, the value of the MCS for PTRS time density ($L_{PTRS}$) determination may be obtained from the DCI received for the same transport in the initial transmission. The first value may be 28 in a case that the first MCS table is used, 27 in the case that the second MCS table is used, and 26 in the case that the third MCS table is used.

One or multiple DMRS ports may be associated with one PTRS port. One or multiple DMRS ports associated with one PTRS port may be assumed to be QCLed (or QCLed with type A and type D). In a case that the terminal apparatus 1 is scheduled with one codeword, the PTRS antenna port (PTRS port, antenna port for PTRS, antenna port associated with PTRS) may be associated with one DMRS antenna port among one or multiple DMRS antenna ports (DMRS port, antenna port for DMRS) assigned for the PDSCH. The one DMRS antenna port may be the lowest indexed DMRS antenna port. The DMRS port may be a downlink DMRS port. The PTRS port may be a PTRS antenna port. The PTRS port may be an antenna port for PTRS. The DMRS port may be a DMRS antenna port. The DMRS port may be an antenna port for DMRS.

In a case that the terminal apparatus 1 is scheduled with two codewords, the PTRS antenna port may be associated with one DMRS antenna port. The one DMRS antenna port may be the lowest indexed DMRS antenna port among one or multiple DMRS antenna ports assigned for the codeword with the highest MCS. In a case that the two codewords are of the same MCS (MCS index), the one DMRS antenna port may be the lowest indexed DMRS antenna port among one or multiple DMRS antenna ports assigned for codeword 0.

The DCI format 1_0, the DCI format 1_1, and the DCI format 1_2 may be DCI formats for PDSCH scheduling. The DCI format 1_0 may be used for scheduling the PDSCH in a single downlink cell.

The antenna port field (Antenna port(s) field) may be included in the DCI format 1_1 and the DCI format 1_2. The number of information bits constituting the antenna port field may be 4, 5, or 6 bits. The number of information bits constituting the antenna port field may be 4, 5, 6, or 7 bits. The number of information bits constituting the antenna port field may be 4, 5, 6, 7, or 8 bits. The number of CDM groups without data may be any of a value 1, a value 2, and a value 3. The number of CDM groups without data of the value 1 may refer to a CDM group 0. The number of CDM groups without data of the value 2 may refer to a CDM group {0, 1}. The number of CDM groups without data of the value 3 may refer to a CDM groups {0, 1, 2}.

The higher layer parameter dmrs-Type being 1 may mean that DMRS configuration type 1 is configured. The higher layer parameter dmrs-Type being 2 may mean that the DMRS configuration type 2 is configured. The higher layer parameter maxLength being 1 may mean that the maximum number of the front-loaded DMRS symbols is 1. The higher layer parameter maxLength being 2 may mean that the maximum number of the front-loaded DMRS symbols is 2. For example, the higher layer parameter maxLength being 1 may mean that a single symbol front-loaded DMRS (front-loaded DMRS symbol) is configured. For example, the higher layer parameter maxLength being 2 may mean that a single symbol front-loaded DMRS (front-loaded DMRS symbol) or a double symbol front-loaded DMRS may be configured.

In a case that the DMRS configuration type 1 and a single symbol front-loaded DMRS symbol are configured, the number of information bits constituting the antenna port field may be 4. In the case that the DMRS configuration type 1 and a single symbol front-loaded DMRS symbol are configured and in a case that the higher layer parameter ExtendedDMRSports is not configured, the number of information bits constituting the antenna port field may be 4. In the case that the DMRS configuration type 1 and a single symbol front-loaded DMRS symbol are configured and in a case that the higher layer parameter ExtendedDMRSports is configured to be disabled, the number of information bits constituting the antenna port field may be 4. In a case that the value of the antenna port field including 4 information bits is 0, the DMRS port may be 0 and the number of CDM groups without data may be 1. In a case that the value of the antenna port field including 4 information bits is 1, the DMRS port may be 1 and the number of CDM groups without data may be 1. In a case that the value of the antenna port field including 4 information bits is 2, the DMRS port may be {0, 1} and the number of CDM groups without data may be 1. In a case that the value of the antenna port field including 4 information bits is 3, the DMRS port may be 0 and the number of CDM groups without data may be 2. In a case that the value of the antenna port field including 4 information bits is 4, the DMRS port may be 1 and the number of CDM groups without data may be 2. In a case that the value of the antenna port field including 4 information bits is 5, the DMRS port may be 2 and the number of CDM groups without data may be 2. In a case that the value of the antenna port field including 4 information bits is 6, the DMRS port may be 3 and the number of CDM groups without data may be 2. In a case that the value of the antenna port field including 4 information bits is 7, the DMRS port may be {0, 1} and the number of CDM groups without data may be 2. In a case that the value of the antenna port field including 4 information bits is 8, the DMRS port may be {2, 3} and the number of CDM groups without data may be 2. In a case that the value of the antenna port field including 4 information bits is 9, the DMRS port may be {0, 1, 2} and the number of CDM groups without data may be 2. In a case that the value of the antenna port field including 4 information bits is 10, the DMRS port may be {0, 1, 2, 3} and the number of CDM groups without data may be 2. In a case that the value of the antenna port field including 4 information bits is 11, the DMRS port may be {0, 2} and the number of CDM groups without data may be 2. In a case that the value of the antenna port field including 4 information bits is 12, 13, 14, or 15, the DMRS port may not be defined (may be reserved) and the number of CDM groups without data may not be defined (may be reserved).

In the case that the DMRS configuration type 1 and a single symbol front-loaded DMRS symbol are configured and in a case that the higher layer parameter ExtendedDMRSports is configured, the number of information bits constituting the antenna port field may be 5. In the case that the DMRS configuration type 1 and a single symbol front-loaded DMRS symbol are configured and in a case that the higher layer parameter ExtendedDMRSports is configured to be valid, the number of information bits constituting the antenna port field may be 5. In a case that the value of the antenna port field including 5 information bits is 0, the DMRS port may be 0 and the number of CDM groups without data may be 1. In a case that the value of the antenna port field including 5 information bits is 1, the DMRS port may be 1 and the number of CDM groups without data may be 1. In a case that the value of the antenna port field including 5 information bits is 2, the DMRS port may be {0, 1} and the number of CDM groups without data may be 1. In a case that the value of the antenna port field including 5 information bits is 3, the DMRS port may be 0 and the number of CDM groups without data may be 2. In a case that the value of the antenna port field including 5 information bits is 4, the DMRS port may be 1 and the number of CDM groups without data may be 2. In a case that the value of the antenna port field including 5 information bits is 5, the DMRS port may be 2 and the number of CDM groups without data may be 2. In a case that the value of the antenna port field including 5 information bits is 6, the DMRS port may be 3 and the number of CDM groups without data may be 2. In a case that the value of the antenna port field including 5 information bits is 7, the DMRS port may be {0, 1} and the number of CDM groups without data may be 2. In a case that the value of the antenna port field including 5 information bits is 8, the DMRS port may be {2, 3} and the number of CDM groups without data may be 2. In a case that the value of the antenna port field including 5 information bits is 9, the DMRS port may be {0, 1, 2} and the number of CDM groups without data may be 2. In a case that the value of the antenna port field including 5 information bits is 10, the DMRS port may be {0, 1, 2, 3} and the number of CDM groups without data may be 2. In a case that the value of the antenna port field including 5 information bits is 11, the DMRS port may be {0, 2} and the number of CDM groups without data may be 2. In a case that the value of the antenna port field including 5 information bits is 12, the DMRS port may be 8 and the number of CDM groups without data may be 2. In a case that the value of the antenna port field including 5 information bits is 13, the DMRS port may be 9 and the number of CDM groups without data may be 2. In a case that the value of the antenna port field including 5 information bits is 14, the DMRS port may be 10 and the number of CDM groups without data may be 2. In a case that the value of the antenna port field including 5 information bits is 15, the DMRS port may be 11 and the number of CDM groups without data may be 2. In a case that the value of the antenna port field including 5 information bits is 16, the DMRS port may be {8, 9} and the number of CDM groups without data may be 2. In a case that the value of the antenna port field including 5 information bits is 17, the DMRS port may be {10, 11} and the number of CDM groups without data may be 2. In a case that the value of the antenna port field including 5 information bits is 18, the DMRS port may be {8, 9, 10} and the number of CDM groups without data may be 2. In a case that the value of the antenna port field including 5 information bits is 19, the DMRS port may be {8, 9, 10, 11} and the number of CDM groups without data may be 2. In a case that the value of the antenna port field including 5 information bits indicates some or all of the DMRS ports {8, 9, 10, 11}, the number of CDM groups without data may be 2.

In the case that the DMRS configuration type 1 is configured and in the case that the maximum number of the front-loaded DMRS symbols is configured to be 2, the number of information bits constituting the antenna port field may be 5. In the case that the DMRS configuration type 1 is configured and in the case that the maximum number of the front-loaded DMRS symbols is configured to be 2, and in the case that the higher layer parameter ExtendedDMRSports is not configured, the number of information bits constituting the antenna port field may be 5. In the case that the DMRS configuration type 1 is configured and in the case that the maximum number of the front-loaded DMRS symbols is configured to be 2, and in the case that the higher layer parameter ExtendedDMRSports is configured to be invalid, the number of information bits constituting the antenna port field may be 5. The antenna port field including 5 information bits may indicate some or all of the DMRS ports {0, 1, 2, 3, 4, 5, 6, 7}.

In the case that the DMRS configuration type 1 is configured and in the case that the maximum number of the front-loaded DMRS symbols is configured to be 2, the number of information bits constituting the antenna port field may be 5. In the case that the DMRS configuration type 1 is configured and in the case that the maximum number of the front-loaded DMRS symbols is configured to be 2, and in the case that the higher layer parameter ExtendedDMRSports is not configured, the number of information bits constituting the antenna port field may be 5. In the case that the DMRS configuration type 1 is configured and in the case that the maximum number of the front-loaded DMRS symbols is configured to be 2, and in the case that the higher layer parameter ExtendedDMRSports is configured to be invalid, the number of information bits constituting the antenna port field may be 5. The antenna port field including 5 information bits may indicate some or all of the DMRS ports {0, 1, 2, 3, 4, 5, 6, 7}.

In the case that the DMRS configuration type 1 is configured and in the case that the maximum number of the front-loaded DMRS symbols is configured to be 2, and in the case that the higher layer parameter ExtendedDMRSports is configured, the number of information bits constituting the antenna port field may be 6. In the case that the DMRS configuration type 1 is configured and in the case that the maximum number of the front-loaded DMRS symbols is configured to be 2, and in the case that the higher layer parameter ExtendedDMRSports is configured to be valid, the number of information bits constituting the antenna port field may be 6. The antenna port field including 6 information bits may indicate some or all of the DMRS ports {0, 1, 2, 3, 4, 5, 6, 7, 8, 9, 10, 11, 12, 13, 14, 15}. In a case that the value of the antenna port field including 6 information bits indicates some or all of the DMRS ports {8, 9, 10, 11, 12, 13, 14, 15}, the number of CDM groups without data may be 2.

In the case of the DMRS configuration type 1, the antenna port (DMRS port) that can be used by the DMRS extension being applied may correspond to the number of CDM groups without data being 2. In the case of the DMRS configuration type 1, the antenna port (DMRS port) that can be used by the DMRS extension being applied need not correspond to the number of CDM groups without data being 1.

In a case that the DMRS configuration type 2 is configured and in a case that the maximum number of the front-loaded DMRS symbols is configured to be 1, the number of information bits constituting the antenna port field may be 5. In the case that the DMRS configuration type 2 is configured and in the case that the maximum number of the front-loaded DMRS symbols is configured to be 1, and in the case that the higher layer parameter ExtendedDMRSports is not configured, the number of information bits constituting the antenna port field may be 5. In the case that the DMRS configuration type 2 is configured and in the case that the maximum number of the front-loaded DMRS symbols is configured to be 1, and in the case that the higher layer parameter ExtendedDMRSports is configured to be invalid, the number of information bits constituting the antenna port field may be 5. The antenna port field including 5 information bits may indicate some or all of the DMRS ports {0, 1, 2, 3, 4, 5}.

In the case that the DMRS configuration type 2 is configured and in the case that the maximum number of the front-loaded DMRS symbols is configured to be 1, and in the case that the higher layer parameter ExtendedDMRSports is configured, the number of information bits constituting the antenna port field may be 6. In the case that the DMRS configuration type 2 is configured and in the case that the maximum number of the front-loaded DMRS symbols is configured to be 1, and in the case that the higher layer parameter ExtendedDMRSports is configured to be valid, the number of information bits constituting the antenna port field may be 6. The antenna port field including 6 information bits may indicate some or all of the DMRS ports {0, 1, 2, 3, 4, 5, 12, 13, 14, 15, 16, 17}. In a case that the value of the antenna port field including 6 information bits indicates some or all of the DMRS ports {12, 13, 14, 15, 16, 17}, the number of CDM groups without data may be one or both of 2 and 3, and may not be 1.

In the case that the DMRS configuration type 2 is configured and in the case that the maximum number of the front-loaded DMRS symbols is configured to be 2, the number of information bits constituting the antenna port field may be 6. In the case that the DMRS configuration type 2 is configured and in the case that the maximum number of the front-loaded DMRS symbols is configured to be 2, and in the case that the higher layer parameter ExtendedDMRSports is not configured, the number of information bits constituting the antenna port field may be 6. In the case that the DMRS configuration type 2 is configured and in the case that the maximum number of the front-loaded DMRS symbols is configured to be 2, and in the case that the higher layer parameter ExtendedDMRSports is configured to be invalid, the number of information bits constituting the antenna port field may be 6. The antenna port field including 6 information bits may indicate some or all of the DMRS ports {0, 1, 2, 3, 4, 5, 6, 7, 8, 9, 10, 11}.

In the case that the DMRS configuration type 2 is configured and in the case that the maximum number of the front-loaded DMRS symbols is configured to be 2, and in the case that the higher layer parameter ExtendedDMRSports is configured, the number of information bits constituting the antenna port field may be 7. In the case that the DMRS configuration type 2 is configured and in the case that the maximum number of the front-loaded DMRS symbols is configured to be 2, and in the case that the higher layer parameter ExtendedDMRSports is configured to be valid, the number of information bits constituting the antenna port field may be 7. The antenna port field including 7 information bits may indicate some or all of the DMRS ports {0, 1, 2, 3, 4, 5, 6, 7, 8, 9, 10, 11, 12, 13, 14, 15, 16, 17, 18, 19, 20, 21, 22, 23}. In a case that the value of the antenna port field including 7 information bits indicates some or all of the DMRS ports {12, 13, 14, 15, 16, 17, 18, 19, 20, 21, 22, 23}, the number of CDM groups without data may be one or both of 2 and 3, and need not be 1.

In the case of the DMRS configuration type 2, the antenna port (DMRS port) that can be used by the DMRS extension being applied may correspond to the number of CDM groups without data being 3. In the case of the DMRS configuration type 1, the antenna port (DMRS port) that can be used by the DMRS extension being applied need not correspond to the number of CDM groups without data being 1. In the case of the DMRS configuration type 1, the antenna port (DMRS port) that can be used by the DMRS extension being applied need not correspond to the number of CDM groups without data being 2.

In the case that the DMRS configuration type 1 is configured and that the maximum number of the front-loaded DMRS symbols is configured to be 1, and in the case that the higher layer parameter ExtendedDMRSports is configured, the number of information bits constituting the antenna port field may be 6. In the case that the DMRS configuration type 1 is configured and that the maximum number of the front-loaded DMRS symbols is configured to be 1, and in the case that the higher layer parameter ExtendedDMRSports is configured to be valid, the number of information bits constituting the antenna port field may be 6. A first part of the antenna port field including 6 information bits may be used to indicate a DMRS port, and a second part of the antenna port field including 6 information bits may be used for DMRS reception assistance.

In the case that the DMRS configuration type 1 is configured and in the case that the maximum number of the front-loaded DMRS symbols is configured to be 2, and in the case that the higher layer parameter ExtendedDMRSports is configured, the number of information bits constituting the antenna port field may be 7. In the case that the DMRS configuration type 1 is configured and in the case that the maximum number of the front-loaded DMRS symbols is configured to be 2, and in the case that the higher layer parameter ExtendedDMRSports is configured to be valid, the number of information bits constituting the antenna port field may be 7. The antenna port field including 7 information bits may indicate some or all of the DMRS ports {0, 1, 2, 3, 4, 5, 6, 7, 8, 9, 10, 11, 12, 13, 14, 15}. In a case that the value of the antenna port field including 7 information bits indicates some or all of the DMRS ports {8, 9, 10, 11, 12, 13, 14, 15}, the number of CDM groups without data may be 2. A first part of the antenna port field including 7 information bits may be used to indicate a DMRS port, and a second part of the antenna port field including 7 information bits may be used for DMRS reception assistance.

In the case that the DMRS configuration type 2 is configured and in the case that the maximum number of the front-loaded DMRS symbols is configured to be 1, and in the case that the higher layer parameter ExtendedDMRSports is configured, the number of information bits constituting the antenna port field may be 7. In the case that the DMRS configuration type 2 is configured and in the case that the maximum number of the front-loaded DMRS symbols is configured to be 1, and in the case that the higher layer parameter ExtendedDMRSports is configured to be valid, the number of information bits constituting the antenna port field may be 7. The antenna port field including 7 information bits may indicate some or all of the DMRS ports {0, 1, 2, 3, 4, 5, 12, 13, 14, 15, 16, 17}. In a case that the value of the antenna port field including 7 information bits indicates some or all of the DMRS ports {12, 13, 14, 15, 16, 17}, the number of CDM groups without data may be 2. A first part of the antenna port field including 7 information bits may be used to indicate a DMRS port, and a second part of the antenna port field including 7 information bits may be used for DMRS reception assistance.

In the case that the DMRS configuration type 2 is configured and in the case that the maximum number of the front-loaded DMRS symbols is configured to be 2, and in the case that the higher layer parameter ExtendedDMRSports is configured, the number of information bits constituting the antenna port field may be 8. In the case that the DMRS configuration type 2 is configured and in the case that the maximum number of the front-loaded DMRS symbols is configured to be 2, and in the case that the higher layer parameter ExtendedDMRSports is configured to be valid, the number of information bits constituting the antenna port field may be 8. The antenna port field including 8 information bits may indicate some or all of the DMRS ports {0, 1, 2, 3, 4, 5, 6, 7, 8, 9, 10, 11, 12, 13, 14, 15, 16, 17, 18, 19, 20, 21, 22, 23}. In a case that the value of the antenna port field including 8 information bits indicates some or all of the DMRS ports {12, 13, 14, 15, 16, 17, 18, 19, 20, 21, 22, 23}, the number of CDM groups without data may be 2. A first part of the antenna port field including 8 information bits may be used to indicate a DMRS port, and a second part of the antenna port field including 7 information bits may be used for DMRS reception assistance.

The number of DMRS ports may be the number of layers of v. An antenna port $\{p_0,..., p_{v-1}\}$ (antenna port value, antenna port number) may be a sum of a DMRS port (DMRS port value, DMRS port number) and 1000. For example, the DMRS port 0 may correspond to the antenna port $p_0$ = 1000. For example, the DMRS port 1 may correspond to the antenna port $p_1$ = 1001. For example, the DMRS ports {0, 1} may correspond to the antenna ports $\{p_0$ = 1000, $p_1$ = 1001}. For

example, the DMRS ports {2, 3} may correspond to the antenna ports {$p_2$ = 1002, $p_3$ = 1003}.

The DMRS for the PDSCH may be determined based on a sequence of DMRS (DMRS sequence) and mapping to physical resources. The sequence of DMRS for the PDSCH may be generated. The sequence $r(n)$ of DMRS may be determined based at least on a pseudo-random sequence $c(i)$. A pseudo-random sequence generator may be initialized based at least on some or all of an OFDM symbol number $l$ in a slot, a slot number (slot index) $n^\mu_{s, f}$ in a frame, $N^{nn}_{ID}$, and $nn$ = $n^\lambda_{SCID}$. In a case of $nn$ = 0, $N^0_{ID}$ may be given by a higher layer parameter scrablingID0. In a case of $nn$ = 1, $N^1_{ID}$ may be given by a higher layer parameter ID1. $N^{nn}_{ID}$ may be a cell ID $N^{cell}_{ID}$ (Physical layer cell identity). In a case that the higher layer parameter dmrs-Downlink or the higher layer parameter dmrs-Uplink is provided and $\lambda$ = 0, $n^0_{SCID}$ may be $n_{SCID}$. In a case that the higher layer parameter dmrs-Downlink or the higher layer parameter dmrs-Uplink is provided and $\lambda$ = 2, $n^2_{SCID}$ may be $n_{SCID}$. In a case that the higher layer parameter dmrs-Downlink or the higher layer parameter dmrs-Uplink is provided and $\lambda$ = 1, $n^1_{SCID}$ may be 1 - $n_{SCID}$. $\lambda$ may be a CDM group. In a case that the higher layer parameter dmrs-Downlink or the higher layer parameter dmrs-Uplink is not provided, $n^\lambda_{SCID}$ may be $n_{SCID}$. In the case that the higher layer parameter dmrs-Downlink or the higher layer parameter dmrs-Uplink is not provided, $\lambda$ may be 0. $n_{SCID}$ may be 0 or 1. $n_{SCID}$ may be given by a DMRS sequence initialization field in the DCI. In a case that the DMRS sequence initialization field in the DCI is not present, $n_{SCID}$ may be 0.

The DMRS for the PDSCH (PDSCH-DMRS) may be mapped to the physical resources according to the DMRS configuration type. The DMRS configuration type may be the DMRS configuration type 1 (configuration type 1) or the DMRS configuration type 2 (configuration type 2). The sequence $r(m)$ of DMRS may include one or multiple resource elements $(k, l)_{p, \mu}$ (or $a^{(p, \mu)}_{(k, l)}$). The sequence $r(m)$ of DMRS may be mapped to a set $(k, l)_{p, \mu}$ of resource elements. The sequence $r(m)$ of DMRS may be scaled by a factor $\beta^{DMRS}_{PDSCH}$ to match the transmit power. The one or multiple resource elements $(k, l)_{p, \mu}$ may be determined based on a subcarrier index (subcarrier) $k$, an OFDM symbol index (OFDM symbol) $l$, an antenna port $p$, and a subcarrier spacing configuration (subcarrier spacing) $\mu$.

A reference point for the subcarrier index $k$ may be the subcarrier with an index 0 in the common resource block 0 with an index 0. The reference point for the subcarrier index $k$ may be the subcarrier with the index 0 of the lowest-numbered resource block in the CORESET0.

The reference point for the OFDM symbol index $l$ may be determined in association with the start of a slot in the PDSCH mapping type A. The reference point for the OFDM symbol index $l$ may be determined in association with a start of the scheduled PDSCH resource in the PDSCH mapping type B. In a case of the PDSCH mapping type A and in a case that a higher layer parameter dmrs-TypeA-Position is 'pos3', the position $l_0$ of the first DMRS symbol may be 3. In the case of the PDSCH mapping type A and in a case that the higher layer parameter dmrs-TypeA-Position is 'pos2', the position $l_0$ of the first DMRS symbol may be 2. In the PDSCH mapping type B, the position $l_0$ of the first DMRS symbol may be 0.

The sequence $r(n)$ of DMRS may be mapped to a physical resource $a^{(p,\mu)}_{(k, l)}$. The sequence $r(n)$ of DMRS may be mapped to the physical resource $a^{(p, \mu)}_{(k, l)}$ based on equation 1.

[Math. 1]

$$a^{(p,\mu)}_{k,l} = \beta^{DMRS}_{PDSCH} w_f(k') w_t(l') r(2n + k')$$

$k'$ may be {0, 1}. $k'$ may be determined based on the DMRS reception assistance. For example, in a case that an information bit in the DCI format for the DMRS reception assistance does not indicate a specific value, $k'$ may be {0, 1}. In a case that an information bit in the DCI format for the DMRS reception assistance indicates a specific value, $k'$ may be {0, 1, 2, 3}. For example, in the case that the higher layer parameter ExtendedDMRSports is not configured, $k'$ may be {0, 1}. In the case that the higher layer parameter ExtendedDMRSports is configured, $k'$ may be {0, 1, 2, 3}. For example, in the case that the higher layer parameter ExtendedDMRSports is configured and in a case that the DMRS reception assistance is applied, $k'$ may be {0, 1, 2, 3}. For example, in the case that the higher layer parameter ExtendedDMRSports is configured and in a case that the DMRS reception assistance is not applied, $k'$ may be {0, 1}. Whether the DMRS reception assistance is applied may be determined based on the DCI format. Some of the information bits in a certain field of the DCI format may determine whether the DMRS reception assistance is applied. The certain field may be an antenna port field. $k'$ may be referred to as a frequency domain-orthogonal cover code index (FD-OCC index). $k'$ being {0, 1} may mean that a length of the FD-OCC (FD-OCC length) is 2. $k'$ being {0, 1, 2, 3} may mean that the length of the FD-OCC is 4.

In a case that $k'$ is {0, 1} in the DMRS configuration type 1, $k'$ may be {0, 1} in the DMRS configuration type 2. In a case that $k'$ is {0, 1, 2, 3} in the DMRS configuration type 1, $k'$ may be {0, 1, 2, 3} in the DMRS configuration type 2.

The OFDM symbol index $l$ may be $l^{bar} + l'$.

For the PDSCH mapping type A, $l_d$ may be a duration between the first OFDM symbol of a slot and the last OFDM symbol of the scheduled PDSCH resource in the slot. For the PDSCH mapping type B, $l_d$ may be a duration of the scheduled PDSCH resource.

The DMRS position $l^{bar}$ may be a DMRS position $l^{bar}$ for a single symbol DMRS (single symbol front-loaded DMRS). The DMRS position $l^{bar}$ may be determined based at least on the duration ld. For example, the DMRS position $l^{bar}$ may be determined based at least on the duration ld, the PDSCH mapping type, and the additional DMRS. For example, in a case of the duration ld of 2 OFDM symbols, the DMRS position $l^{bar}$ may be $l_0$. For example, in a case of the duration ld of any of 3 to 7 OFDM symbols and in a case that the PDSCH mapping type A is configured, $l^{bar}$ may be $l_0$. For example, in a case of the duration ld of any of 2 to 4 OFDM symbols and in a case that the PDSCH mapping type B is configured, $l^{bar}$ may be $l_0$. For example, in a case of ld of 14 OFDM symbols, and in the case that the PDSCH mapping type A is configured, and in a case that dmrs-AdditionalPosition is set to 'pos0', the DMRS position $l^{bar}$ may be $l_0$. For example, in the case of ld of 14 OFDM symbols, and in the case that the PDSCH mapping type A is configured, and in a case that dmrs-AdditionalPosition is set to 'pos1', the DMRS position $l^{bar}$ may be $\{l_0, l_1\}$. For example, in the case of ld of 14 OFDM symbols, and in the case that the PDSCH mapping type A is configured, and in a case that dmrs-AdditionalPosition is set to 'pos2', the DMRS position $l^{bar}$ may be $\{l_0, 7, 11\}$. For example, in the case of ld of 14 OFDM symbols, and in the case that the PDSCH mapping type A is configured, and in a case that dmrs-AdditionalPosition is set to 'pos3', the DMRS position $l^{bar}$ may be $\{l_0, 5, 8, 11\}$. For example, in the case of ld of 13 OFDM symbols, and in the case that the PDSCH mapping type B is configured, and in the case that dmrs-AdditionalPosition is set to 'pos0', the DMRS position $l^{bar}$ may be $l_0$. For example, in the case of ld of 13 OFDM symbols, and in the case that the PDSCH mapping type B is configured, and in the case that dmrs-AdditionalPosition is set to 'pos1', the DMRS position $l^{bar}$ may be $\{l_0, 9\}$. For example, in the case of ld of 13 OFDM symbols, and in the case that the PDSCH mapping type B is configured, and in the case that dmrs-AdditionalPosition is set to 'pos2', the DMRS position $l^{bar}$ may be $\{l_0, 5, 9\}$. For example, in the case of ld of 13 OFDM symbols, and in the case that the PDSCH mapping type B is configured, and in the case that dmrs-AdditionalPosition is set to 'pos3', the DMRS position $l^{bar}$ may be $\{l_0, 3, 6, 9\}$. dmrs-AdditionalPosition being set to a certain value may mean that dmrs-AdditionalPosition is equal to the certain value.

The DMRS position $l^{bar}$ may be a DMRS position $l^{bar}$ for a double symbol DMRS (single symbol front-loaded DMRS). For example, in a case of the duration ld of any of 5 to 7 OFDM symbols, $l^{bar}$ may be $l_0$. For example, in the case of the duration ld of 14 OFDM symbols, and in the case that the PDSCH mapping type A is configured, and in the case that dmrs-AdditionalPosition is set to 'pos0', $l^{bar}$ may be $l_0$. For example, in the case of the duration ld of 14 OFDM symbols, and in the case that the PDSCH mapping type A is configured, and in the case that dmrs-AdditionalPosition is set to 'pos1', $l^{bar}$ may be $\{l_0, 10\}$. In the case of the duration ld of 13 OFDM symbols, and in the case that the PDSCH mapping type B is configured, and in the case that dmrs-AdditionalPosition is set to 'pos0', $l^{bar}$ may be $l_0$. In the case of the duration ld of 13 OFDM symbols, and in the case that the PDSCH mapping type B is configured, and in the case that dmrs-AdditionalPosition is set to 'pos1', $l^{bar}$ may be $\{l_0, 8\}$.

In a case that the higher layer parameter dmrs-TypeA-Position is equal to 'pos2', the case that the higher layer parameter dmrs-AdditionalPosition is equal to 'pos3' may be supported. In the case that the higher layer parameter dmrs-TypeA-Position is equal to 'pos2', $l_d$ may be 3 or 4 OFDM symbols.

In the case of the PDSCH mapping type A, $l_1$ may be 11 or 12. In the case of the PDSCH mapping type A and in a case that a condition is met, $l_1$ may be 12. In the case of the PDSCH mapping type A and in a case that a condition is not met, $l_1$ may be 11.

l' may be 0 or {0, 1}. For example, in a case of the single symbol front-loaded DMRS, and in a case of the DMRS configuration type 1, and in a case for supported antenna ports from 1000 to 1003, l' may be 0. For example, in the case of the single symbol front-loaded DMRS, and in a case of the DMRS configuration type 2, and in a case of the supported antenna ports from 1000 to 1005, l' may be 0. For example, in the case of the double symbol front-loaded DMRS, and in the case of the DMRS configuration type 1, and in a case for supported antenna ports from 1000 to 1007, l' may be {0, 1}. For example, in the case of the double symbol front-loaded DMRS, and in the case of the DMRS configuration type 2, and in a case for supported antenna ports from 1000 to 1011, l' may be {0, 1}. For example, in the case of the double symbol front-loaded DMRS, and in the case of the DMRS configuration type 1, and in a case of the supported antenna ports from 1000 to 1015, l' may be {0, 1}. For example, in the case of the double symbol front-loaded DMRS, and in the case of the DMRS configuration type 2, and in a case of the supported antenna ports from 1000 to 1023, l' may be {0, 1}.

In the case of the DMRS configuration type 1, the subcarrier index k may be $4n + 2k' + \Delta$. In the case of the DMRS configuration type 2, the subcarrier index k may be $6n + k' + \Delta$.

In a case that at least some or all of $\Delta$, $w_t(l')$, $w_f(k')$ and $\lambda$ are determined, the antenna port $1000 + i$ may be the same as DMRS port i. In the case of the DMRS configuration type 1 and in a case that the DMRS extension is not configured, i may be an integer from 0 to 7. In the case of the DMRS configuration type 1 and in a case that the DMRS extension is configured, i may be an integer from 0 to 15. In the case of the DMRS configuration type 2 and in the case that the DMRS extension is not configured, i may be an integer from 0 to 11. In the case of the DMRS configuration type 2 and in the case that the DMRS extension is configured, i may be an integer from 0 to 23.

$\Delta$ may be determined based at least on the antenna port. $\Delta$ may be determined based at least on the antenna port and the DMRS configuration type. $\Delta$ may be determined based at least on the antenna port, the DMRS configuration type, and whether the DMRS extension is applied. For example, in the case of the DMRS configuration type 1 and in a case that the antenna port is any of {1000, 1001, 1004, 1005}, $\Delta$ may be 0. For example, in the case of the DMRS configuration type 1 and in a case that the antenna port is any of {1002, 1003, 1006, 1007}, $\Delta$ may be 1. For example, in the case of the DMRS configuration type 1 and in a case that the antenna port is any of {1000, 1001, 1004, 1005, 1008, 1009, 1012, 1013}, $\Delta$ may be 0. For example, in the case of the DMRS configuration type 1 and in a case that the antenna port is any of {1002, 1003, 1006, 1007, 1010, 1011, 1014, 1015}, $\Delta$ may be 1. For example, in the case of the DMRS configuration type 1, and in the case that the DMRS extension is not applied, and in the case that the antenna port is any of {1000, 1001, 1004, 1005}, $\Delta$ may be 0. For example, in the case of the DMRS configuration type 1, and in the case that the DMRS extension is not applied, and in the case that the antenna port is any of {1002, 1003, 1006, 1007}, $\Delta$ may be 1. For example, in the case of the DMRS configuration type 1, and in the case that the DMRS extension is applied, and in the case that the antenna port is any of {1000, 1001, 1004, 1005, 1008, 1009, 1012, 1013}, $\Delta$ may be 0. For example, in the case of the DMRS configuration type 1, and in the case that the DMRS extension is applied, and in the case that the antenna port is any of {1002, 1003, 1006, 1007, 1010, 1011, 1014, 1015}, $\Delta$ may be 1. In a case that $\Delta$ is 0, the CDM group $\lambda$ may be 0. In a case that $\Delta$ is 1, the CDM group $\lambda$ may be 1.

In the case of the DMRS configuration type 2 and in a case that the antenna port is any of {1000, 1001, 1006, 1007}, $\Delta$ may be 0. For example, in the case of the DMRS configuration type 2 and in a case that the antenna port is any of {1002, 1003, 1008, 1009}, $\Delta$ may be 2. For example, in the case of the DMRS configuration type 2 and in a case that the antenna port is any of {1004, 1005, 1010, 1011}, $\Delta$ may be 4. In the case of the DMRS configuration type 2 and in a case that the antenna port is any of {1000, 1001, 1006, 1007, 1012, 1013, 1018, 1019}, $\Delta$ may be 0. For example, in the case of the DMRS configuration type 2 and in the case that the antenna port is any of {1002, 1003, 1008, 1009, 1014, 1015, 1020, 1021}, $\Delta$ may be 2. For example, in the case of the DMRS configuration type 2 and in the case that the antenna port is any of { 1004, 1005, 1010, 1011, 1016, 1017, 1022, 1023}, $\Delta$ may be 4. In the case of the DMRS configuration type 2, and in the case that the DMRS extension is not applied, and in the case that the antenna port is any of {1000, 1001, 1006, 1007}, $\Delta$ may be 0. For example, in the case of the DMRS configuration type 2, in the case that DMRS extension is not applied, and in the case that the antenna port is any of {1002, 1003, 1008, 1009}, $\Delta$ may be 2. For example, in the case of the DMRS configuration type 2, and in the case that the DMRS extension is not applied, and in the case that the antenna port is any of {1004, 1005, 1010, 1011}, $\Delta$ may be 4. In the case of the DMRS configuration type 2, and in the case that the DMRS extension is applied, and in the case that the antenna port is any of {1000, 1001, 1006, 1007, 1012, 1013, 1018, 1019}, $\Delta$ may be 0. For example, in the case of the DMRS configuration type 2, and in the case that the DMRS extension is applied, and in the case that the antenna port is any of { 1002, 1003, 1008, 1009, 1014, 1015, 1020, 1021}, $\Delta$ may be 2. For example, in the case of the DMRS configuration type 2, and in the case that the DMRS extension is applied, and in the case that the antenna port is any of {1004, 1005, 1010, 1011, 1016, 1017, 1022, 1023}, $\Delta$ may be 4. In the case that $\Delta$ is 0, the CDM group $\lambda$ may be 0. In a case that $\Delta$ is 2, the CDM group $\lambda$ may be 1. In a case that $\Delta$ is 4, the CDM group $\lambda$ may be 2.

$w_t(l')$ may be determined based on one or both of the antenna port and the DMRS configuration type. $w_t(l')$ may be determined based at least on the antenna port, the DMRS configuration type, and whether the DMRS extension is applied. In the case of the DMRS configuration type 1, $w_t(0)$ may be +1. In the case of the DMRS configuration type 1 and in the case that the antenna port is any of {1000, 1001, 1002, 1003}, wt(1) may be +1. In the case of the DMRS configuration type 1 and in the case that the antenna port is any of { 1004, 1005, 1006, 1007}, $w_t(1)$ may be -1. In the case of the DMRS configuration type 1 and in the case that the antenna port is any of {1008, 1009, 1010, 1011}, $w_t(1)$ may be +1. In the case of the DMRS configuration type 1 and in the case that the antenna port is any of {1012, 1013, 1014, 1015}, $w_t(1)$ may be -1. In the case of the DMRS configuration type 1, and in the case that the DMRS extension is applied, and in the case that the antenna port is any of {1008, 1009, 1010, 1011}, $w_t(1)$ may be +1. In the case of the DMRS configuration type 1, and in the case that the DMRS extension is applied, and in the case that the antenna port is any of {1012, 1013, 1014, 1015}, $w_t(1)$ may be -1.

In the case of the DMRS configuration type 2, $w_t(0)$ may be +1. In the case of the DMRS configuration type 2 and in the case that the antenna port is any of {1000, 1001, 1002, 1003, 1004, 1005}, $w_t(1)$ may be +1. In the case of the DMRS configuration type 2 and in the case that the antenna port is any of {1006, 1007, 1008, 1009, 1010, 1011}, wt(1) may be -1. In the case of the DMRS configuration type 2 and in the case that the antenna port is any of {1012, 1013, 1014, 1015, 1016, 1017}, $w_t(1)$ may be + 1. In the case of the DMRS configuration type 2 and in the case that the antenna port is any of {1018, 1019, 1020, 1021, 1022, 1023}, $w_t(1)$ may be -1. In the case of the DMRS configuration type 2, and in the case that the DMRS extension is applied, and in the case that the antenna port is any of {1012, 1013, 1014, 1015, 1016, 1017}, $w_t(1)$ may be +1. In the case of the DMRS configuration type 2, and in the case that the DMRS extension is applied, and in the case that the antenna port is any of {1018, 1019, 1020, 1021, 1022, 1023}, $w_t(1)$ may be -1.

$w_f(k')$ may be determined based on one or both of the antenna port and the DMRS configuration type. $w_f(k')$ may be determined based on some or all of the antenna port, the DMRS configuration type, whether the DMRS extension is applied, and the DCI format. $w_f(k')$ may be determined based on some or all of the antenna port, the DMRS configuration type, whether the DMRS extension is applied, and whether the DMRS reception assistance is indicated. In the case of the DMRS configuration type 1, $w_f(0)$ may be +1. In the case of the DMRS configuration type 1 and in a case that the antenna port is any of {1000, 1002, 1004, 1006, 1008, 1010, 1012, 1014}, $w_f(1)$ may be +1. In the case of the DMRS configuration type 1 and in a case that the antenna port is any of {1001, 1003, 1005, 1007, 1009, 1011, 1013, 1015}, $w_f(1)$ may be -1. In the case of the DMRS configuration type 1, and in the case that the DMRS extension is applied, and in the case that the antenna port is any of {1000, 1002, 1004, 1006, 1008, 1010, 1012, 1014}, $w_f(1)$ may be +1. In the case of the DMRS configuration type 1, and in the case that the DMRS extension is applied, and in the case that the antenna port is any of {1001, 1003, 1005, 1007, 1009, 1011, 1013, 1015}, $w_f(1)$ may be -1.

In the case of the DMRS configuration type 1, $w_f(2)$ may be -1. In the case of the DMRS configuration type 1 and in the case that the DMRS extension is applied, $w_f(2)$ may be -1. In the case of the DMRS configuration type 1, and in the case that the DMRS extension is applied, and in the case that the DMRS reception assistance is indicated, $w_f(2)$ may be -1. In the case of the DMRS configuration type 1, and in the case that the DMRS extension is applied, and in the case that the DMRS reception assistance is not indicated, $w_f(2)$ may be -1 or $w_f(2)$ need not be used. In the case of the DMRS configuration type 1 and in a case that the antenna port is { 1008, 1010, 1012, 1014}, $w_f(3)$ may be -1. In the case of the DMRS configuration type 1 and in a case that the antenna port is {1009, 1011, 1013, 1015}, $w_f(3)$ may be +1. In the case of the DMRS configuration type 1, and in the case that the DMRS extension is applied, and in the case that the antenna port is {1008, 1010, 1012, 1014}, $w_f(3)$ may be -1. In the case of the DMRS configuration type 1, and in the case that the DMRS extension is applied, and in the case that the antenna port is {1009, 1011, 1013, 1015}, $w_f(3)$ may be +1. In the case of the DMRS configuration type 1, and in the case that DMRS extension is applied, in the case that the antenna port is {1008, 1010, 1012, 1014}, and in the case that DMRS reception assistance is indicated, $w_f(3)$ may be -1. In the case of the DMRS configuration type 1, and in the case that the DMRS extension is applied, and in the case that the antenna port is {1009, 1011, 1013, 1015}, and in the case that DMRS reception assistance is indicated, $w_f(3)$ may be +1. In the case of the DMRS configuration type 1, and in the case that the DMRS extension is applied, and in the case that the antenna port is {1008, 1010, 1012, 1014}, and in the case that the DMRS reception assistance is not indicated, $w_f(3)$ may be -1 or $w_f(3)$ need not be used. In the case of the DMRS configuration type 1, and in the case that the DMRS extension is applied, and in the case that the antenna port is {1009, 1011, 1013, 1015}, and in the case that the DMRS reception assistance is not indicated, $w_f(3)$ may be +1 or $w_f(3)$ need not be used.

In the case of the DMRS configuration type 2, $w_f(0)$ may be +1. In the case of the DMRS configuration type 2 and in a case that the antenna port is any of {1000, 1002, 1004, 1006, 1008, 1010, 1012, 1014, 1016, 1018, 1020, 1022}, $w_f(1)$ may be + 1. In the case of the DMRS configuration type 2 and in a case that the antenna port is any of {1001, 1003, 1005, 1007, 1009, 1011, 1013, 1015, 1017, 1019, 1021, 1023}, $w_f(1)$ may be -1. In the case of the DMRS configuration type 2, and in the case that the DMRS extension is applied, and in the case that the antenna port is any of {1000, 1002, 1004, 1006, 1008, 1010, 1012, 1014, 1016, 1018, 1020, 1022}, $w_f(1)$ may be + 1. In the case of the DMRS configuration type 2, and in the case that the DMRS extension is applied, and in the case that the antenna port is any of {1001, 1003, 1005, 1007, 1009, 1011, 1013, 1015, 1017, 1019, 1021, 1023}, $w_f(1)$ may be -1.

In the case of the DMRS configuration type 2, $w_f(2)$ may be -1. In the case of the DMRS configuration type 2 and in the case that the DMRS extension is applied, $w_f(2)$ may be -1. In the case of the DMRS configuration type 2, and in the case that the DMRS extension is applied, and in the case that the DMRS reception assistance is indicated, $w_f(2)$ may be -1. In the case of the DMRS configuration type 2, and in the case that the DMRS extension is applied, and in the case that DMRS reception assistance is not indicated, $w_f(2)$ may be -1 or $w_f(2)$ need not be used. In the case of the DMRS configuration type 2 and in the case that the antenna port is {1012, 1014, 1016, 1018, 1020, 1022}, $w_f(3)$ may be -1. In the case of the DMRS configuration type 2 and in a case that the antenna port is {1013, 1015, 1017, 1019, 1021, 1023}, $w_f(3)$ may be +1. In the case of the DMRS configuration type 2, and in the case that the DMRS extension is applied, and in a case that the antenna port is {1012, 1014, 1016, 1018, 1020, 1022}, $w_f(3)$ may be -1. In the case of the DMRS configuration type 2, and in the case that DMRS extension is applied, and in the case that the antenna port is {1013, 1015, 1017, 1019, 1021, 1023}, $w_f(3)$ may be +1. In the case of the DMRS configuration type 2, and in the case that DMRS extension is applied, and in the case that the antenna port is {1012, 1014, 1016, 1018, 1020, 1022}, and in the case that DMRS reception assistance is indicated, $w_f(3)$ may be -1. In the case of the DMRS configuration type 2, and in the case that the DMRS extension is applied, in the case that the antenna port is {1013, 1015, 1017, 1019, 1021, 1023}, and in the case that the DMRS reception assistance is indicated, $w_f(3)$ may be +1. In the case of the DMRS configuration type 2, and in the case that the DMRS extension is applied, and in the case that the antenna port is {1012, 1014, 1016, 1018, 1020, 1022}, and in the case that the DMRS reception assistance is not indicated, $w_f(3)$ may be - 1 or $w_f(3)$ need not be used. In the case of the DMRS configuration type 2, and in the case that the DMRS extension is applied, and in the case that the antenna port is {1013, 1015, 1017, 1019, 1021, 1023}, and in the case that the DMRS reception assistance is not indicated, $w_f(3)$ may be +1 or $w_f(3)$ need not be used.

A phase tracking reference signal (PTRS) for the PDSCH may be determined based on a sequence of PTRS (PTRS sequence) and mapping to the physical resources. A sequence (PTRS sequence) corresponding to the PTRS for the PDSCH may be generated. The sequence being mapped to the physical resource may mean that the sequence is mapped to one or multiple resource elements. The sequence r(n) of PTRS may be the same as the sequence of DMRS. For example, the sequence $r_k = r(2m + k')$ of PTRS may be a DMRS (DMRS sequence) in the symbol position $l_0$ and the subcarrier index k.

The PTRS may be present in resource blocks used for the PDSCH. The terminal apparatus 1 may assume that the PTRS (PDSCH-PTRS) is scaled by $\beta_{PTRS}$ to match the transmit power. The terminal apparatus 1 may assume that the PTRS is mapped to one or multiple resource elements $(k, l)_{p, \mu}$. The PTRS sequence $r_k$ may be mapped to one or multiple resource elements $a^{(p,\mu)}_{k,l}$ based on equation 2. $a^{(p,\mu)}_{k,l}$ may be referred to as a physical resource. The physical resource may be one or multiple resource elements.

[Math. 2]

$$a^{(p,\mu)}_{k,l} = \beta_{PTRS} r_k$$

The OFDM symbol index l in equation 2 may be an index within an OFDM symbol allocated for PDSCH transmission. One or multiple first resource elements for the PTRS need not be used for one or multiple second resource elements for the DMRS.

The subcarrier index k for the PTRS may be determined based at least on $k^{RE}_{ref}$. $k^{RE}_{ref}$ may be determined based on one or both of the DMRS port (antenna port) and the DMRS configuration type. For example, $k^{RE}_{ref}$ may be determined based on some or all of the DMRS port (antenna port), the DMRS configuration type, and whether the DMRS extension is applied. For example, $k^{RE}_{ref}$ may be determined based on some or all of the DMRS port (antenna port), the DMRS configuration type, whether the DMRS extension is applied, and whether the DMRS reception assistance is indicated.

A DMRS transmission procedure for a PUSCH scheduled with a first PDCCH with the first DCI format may be applied to a PUSCH scheduled with a second PDCCH with the second DCI format. The first DCI format may be the DCI format 0_1. The second DCI format may be the DCI format 0_2.

In a case that a transmitted PUSCH is not scheduled by the DCI format 0_1/0_2 with a CRC scrambled by a first RNTI, does not correspond to a configured grant, and is not the PUSCH for a Type2 random access procedure, the terminal apparatus 1 may use the single symbol front-loaded DMRS of the DMRS configuration type 1 on the DMRS port 0. The remaining resource elements not used for the DMRS need not be used for a first PUSCH transmission. In a case that transform precoding is not applied, the first PUSCH transmission need not be a PUSCH with the allocation duration of 2 or 1 OFDM symbol. The additional DMRS may be transmitted in accordance with a scheduling type and a PUSCH duration. The first RNTI may be a C-RNTI, a CS-RNTI, an SP-CSI-RNTI, or an MCS-C-RNTI.

In a case that the frequency hopping is not applied, it may be assumed that the higher layer parameter dmrs-AdditionalPosition is equal to 'pos2' and that up to two additional DMRSs are transmitted according to the PUSCH duration. In a case that the frequency hopping is applied, it may be expected that the higher layer parameter dmrs-AdditionalPosition is equal to 'pos1' and that up to one additional DMRS is transmitted according to the PUSCH duration.

In a case that the PUSCH is scheduled with the DCI format 0_0 with the CRC scrambled by the CS-RNTI, the terminal apparatus 1 may use the single symbol front-loaded DMRS on the DMRS port 0. The single symbol front-loaded DMRS may correspond to the DMRS configuration type provided by the higher layer parameter dmrs-Type.

The maximum number of front-loaded DMRS for the PUSCH may be configured by the first higher layer parameter. The first higher layer parameter may be the higher layer parameter maxLength, or may be a higher layer parameter msgA-MaxLength. In a case that the first higher layer parameter is not configured, a single symbol front-loaded DMRS may be scheduled by the DCI, or may be configured by a configured grant configuration (configured grant). The number of additional DMRSs for the PUSCH may be configured by the second higher layer parameter. The second higher layer parameter may be 'pos0', 'pos1', 'pos2', or 'pos3'. For example, in the case that the first higher layer parameter is not configured, the second higher layer parameter may be 'pos0', 'pos1', 'pos2', or 'pos3'. The second higher layer parameter may be dmrs-AdditionalPosition. In the case that the first higher layer parameter is configured, a single symbol front-loaded DMRS (single symbol DMRS) or a double symbol front-loaded DMRS (double symbol DMRS) may be scheduled by the DCI, or may be configured by the configured grant. In the case that the first higher layer parameter is configured, the second higher layer parameter may be 'pos0' or 'pos1'.

In a case that the terminal apparatus 1 that transmits the first PUSCH is configured with the higher layer parameter phaseTrackingRS, the terminal apparatus 1 may assume that the first configuration and the second configuration do not occur simultaneously for the transmitted PUSCH. The first configuration may mean that the DMRS ports 4 to 7 are scheduled in the case of the DMRS configuration type 1. The first configuration may mean that the DMRS ports 6 to 11 are scheduled in the case of the DMRS configuration type 2. The second configuration may mean that the PTRS is transmitted. The first PUSCH may be a PUSCH scheduled by the DCI format 0_2. The first PUSCH may be a PUSCH scheduled by the DCI format 0_0 or the DCI format 0_1. The first configuration may mean that any of the DMRS ports 4 to 7 and the DMRS ports 12 to 15 is scheduled in the case of the DMRS configuration type 1. The first configuration may mean that any of the DMRS ports 6 to 11 and the DMRS ports 18 to 23 is scheduled in the case of the DMRS configuration type 1. The first configuration may mean that any of the DMRS ports 4 to 7 and the DMRS ports 12 to 15 is scheduled in the case of the DMRS configuration type 1 and in the case that the DMRS extension is applied. The first configuration may mean that any of the DMRS ports 6 to 11 and the DMRS ports 18 to 23 is scheduled in the case of the DMRS configuration type 1 and in the case that the DMRS extension is applied.

The PTRS transmission procedure may be applied to the first PUSCH transmission (UE PUSCH transmission). The first PUSCH transmission may be a PUSCH transmission scheduled by the first DCI format in the case that the first higher layer parameter is configured. The first higher layer parameter may be phaseTrackingRS. The first DCI format may be the DCI format 0_0, the DCI format 0_1, or the DCI format 0_2. The first PUSCH transmission may be a PUSCH transmission corresponding to the configured grant in the case that the first higher layer parameter is configured. The PTRS may be present in a second PUSCH. The second PUSCH may be applied to a PUSCH scheduled by a PDCCH with the CRC scrambled by a second RNTI. The second PUSCH may be a PUSCH corresponding to the configured grant. The second RNTI may be any of an MCS-C-RNTI, a C-RNTI, a CS-RNTI, and an SP-CSI-RNTI.

In the case that the transform precoding is not applied and in a case that the higher layer parameter phaseTrackingRS in the higher layer parameter DMRS-UplinkConfig is configured, some or all of the operation 1, the operation 2, the operation 3, and the operation 4 may be performed, indicated, assumed, or determined.

The maximum number of PTRS ports may be given by a higher layer parameter maxNrofPorts. The higher layer parameter maxNrofPorts may be a higher layer parameter in a higher layer parameter UplinkConfig. The terminal apparatus 1 need not expect that the number of PTRS ports (or UL PTRS ports) greater than the reported number is configured.

The terminal apparatus 1 may report a capability of supporting full-coherent uplink transmission (full-conherent UL transmission). In a case that the terminal apparatus 1 reports the capability of supporting the full-coherent uplink transmission, the terminal apparatus 1 may expect that the number of PTRS ports (or UL PTRS ports) is configured to be 1.

Two transmission schemes may be supported for the PUSCH. The two transmission schemes may be codebook transmission (codebook based transmission, or codebook based UL transmission) and non-codebook transmission (non-codebook based transmission, or non-codebook based UL transmission).

One PTRS port may be associated with one DMRS port. In the case of the codebook transmission or the non-codebook transmission, association between (UL) PTRS port(s) and DMRS port(s) may be signaled (indicated) by a first field. The first field may be a PTRS-DMRS association field. The first field may be included in the DCI format 0_1 or the DCI format 0_2. In a case that the PUSCH corresponds to the configured grant (e.g., configured grant type 1), the association between (UL) PTRS port(s) and DMRS port(s) may be a value 0 or "00" in the first field.

In a case that the PUSCH is scheduled by the DCI format 0_0, the PTRS port may be associated with the DMRS port 0.

For non-codebook transmission, the (actual) number of PTRS ports may be determined based on an SRS resource indicator (SRI) or a higher layer parameter sri-ResourceIndicator in the first DCI format. For example, the number (actual number) of PTRS ports may be 8. In a case that two SRS resource sets are configured and in a case that a higher layer parameter usage is set to 'noncodebook', the number (actual number) of PTRS ports for transmission corresponding to each SRS resource set may be determined based on the SRI corresponding to the associated SRS resource set, or may be determined based on a higher layer parameter srs-ResourceIndicator/srs-ResourceIndicator2 corresponding to the associated SRS resource set. The PTRS port index (PTRS port) may be configured by a higher layer parameter ptrs-PortIndex. For example, in the case that the higher layer parameter phaseTrackingRS is configured, the PTRS port index may be configured by the higher layer parameter ptrs-PortIndex. The PTRS port index may be a PTRS port index for each configured SRS resource.

In a case of either partial-coherent or non-coherent codebook transmission, the (actual) number of PTRS ports may be determined based on one or both of the TPMI and the number of layers. The number of layers may be determined based on the DCI format. For example, the number of layers may be indicated by the DCI format 0_1 and precoding information and number of layer (field) in the DCI format. In a case that the higher layer parameter maxNrofPorts is set to 'n2', the (actual) number of PTRS ports and the associated transmission layer may be derived from the TPMI. For example, the antenna port (PUSCH antenna port) 1000 and the antenna port 1002 in TPMI may share a PTRS port 0. The antenna port 1001 and the antenna port 1003 in the TPMI may share a PTRS port 1. The PTRS port 0 may be associated with a layer x. The layer x may be transmitted on the antenna port 1000 and the antenna port 1002 in TPMI. The PTRS port 1 may be associated with a layer y. The layer y may be transmitted on the antenna port 1001 and the antenna port 1003 in TPMI. One or both of x and y may be given by the PTRS-DMRS association (PTRS-DMRS association field) which is a DCI parameter. For example, the antenna ports {1000, 1002, 1004, 1006} may be shared with the PTRS port 0. The antenna ports {1001, 1003, 1005, 1007} may be shared with the PTRS port 1.

The PTRS port 0 may be associated with a layer x'. The layer x' may be transmitted on some or all of the antenna ports {1000, 1002, 1004, 1006}. The PTRS port 1 may be associated with a layer y'. The layer y' may be transmitted on some or all of the antenna ports {1001, 1003, 1005, 1007}. In the case that the higher layer parameter maxNrofPorts is 'n2', and is partial-coherent or non-coherent, the layer x' and the layer y' may be determined. In a case that eight antenna ports are applied, the layer x' and the layer y' may be given. In the case that the DMRS extension is applied, the layer x' and the layer y' may be given.

The precoding information and number of layer field may be included in one or both of the DCI format 0_1 and the DCI format 0_2. For example, the precoding information and number of layer field may determine the number of layers and the TPMI (or TPMI index). The Transmission Precoding Matrix Indicator (TPMI) may be used to determine a precoding matrix for the PUSCH. The precoding matrix may be used for mapping between the layers and the antenna ports. The precoding matrix may be used for beamforming. The number of information bits constituting the precoding information and number of layer field may be determined based on some or all of the number of antenna ports, the maximum number of ranks (layers), whether the transform precoding is applied, a power mode, and a codebook subset. The information bit may be a bit field.

The antenna port field may be included in one or both of the DCI format 0_1 and the DCI format 0_2. The value of the antenna port field may determine one or both of the DMRS port and the number of CDM groups (DMRS-CDM groups) without data. In a case that the transform precoding is applied, the rank (the number of layers) may be 1. In the case that the transform precoding is applied, and in a case that the higher layer parameter dmrs-Type is 1, and in the case that the higher layer parameter maxLength is 1, and in the case that the DMRS extension is not applied, one DMRS port among four DMRS ports may be determined by the antenna port field. In the case that the transform precoding is applied, and in the case that the higher layer parameter dmrs-Type is 1, and in the case that the higher layer parameter maxLength is 1, and in the case that the DMRS extension is applied, one DMRS port among eight DMRS ports may be determined by the antenna port field.

In the case that the transform precoding is applied, and in the case that the higher layer parameter dmrs-Type is 1, and in the case that the higher layer parameter maxLength is 2, and in the case that the DMRS extension is not applied, one DMRS port among eight DMRS ports may be determined by the antenna port field. In the case that the transform precoding is applied, and in the case that the higher layer parameter dmrs-Type is 1, and in the case that the higher layer parameter maxLength is 2, and in the case that the DMRS extension is applied, one DMRS port among 16 DMRS ports may be determined by the antenna port field.

In the case that the transform precoding is not applied, and in the case that the higher layer parameter dmrs-Type is 1, and in the case that the higher layer parameter maxLength is 1, and in a case that the rank (the number of layers) is 1, and in the case that the DMRS extension is not applied, one DMRS port among four DMRS ports may be determined by the antenna port field. In the case that the transform precoding is not applied, and in the case that the higher layer parameter dmrs-Type is 1, and in the case that the higher layer parameter maxLength is 1, and in the case that the rank (the number of layers) is 1, and in the case that the DMRS extension is applied, one DMRS port among eight DMRS ports may be determined by the antenna port field.

In the case that the transform precoding is not applied, and in the case that the higher layer parameter dmrs-Type is 1, and in the case that the higher layer parameter maxLength is 1, and in a case that the rank (the number of layers) is 2, and in the case that the DMRS extension is not applied, two DMRS ports among four DMRS ports may be determined by the antenna port field. In the case that the transform precoding is not applied, and in the case that the higher layer parameter dmrs-Type is 1, and in the case that the higher layer parameter maxLength is 1, and in the case that the rank (the number of layers) is 2, and in the case that the DMRS extension is applied, two DMRS ports among eight DMRS ports may be determined by the antenna port field.

In the case that the transform precoding is not applied, and in the case that the higher layer parameter dmrs-Type is 1, and in the case that the higher layer parameter maxLength is 1, and in a case that the rank (the number of layers) is 3, and in the case that the DMRS extension is not applied, the DMRS ports {0, 1, 2} may be determined by the antenna port field. In the case that the transform precoding is not applied, and in the case that the higher layer parameter dmrs-Type is 1, and in the case that the higher layer parameter maxLength is 1, and in the case that the rank (the number of layers) is 3, and in the case that the DMRS extension is applied, three DMRS ports among eight DMRS ports may be determined by the antenna port field. In the case that the DMRS extension is applied, there may be multiple combinations of three DMRS ports determined by the antenna port field.

In the case that the transform precoding is not applied, and in the case that the higher layer parameter dmrs-Type is 1, and in the case that the higher layer parameter maxLength is 2, and in the case that the rank (the number of layers) is 1, and in the case that the DMRS extension is not applied, one DMRS port among eight DMRS ports may be determined by the antenna port field. In the case that the transform precoding is not applied, and in the case that the higher layer parameter dmrs-Type is 1, and in the case that the higher layer parameter maxLength is 2, and in the case that the rank (the number of layers) is 1, and in the case that the DMRS extension is applied, one DMRS port among 16 DMRS ports may be determined by the antenna port field.

In the case that the transform precoding is not applied, and in the case that the higher layer parameter dmrs-Type is 1, and in the case that the higher layer parameter maxLength is 2, and in the case that the rank (the number of layers) is 2, and in the case that the DMRS extension is not applied, two DMRS ports among eight DMRS ports may be determined by the antenna port field. In the case that the transform precoding is not applied, and in the case that the higher layer parameter dmrs-Type is 1, and in the case that the higher layer parameter maxLength is 2, and in the case that the rank (the number of layers) is 2, and in the case that the DMRS extension is applied, two DMRS ports among 16 DMRS ports may be determined by the antenna port field.

In the case that the transform precoding is not applied, and in the case that the higher layer parameter dmrs-Type is 1, and in the case that the higher layer parameter maxLength is 2, and in the case that the rank (the number of layers) is 3, and in the case that the DMRS extension is not applied, three DMRS ports among eight (or seven) DMRS ports may be determined by the antenna port field. In the case that the transform precoding is not applied, and in the case that the higher layer parameter dmrs-Type is 1, and in the case that the higher layer parameter maxLength is 2, and in the case that the rank (the number of layers) is 3, and in the case that the DMRS extension is applied, three DMRS ports among 16 (or 15 or 14) DMRS ports may be determined by the antenna port field.

In the case that the transform precoding is not applied, and in the case that the higher layer parameter dmrs-Type is 1, and in the case that the higher layer parameter maxLength is 2, and in a case that the rank (the number of layers) is 4, and in the case that the DMRS extension is not applied, four DMRS ports among eight DMRS ports may be determined by the antenna port field. In the case that the transform precoding is not applied, and in the case that the higher layer parameter dmrs-Type is 1, and in the case that the higher layer parameter maxLength is 2, and in the case that the rank (the number of layers) is 4, and in the case that the DMRS extension is applied, four DMRS ports among 16 DMRS ports may be determined by the antenna port field.

In the case that the transform precoding is not applied, and in the case that the higher layer parameter dmrs-Type is 2, and in the case that the higher layer parameter maxLength is 1, and in the case that the rank (the number of layers) is 1, and in the case that the DMRS extension is not applied, one DMRS port among six DMRS ports may be determined by the antenna port field. In the case that the transform precoding is not applied, and in the case that the higher layer parameter dmrs-Type is 2, and in the case that the higher layer parameter maxLength is 1, and in the case that the rank (the number of layers) is 1, and in the case that the DMRS extension is applied, one DMRS port among 12 DMRS ports may be determined by the antenna port field.

In the case that the transform precoding is not applied, and in the case that the higher layer parameter dmrs-Type is 2, and in the case that the higher layer parameter maxLength is 1, and in the case that the rank (the number of layers) is 2, and in the case that the DMRS extension is not applied, two DMRS ports among six DMRS ports may be determined by the antenna port field. In the case that the transform precoding is not applied, and in the case that the higher layer parameter dmrs-Type is 2, and in the case that the higher layer parameter maxLength is 1, and in the case that the rank (the number of layers) is 2, and in the case that the DMRS extension is applied, two DMRS ports among 12 DMRS ports may be determined by the antenna port field.

In the case that the transform precoding is not applied, and in the case that the higher layer parameter dmrs-Type is 2, and in the case that the higher layer parameter maxLength is 1, and in the case that the rank (the number of layers) is 3, and in the case that the DMRS extension is not applied, three DMRS ports among six DMRS ports may be determined by the antenna port field. In the case that the transform precoding is not applied, and in the case that the higher layer parameter dmrs-Type is 2, and in the case that the higher layer parameter maxLength is 1, and in the case that the rank (the number of layers) is 3, and in the case that the DMRS extension is applied, three DMRS ports among 12 DMRS ports may be determined by the antenna port field.

In the case that the transform precoding is not applied, and in the case that the higher layer parameter dmrs-Type is 2, and in the case that the higher layer parameter maxLength is 1, and in the case that the rank (the number of layers) is 4, and in the case that the DMRS extension is not applied, four DMRS ports among six (or four) DMRS ports may be determined by the antenna port field. In the case that the transform precoding is not applied, and in the case that the higher layer parameter dmrs-Type is 2, and in the case that the higher layer parameter maxLength is 1, and in the case that the rank (the number of layers) is 4, and in the case that the DMRS extension is applied, four DMRS ports among 12 (or 8) DMRS ports may be determined by the antenna port field.

In the case that the transform precoding is not applied, and in the case that the higher layer parameter dmrs-Type is 2, and in the case that the higher layer parameter maxLength is 2, and in the case that the rank (the number of layers) is 1, and in the case that the DMRS extension is not applied, one DMRS port among 12 DMRS ports may be determined by the antenna port field. In the case that the transform precoding is not applied, and in the case that the higher layer parameter dmrs-Type is 2, and in the case that the higher layer parameter maxLength is 2, and in the case that the rank (the number of layers) is 1, and in the case that the DMRS extension is applied, one DMRS port among 24 DMRS ports may be determined by the antenna port field.

In the case that the transform precoding is not applied, and in the case that the higher layer parameter dmrs-Type is 2, and in the case that the higher layer parameter maxLength is 2, and in the case that the rank (the number of layers) is 2, and in the case that the DMRS extension is not applied, two DMRS ports among 12 DMRS ports may be determined by the antenna port field. In the case that the transform precoding is not applied, and in the case that the higher layer parameter dmrs-Type is 2, and in the case that the higher layer parameter maxLength is 2, and in the case that the rank (the number of layers) is 2, and in the case that the DMRS extension is applied, two DMRS ports among 24 DMRS ports may be determined by the antenna port field.

In the case that the transform precoding is not applied, and in the case that the higher layer parameter dmrs-Type is 2, and in the case that the higher layer parameter maxLength is 2, and in the case that the rank (the number of layers) is 3, and in the case that the DMRS extension is not applied, three DMRS ports among 12 (or 11) DMRS ports may be determined by the antenna port field. In the case that the transform precoding is not applied, and in the case that the higher layer parameter dmrs-Type is 2, and in the case that the higher layer parameter maxLength is 2, and in the case that the rank (the number of layers) is 3, and in the case that the DMRS extension is applied, three DMRS ports among 24 (or 22) DMRS ports may be determined by the antenna port field.

In the case that the transform precoding is not applied, and in the case that the higher layer parameter dmrs-Type is 2, and in the case that the higher layer parameter maxLength is 2, and in the case that the rank (the number of layers) is 4, and in the case that the DMRS extension is not applied, four DMRS ports among 12 DMRS ports may be determined by the antenna port field. In the case that the transform precoding is not applied, and in the case that the higher layer parameter dmrs-Type is 2, and in the case that the higher layer parameter maxLength is 2, and in the case that the rank (the number of layers) is 4, and in the case that the DMRS extension is applied, four DMRS ports among 24 DMRS ports may be determined by the antenna port field.

The rank (or the value of the rank) may be determined according to an SRS resource indicator field. The rank (or the value of the rank) may be determined according to the precoding information and number of layer field.

Whether the DMRS reception assistance is applied may be determined based on the DCI format. For example, the antenna port field included in the DCI format may determine whether the DMRS reception assistance is applied. For example, one bit of the information bits constituting the antenna port field may determine whether the DMRS reception assistance is applied.

The PTRS-DMRS association field may be included in one or both of the DCI format 0_1 and the DCI format 0_2. In the case that the DMRS extension is not applied, the number of bits (the number of information bits) constituting the PTRS-DMRS association field may be 2 bits. In the case that the DMRS extension is applied, the number of bits constituting the PTRS-DMRS association field may be 3 bits.

The PTRS-DMRS association field may indicate the association between the PTRS port(s) and the DMRS port(s). One or two PTRS ports may be configured by the higher layer parameter (e.g., maxNrofPorts). The DMRS port may be indicated by the antenna port field. In a case that the SRS resource indicator field is present and in a case that the maximum number of rank is greater than 2, the PTRS-DMRS association field may indicate the association between the PTRS port(s) and the DMRS port(s) corresponding to one or both of the SRS resource indicator field and the precoding information and number of layer field.

In the case that the SRS resource indicator field is present, and in a case that the SRS resource indicator field is equal to "01" and "11", and in a case that the maximum number of ranks is 2, the most significant bit (MSB) of the PTRS-DMRS association field may indicate the association between the PTRS port(s) and the DMRS port(s) corresponding to one or both of the SRS resource indicator field and the precoding information and number of layer field. Further, in these cases, the least significant bit (LSB) of the PTRS-DMRS association field may indicate the association between the PTRS port(s) and the DMRS port(s) corresponding to one or both of a second SRS resource indicator field and a second precoding information field. The maximum number of ranks may be determined by a higher layer parameter maxRank.

A second PTRS-DMRS association field may be included in one or both of the DCI format 0_1 and the DCI format 0_2. In the case that the DMRS extension is not applied, the number of bits (the number of information bits) constituting the PTRS-DMRS association field may be 2 bits. In the case that the DMRS extension is applied, the number of bits constituting the PTRS-DMRS association field may be 3 bits. The second PTRS-DMRS association field may indicate the association between the PTRS port(s) and the DMRS port(s) corresponding to one or both of the second SRS resource indicator field and the second precoding information field.

The second precoding information field may be included in one or both of the DCI format 0_1 and the DCI format 0_2. For example, the second precoding information field may determine the TPMI (or TPMI index). One or both of the SRS resource indicator field and the second SRS resource indicator field may be included in the DCI format 0_1 and the DCI format 0_2.

The DMRS for the PUSCH may be determined based on some or all of sequence generation, precoding, and mapping to the physical resources. The sequence $r(n)$ of DMRS may be the same as the sequence of DMRS for the PDSCH. For example, the sequence $r(n)$ of DMRS may be determined based at least on the pseudo-random sequence $c(i)$.

The transmitter and the baseband unit in the transmitter may generate a DMRS (DMRS sequence). The DMRS (DMRS sequence) $r(n)$ may be mapped to the physical resource. For example, the DMRS $r(n)$ may be mapped to a virtual resource and then mapped to the physical resource. The DMRS (PDSCH-DMRS) may be mapped to a virtual resource (or an intermediate quantity) $a'^{(p'(j),\mu)}_{k,l}$. The DMRS sequence $r(n)$ may be mapped to the virtual resources $a'^{(p',\mu)}_{k,l}$ based at least on the frequency domain-orthogonal cover code index $k'$. In the case that the DMRS reception assistance is not applied, $k'$ may be {0, 1}. In the case that the DMRS reception assistance is applied, $k'$ may be {0, 1, 2, 3}. The subcarrier index $k$ may be determined based on the frequency domain-orthogonal cover code index $k'$ and the DMRS configuration type. $p'_j$ may be $p'(j)$. $p'_j$ may be from $p'_0$ to $p'_{v-1}$. $v$ may be the number of layers. A vector by a virtual resource $a'^{(p'(j),\mu)}_{k,l}$ having a length $v$ may be transformed into a vector of a physical resource $a^{(p,\mu)}_{k,l}$ having a length $\rho$ by at least a precoding matrix W. The vector by the virtual resource $a'^{(p'(j),\mu)}_{k,l}$ having the length $v$ may be transformed into the vector of the physical resource $a^{(p, \mu)}{}_{k, l}$ having the length $\rho$ by multiplication with the precoding matrix W. {p'$_0$,..., p'$_{v-1}$} may be a set of virtual antenna ports. The virtual antenna port may be a DMRS antenna port. The virtual antenna port or the DMRS antenna port may be referred to as the antenna port. {p$_0$,..., p$_{\rho-1}$} may be a set of antenna ports. The precoding matrix W may be used for precoding for the PUSCH. The precoding matrix may be determined by the TPMI (TPMI index). That is, the precoding matrix may be determined based on the precoding information and number of layer field in the DCI format.

The transmitter and the baseband unit in the transmitter may generate a PTRS (PTRS sequence). A PTRS (PTRS sequence) $r^{p'(j)}(m)$ at a layer j may be generated. For example, in a case that j is j', $r^{p'(j')}(m)$ may be the DMRS sequence r(m). For example, in a case that j is j", $r^{p'(j")}(m)$ may be the DMRS sequence r(m). For example, in a case that j is not j' or j"", $r^{p'(j)}(m)$ may be 0. p'(j') may be an antenna port (virtual antenna port, DMRS port) associated with PTRS transmission. p'(j') and p'(j") may be antenna ports (virtual antenna ports, DMRS antenna ports) associated with PTRS transmission. p'(j') may be associated with a first DMRS port. p'(j") may be associated with a second DMRS port. One or both of the first DMRS port and the second DMRS port may be determined by the PTRS-DMRS association field.

The PTRS (PTRS sequence) $r^{p'(j)}(m)$ may be mapped to the physical resource $a^{(p, \mu)}{}_{k, l}$ based at least on the precoding matrix W. For example, a vector by $r^{p'(j)}(m)$ having the length v may be transformed into the vector of the physical resource $a^{(p, \mu)}{}_{k, l}$ having the length $\rho$ by at least the precoding matrix W. p may be {p$_0$,..., p$_{\rho-1}$}.

The subcarrier index k for the PTRS may be determined based at least on $k^{RE}{}_{ref}$. $k^{RE}{}_{ref}$ may be determined based on one or both of the DMRS antenna port p' and the DMRS configuration type. For example, $k^{RE}{}_{ref}$ may be determined based on some or all of the DMRS antenna port p', the DMRS configuration type, and whether the DMRS extension is applied. For example, $k^{RE}{}_{ref}$ may be determined based on some or all of the DMRS antenna port p', the DMRS configuration type, whether the DMRS extension is applied, and whether the DMRS reception assistance is indicated.

The problem exists in that the DMRS port extension is needed to increase the number of simultaneous connections of terminal apparatuses. However, one or multiple first DMRS ports used by the terminal apparatus (for example, the terminal apparatus 1) may interfere with one or multiple second DMRS ports used by another terminal apparatus. For example, interference may be present even in a case that the resource (physical resource) for the first DMRS port is different from the resource for the second DMRS port. The interference may disturb the communication. The PTRS may be used to correct a phase error. However, since one PTRS port may correspond to one DMRS port among one or multiple DMRS ports, PTRS port enhancement is also required for the DMRS port extension. For example, one or both of means 1 and means 2 may be used for some or all of DMRS port extension, PTRS port enhancement, and interference suppression.

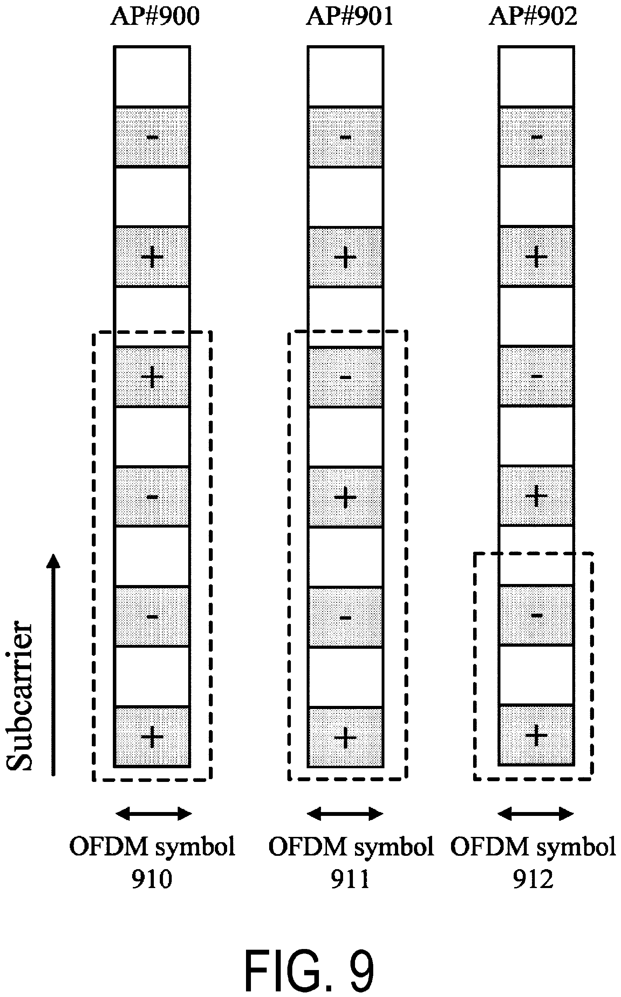

FIG. 9 is a diagram illustrating an example of mapping of the DMRSs to the antenna ports according to an aspect of the present embodiment. The first DMRS (DMRS sequence) may be mapped to a resource element corresponding to an OFDM symbol 910 and an antenna port #900 (AP #900). The second DMRS may be mapped to a resource element corresponding to an OFDM symbol 911 and an antenna port #901 (AP #901). A third DMRS may be mapped to a resource element corresponding to an OFDM 912 and an antenna port #902 (AP #902). In FIG. 9, one block may be a resource element. In FIG. 9, a DMRS may be mapped in a block denoted by "+" or "-". In FIG. 9, the DMRS need not be mapped in a white block.

The first DMRS may be mapped to a first physical resource. The second DMRS may be mapped to a second physical resource. The third DMRS may be mapped to a third physical resource. The first physical resource may be based at least on the OFDM symbol 910 and the antenna port #900. The second physical resource may be based at least on the OFDM symbol 911 and the antenna port #901. The third physical resource may be based at least on the OFDM symbol 912 and the antenna port #902.

In FIG. 9, the DMRS extension may be applied. In FIG. 9, the DMRS reception assistance may or may not be applied.

In FIG. 9, "+" may mean that $w_f(k')$ is + 1. In FIG. 9, "-" may mean that $w_f(k')$ is -1. The DMRS in FIG. 9 may be a single symbol front-loaded DMRS in the DMRS configuration type 1. For example, $w_f(k')$ for the first DMRS corresponding to the antenna port #900 may be {$w_f(0) = +1, w_f(1) = -1, w_f(2) = -1, w_f(3) = +1$}. $w_f(k')$ for the second DMRS corresponding to the antenna port #901 may be {$w_f(0) = +1, w_f(1) = -1, w_f(2) = +1, w_f(3) = -1$}. $w_f(k')$ for the third DMRS corresponding to the antenna port #902 may be {$w_f(0) = +1, w_f(1) = -1$} or {$w_f(0) +1, w_f(1) = - 1, w_f(2) = +1, w_f(3) = -1$}.

For example, the antenna port #901 may be the antenna port #902. That is, the antenna port #901 may be the same as the antenna port #902. The OFDM symbol 911 may be the same as the OFDM symbol 912. In the case that the DMRS reception assistance is applied, the second DMRS may be mapped based on second $w_f(k')$. In the case that the DMRS reception assistance is not applied, the third DMRS may be mapped based on the second $w_f(k')$. The second $w_f(k')$ may be {+1, -1, +1, -1}. In the case that the DMRS reception assistance is applied, k' may be {0, 1, 2, 3} and the second DMRS may be mapped based on the second $w_f(k')$. In the case that the DMRS reception assistance is not applied, k' may be {0, 1} and the third DMRS may be mapped based on the second $w_f(k')$.

In FIG. 9, the CDM group corresponding to the antenna port #900 may be the same as the CDM group corresponding to the antenna port #901. The first DMRS and the second DMRS may be simultaneously scheduled. The CDM group corresponding to the antenna port #900 may be the same as the CDM group corresponding to the antenna port #902. The first DMRS need not be expected to be scheduled simultaneously with the second DMRS. Both the antenna port #900 and the antenna port #902 need not be used. For example, both the antenna port #900 and the antenna port #902 need not be used. For example, both the antenna port #900 and the antenna port #902 need not be used in one or both of one PDSCH transmission and one PUSCH transmission.

The OFDM symbol 910, the OFDM symbol 911, and the OFDM symbol 912 may be the same OFDM symbol. The base station apparatus 3 may perform a first PDSCH transmission with the first DMRS for a first terminal apparatus and a second PDSCH transmission with the second DMRS for a second terminal apparatus in the same resource element. The base station apparatus 3 need not perform the first PDSCH transmission with the first DMRS for the first terminal apparatus and a third PDSCH transmission with the third DMRS for a third terminal apparatus in the same resource element.

The terminal apparatus 1 in the antenna port #900 need not expect precoding of the co-scheduled terminal apparatus in the antenna port #902.

In the case that the DMRS extension is not applied, the antenna port #900 may not be used and the antenna port #902 may be used.

For the means 1, the DMRS (DMRS sequence, sequence of DMRS) $r(\cdot)$ for the PDSCH may be mapped to one or multiple resource elements $a^{(p, \mu)}_{k, l}$. The DMRS (DMRS sequence, sequence of DMRS) $r(\cdot)$ for the PUSCH may be mapped to one or multiple virtual resources $a'^{(p'(j), \mu)}_{k, l}$. The virtual resources may be mapped to one or multiple resource elements $a^{(p, \mu)}_{k, l}$ based on the precoding matrix W. One or multiple resource elements may be referred to as a physical resource.

In a case that the DMRS is mapped to the physical resource (or virtual resource), $w_f(k')$ may be used. That is, the DMRS may be mapped to the physical resource (or virtual resource) based at least on a first frequency domain-orthogonal cover code index k' or a second frequency domain-orthogonal cover code index k'. The first frequency domain-orthogonal cover code index k' may be 0 and 1. The second frequency domain-orthogonal cover code index k' may be 0, 1, 2, and 3.

For the means 1, in the case that the DMRS reception assistance is not applied, the physical resource (or virtual resource) may be determined based on the first index k'. In the case that the DMRS reception assistance is applied, the physical resource (or virtual resource) may be determined based on the second index k'.

In the case that the DMRS reception assistance is applied, the number of subcarriers for DMRS may be assumed to be equal to or greater than 4. In the case that the DMRS reception assistance is not applied, the number of subcarriers for DMRS may be assumed to be equal to or greater than 2. In the case that the DMRS reception assistance is applied, a length K for mapping the DMRS in the frequency domain may be 4. In the case that the DMRS reception assistance is not applied, the length K for mapping the DMRS in the frequency domain may be 2. For example, the length K for mapping the DMRS in the frequency domain may be a length of the frequency domain-orthogonal cover code. In a case that the index related to the subcarrier is k", the frequency domain-orthogonal cover code index k' may be mod(k", K). Whether the DMRS extension is applied may be determined by the higher layer parameter. Whether the DMRS reception assistance is applied may be determined based on the DCI format. The DCI format may indicate whether the DMRS reception assistance is applied.

The first field in the DCI format may determine the antenna port (DMRS port). A second field in the DCI format may determine whether the DMRS reception assistance is applied. The first field may be the same as the second field. That is, one field in the DCI format may indicate one or both of the antenna port (DMRS port) and whether the DMRS reception assistance is applied. For example, in the case that the DMRS extension is applied, one field in the DCI format may indicate both the antenna port (DMRS port) and whether the DMRS reception assistance is applied. For example, in the case that the DMRS extension is not applied, one field in the DCI format need not indicate whether the DMRS reception assistance is applied.

The maximum number of DMRS ports in the case that the DMRS extension is applied may be greater than the maximum number of DMRS ports in the case that the DMRS extension is not applied. For example, in the case that the DMRS extension is applied, the maximum number of DMRS ports may be a first value. In the case that the DMRS extension is not applied, the maximum number of DMRS ports may be a second value.

For the means 2, the PTRS (PTRS sequence, sequence of PTRS) for the PDSCH may be given. The PTRS (PTRS sequence, sequence of PTRS) for the PUSCH may be given. One or two DMRS ports of the one or multiple DMRS ports may be determined based on one field in the DCI format. Each of one or two DMRS ports may be associated with one PTRS port. The PTRS port may be a PTRS antenna port associated with PTRS transmission.

In the case that the DMRS extension is not applied, one field may include 0 or X bits. In the case that the DMRS extension is applied, one field may include 0 or X' bits. X' bits may be greater than the X bits. X bits may be 2 bits. X' bits may be 3 bits. In the case that the DMRS extension is applied and in a case that layer extension is applied, one field may include 0 or X' bits. The maximum number of layers in the case that the layer extension is applied may be greater than the maximum number of layers in a case that the layer extension is not applied. For example, in the case that the layer extension is applied, uplink transmission in up to eight layers may be performed. In the case that the layer extension is applied, one field may include 0 or X' bits.

The subcarrier index for the PTRS may be determined based at least on whether the DMRS extension is applied.

For example, $k^{RE}{}_{ref}$ may be determined based at least on whether the DMRS extension is applied.

For the means 2, in the case that the DMRS extension is applied, the PTRS need not be transmitted. For example, in the case that the DMRS extension is applied and in a case that a certain antenna port is used, a PTRS need not be transmitted or determined. The certain antenna port may be an antenna port (DMRS port) that can be used by the DMRS extension being applied. For example, in the case that the DMRS extension is applied and in the case that the DMRS reception assistance is applied, the PTRS need not be transmitted or determined. For example, in the case that the DMRS extension is applied and in the case that the DMRS reception assistance is not applied, the PTRS may be transmitted or determined. In the case that the DMRS extension is applied, the PTRS may be assumed to be not present. In the case that the higher layer parameter phaseTrackingRS is configured, the DMRS extension need not be expected to be applied. In the case that the DMRS extension is applied, the higher layer parameter phaseTrackingRS need not be expected to be configured.

In a case that the PTRS is mapped in a certain resource element of the first antenna port, data need not be mapped in the certain resource element of the second antenna port. In a case that the PTRS is mapped to a certain resource element of the first antenna port for the terminal apparatus 1, data need not be expected to be mapped to the certain resource element of the second antenna port for the co-scheduled terminal apparatus. In a case that the DMRS extension is applied for the terminal apparatus 1, the terminal apparatus 1 need not expect that the DMRS extension is not applied for the co-scheduled terminal apparatus. In a case that the DMRS reception assistance is applied for the terminal apparatus 1, the terminal apparatus 1 need not expect that the DMRS reception assistance is not applied for the co-scheduled terminal apparatus.

In a case that the PTRS is transmitted in one or multiple resource elements of the first antenna port, data or signals need not be expected to be transmitted in the one or multiple resource elements of the second antenna port. The first antenna port may be the antenna port #900. The first antenna port may be one of the antenna ports that can be used by the DMRS extension being applied. The first antenna port may be the antenna port for the terminal apparatus 1. The second antenna port may be the antenna port for the terminal apparatus 1 or another terminal apparatus (for example, the co-scheduled terminal apparatus).

The antenna port that can be used by the DMRS extension being applied need not be the antenna port associated with the PTRS. For example, the PTRS may be assumed to be not present in the antenna port that can be used by the DMRS extension being applied.

The terminal apparatus 1 may include a receiver that receives a PDSCH and a DCI format indicating reception of the PDSCH. The terminal apparatus 1 may include a transmitter or a baseband unit in the transmitter that generates some or all of the PDSCH, a DMRS (DMRS sequence) for the PDSCH, and a PTRS (PTRS sequence) for the PDSCH.

The DCI format may include a first field. The first field may or need not indicate first information. Indicating the first information may mean applying DMRS reception assistance. The first field may be an antenna port field.

A DMRS may be mapped to one or multiple resource elements (or a physical resource). The one or multiple resource elements may be determined based on a first index or a second index. A possible value of the first index need not be the same as a possible value of the second index. The first index may be values of 0 and 1. The second index may be values of 0, 1, 2, and 3. The first index and the second index may be indices in a frequency domain. The first index and the second index may be frequency domain-orthogonal cover code indices.

The one or multiple resource elements may be determined based on a first length or a second length. The first length may be 2. The second length may be 4. The first length and the second length may be lengths in the frequency domain. The first length and the second length may be the number of elements of $w_f(k')$. The first length and the second length may be a length of the frequency domain-orthogonal cover code.

In a case that the first field does not indicate first information, the one or multiple resource elements may be determined based on one or both of the first index and the first length. In a case that the first field indicates the first information, the one or multiple resource elements may be determined based on one or both of the second index and the second length.

The terminal apparatus 1 may include a radio resource control layer processing unit that receives a first higher layer parameter. The first higher layer parameter may be a parameter related to one or both of the number of DMRS ports and the maximum number of DMRS ports. For example, in a case that the first higher layer parameter is configured, the DCI format may include the first field. In a case that the first higher layer parameter is not configured, the DCI format may not include the first field. In the case that the first higher layer parameter is configured, the maximum number of DMRS ports may be a first value. In the case that the first higher layer parameter is not configured, the maximum number of DMRS ports may be a second value. The first value may be different from the second value. The first higher layer parameter may be ExtendedDMRSports.

The terminal apparatus 1 may include a receiver that receives a PDCCH to which DCI is mapped. The terminal apparatus 1 may include a transmitter that transmits some or all of a PUSCH, a DMRS for the PUSCH, and a PTRS for the PUSCH. The DCI may indicate transmission of the PUSCH. The terminal apparatus 1 may include a transmitter or a baseband unit in the transmitter that generates the DMRS (DMRS sequence) for the PUSCH and the PTRS (PTRS sequence) for the PUSCH. The DMRS sequence for the PUSCH may be defined. The PTRS sequence for the PUSCH may be given.

The DCI format may include a second field. The second field may indicate one DMRS port of N DMRS ports. One PTRS port may be determined based on one DMRS port. The second field may indicate two DMRS ports of N' DMRS ports. Two PTRS ports may be determined based on two DMRS ports. The PTRS port for the PTRS may be determined based on the second field and one or multiple DMRS ports for the DMRS. An antenna port associated with the PTRS may be determined based on the second field and one or multiple DMRS ports for the DMRS.

In a case that a second higher layer parameter is not configured, the second field may include the first number of bits (the number of information bits). In a case that the second higher layer parameter is configured, the second field may include the second number of bits (the number of information bits). The first number of bits may be 2 bits. The second number of bits may be 3 bits.

The terminal apparatus 1 may include a radio resource control layer processing unit that receives the second higher layer parameter. The second higher layer parameter may be a parameter related to one or both of the number of DMRS ports and the maximum number of DMRS ports. In the case that the first higher layer parameter is configured, the maximum number of DMRS ports may be a third value. In the case that the first higher layer parameter is not configured, the maximum number of DMRS ports may be a second value. The first value may be different from a fourth value. The first higher layer parameter may be configured for downlink. The second higher layer parameter may be configured for uplink. The second higher layer parameter may be ExtendedDMRSports.

Various aspects of apparatuses according to an aspect of the present embodiment will be described below.

(1) In order to accomplish the object described above, an aspect of the present invention is contrived to provide the following means. Specifically, a first aspect of the present invention is a terminal apparatus including a receiver configured to receive a PDSCH and a DCI format indicating reception of the PDSCH, wherein the DCI format includes a first field, a DMRS for the PDSCH is mapped to one or multiple resource elements, the one or multiple resource elements are determined based on a first index or a second index, a possible value of the first index is not identical to a possible value of the second index, in a case that the first field does not indicate first information, the one or multiple resource elements are determined based the first index, and in a case that the first field indicates the first information, the one or multiple resource elements are determined based the second index. Further, a radio resource control layer processing unit is included that receives a first higher layer parameter, wherein the first higher layer parameter is related to the maximum number of DMRS ports for the DMRS.

(2) A second aspect of the present invention is a base station apparatus including a transmitter configured to transmit a PDSCH and a DCI format indicating reception of the PDSCH, wherein the DCI format includes a first field, a DMRS for the PDSCH is mapped to one or multiple resource elements, the one or multiple resource elements are determined based on a first index or a second index, a possible value of the first index is not identical to a possible value of the second index, in a case that the first field does not indicate first information, the one or multiple resource elements are determined based the first index, and in a case that the first field indicates the first information, the one or multiple resource elements are determined based the second index. Further, a radio resource control layer processing unit is included that transmits a first higher layer parameter, wherein the first higher layer parameter is related to the maximum number of DMRS ports for the DMRS.

(3) A third aspect of the present invention is a terminal apparatus including a receiver configured to receive a PDCCH to which DCI format indicating transmission of a PUSCH is mapped, a transmitter configured to transmit the PUSCH, and the transmitter that generates a DMRS for the PUSCH and a PTRS for the PUSCH, wherein a first higher layer parameter is related to the maximum number of DMRS ports for the DMRS, in a case that the first higher layer parameter is not configured, a first field in the DCI format includes a first number of bits, in a case that the first higher layer parameter is configured, the first field in the DCI format includes a second number of bits, and a PTRS port for the PTRS is determined based on the first field and one or multiple DMRS ports for the DMRS.

(4) A fourth aspect of the present invention is a terminal apparatus including a transmitter configured to transmit a PDCCH to which DCI format indicating transmission of a PUSCH is mapped, and a receiver configured to receive the PUSCH, wherein a DMRS for the PUSCH and a PTRS for the PUSCH are generated, a first higher layer parameter is related to the maximum number of DMRS ports for the DMRS, in a case that the first higher layer parameter is not configured, a first field in the DCI format includes a first number of bits, in a case that the first higher layer parameter is configured, the first field in the DCI format includes a second number of bits, and a PTRS port for the PTRS is determined based on the first field and one or multiple DMRS ports for the DMRS.

A program running on the base station apparatus 3 and the terminal apparatus 1 according to an aspect of the present invention may be a program (a program that causes a computer to function) that controls a Central Processing Unit (CPU) and the like so as to implement the functions of the above-described embodiment according to an aspect of the present invention. The information handled in these apparatuses is temporarily loaded into a Random Access Memory (RAM) while being processed, is then stored in a Hard Disk Drive (HDD) and various types of Read Only Memory (ROM) such as a Flash ROM, and is read, modified, and written by the CPU, as necessary.

Note that the terminal apparatus 1 and the base station apparatus 3 according to the above-described embodiment may be partially implemented by a computer. In that case, this configuration may be implemented by recording a program for implementing such control functions on a computer-readable recording medium and causing a computer system to read the program recorded on the recording medium for execution.

Note that it is assumed that the "computer system" mentioned here refers to a computer system built into the terminal apparatus 1 or the base station apparatus 3, and the computer system includes an OS and hardware components such as peripheral devices. In addition, the "computer-readable recording medium" refers to a portable medium such as a flexible disk, a magneto-optical disk, a ROM, and a CD-ROM, and a storage apparatus such as a hard disk built into the computer system.

Moreover, the "computer-readable recording medium" may include a medium that dynamically stores a program for a short period of time, such as a communication line in a case that the program is transmitted over a network such as the Internet or over a communication line such as a telephone line, and may also include a medium that stores the program for a certain period of time, such as a volatile memory included in the computer system functioning as a server or a client in such a case. In addition, the above-described program may be one for implementing some of the above-described functions, and also may be one capable of implementing the above-described functions in combination with a program already recorded in a computer system.

Furthermore, the base station apparatus 3 according to the aforementioned embodiment may be implemented as an aggregation (apparatus group) including multiple apparatuses. Each of the apparatuses included in such an apparatus group may include a part or all of each function or each functional block of the base station apparatus 3 according to the aforementioned embodiment. As the apparatus group, it is only necessary to have all of functions or functional blocks of the base station apparatus 3. Moreover, the terminal apparatus 1 according to the aforementioned embodiment can also communicate with the base station apparatus as the aggregation.

Also, the base station apparatus 3 according to the aforementioned embodiment may be an Evolved Universal Terrestrial Radio Access Network (EUTRAN) and/or a NextGen RAN (NG-RAN or NR RAN). Moreover, the base station apparatus 3 according to the aforementioned embodiment may have a part or all of the functions of a higher node for an eNodeB and/or a gNB.

Also, a part or all portions of each of the terminal apparatus 1 and the base station apparatus 3 according to the aforementioned embodiment may be implemented as an LSI, which is typically an integrated circuit, or may be implemented as a chip set. The functional blocks of each of the terminal apparatus 1 and the base station apparatus 3 may be individually implemented as a chip, or a part or all of the functional blocks may be integrated into a chip. Furthermore, a circuit integration technique is not limited to the LSI and may be implemented with a dedicated circuit or a general-purpose processor. Moreover, in a case that a circuit integration technology that substitutes an LSI appears with the advance of the semiconductor technology, it is also possible to use an integrated circuit based on the technology.

In addition, although the aforementioned embodiments have described the terminal apparatus as an example of a communication apparatus, the present invention is not limited to such a terminal apparatus, and is also applicable to a terminal apparatus or a communication apparatus that is a stationary type or a non-movable type electronic apparatus installed indoors or outdoors, for example, such as an AV device, a kitchen device, a cleaning or washing machine, an air-conditioning device, office equipment, a vending machine, and other household appliances.

Although the embodiments of the present invention have been described in detail above referring to the drawings, the specific configuration is not limited to the embodiments and includes, for example, design changes within the scope that do not depart from the gist of the present invention. For an aspect of the present invention, various modifications are possible within the scope of the claims, and embodiments that are made by suitably combining technical means disclosed according to the different embodiments are also included in the technical scope of the present invention. In addition, a configuration in which elements described in the respective embodiments and having mutually similar effects are substituted for one another is also included.

Industrial Applicability

An aspect of the present invention can be utilized, for example, in a communication system, communication equipment (for example, a cellular phone apparatus, a base station apparatus, a wireless LAN apparatus, or a sensor device), an integrated circuit (for example, a communication chip), or a program.

Reference Signs List

1 (1A, 1B, 1C) Terminal apparatus
3 Base station apparatus
10, 30 Radio transmission and/or reception unit
10a, 30a Radio transmission unit
10b, 30b Radio reception unit
11, 31 Antenna unit
12, 32 RF unit
13, 33 Baseband unit
14, 34 Higher layer processing unit
15, 35 Medium access control layer processing unit
16, 36 Radio resource control layer processing unit
91, 92, 93, 94 Search space set
300 Component carrier
301 Primary cell
302, 303 Secondary cell
700 Set of resource elements for PSS
710, 711, 712, 713 Set of resource elements for PBCH and DMRS for PBCH
720 Set of resource elements for SSS
3000 Point
3001, 3002 Resource grid
3003, 3004 BWP
3011, 3012, 3013, 3014 Offset
3100, 3200 Common resource block set
900, 901, 902 Antenna port
910, 911, 912 OFDM symbol

**Claims**

1. A terminal apparatus comprising:

    a receiver configured to receive a PDCCH to which a DCI format indicating transmission of a PUSCH is mapped;
    a transmitter configured to transmit the PUSCH; and
    the transmitter configured to generate a DMRS for the PUSCH and a PTRS for the PUSCH, wherein
    a first higher layer parameter is related to a maximum number of DMRS ports for the DMRS,
    in a case that the first higher layer parameter is not configured, a first field in the DCI format is configured to include a first number of bits,
    in a case that the first higher layer parameter is configured, the first field in the DCI format is configured to include a second number of bits, and
    a PTRS port for the PTRS is determined based on the first field and one or multiple DMRS ports for the DMRS.

2. A base station apparatus comprising:

    a transmitter configured to transmit a PDCCH to which a DCI format indicating transmission of a PUSCH is mapped; and
    a receiver configured to receive the PUSCH, wherein
    a DMRS for the PUSCH and a PTRS for the PUSCH are generated,
    a first higher layer parameter is related to a maximum number of DMRS ports for the DMRS,
    in a case that the first higher layer parameter is not configured, a first field in the DCI format is configured to include a first number of bits,
    in a case that the first higher layer parameter is configured, the first field in the DCI format is configured to include a second number of bits, and
    a PTRS port for the PTRS is determined based on the first field and one or multiple DMRS ports for the DMRS.

3. A communication method used in a terminal apparatus, the method comprising the steps of:

    receiving a PDCCH to which a DCI format indicating transmission of a PUSCH is mapped;
    transmitting the PUSCH; and

generating a DMRS for the PUSCH and a PTRS for the PUSCH, wherein

a first higher layer parameter is related to a maximum number of DMRS ports for the DMRS,

in a case that the first higher layer parameter is not configured, a first field in the DCI format is configured to include a first number of bits,

in a case that the first higher layer parameter is configured, the first field in the DCI format is configured to include a second number of bits, and

a PTRS port for the PTRS is determined based on the first field and one or multiple DMRS ports for the DMRS.

# FIG. 1

Figure 2A: Number of OFDM symbols per slot, slots per frame, and slots per subframe for normal cyclic prefix

| $\mu$ | $N_{symb}^{slot}$ | $N_{slot}^{frame,\mu}$ | $N_{slot}^{subframe,\mu}$ |
|---|---|---|---|
| 0 | 14 | 10 | 1 |
| 1 | 14 | 20 | 2 |
| 2 | 14 | 40 | 4 |
| 3 | 14 | 80 | 8 |
| 4 | 14 | 160 | 16 |

Figure 2B: Number of OFDM symbols per slot, slots per frame, and slots per subframe for extended cyclic prefix

| $\mu$ | $N_{symb}^{slot}$ | $N_{slot}^{frame,\mu}$ | $N_{slot}^{subframe,\mu}$ |
|---|---|---|---|
| 2 | 12 | 40 | 4 |

# FIG. 2

FIG. 3

FIG. 4

ANTENNA UNIT

31

RF UNIT

32

BASEBAND UNIT

33

RADIO TRANSMISSION AND/OR RECEPTION UNIT
(PHYSICAL LAYER PROCESSING UNIT)

30

MEDIUM ACCESS
CONTROL LAYER
PROCESSING UNIT

35

RADIO RESOURCE
CONTROL LAYER
PROCESSING UNIT

36

34

HIGHER LAYER PROCESSING UNIT

BASE STATION APPARATUS

3

HIGHER NODE AND OTHER BASE STATION APPARATUS

# FIG. 5

ANTENNA UNIT

11

RF UNIT

12

10

BASEBAND UNIT

13

RADIO TRANSMISSION AND/OR RECEPTION UNIT
(PHYSICAL LAYER PROCESSING UNIT)

14

| MEDIUM ACCESS CONTROL LAYER PROCESSING UNIT | RADIO RESOURCE CONTROL LAYER PROCESSING UNIT |
|---|---|

15

16

HIGHER LAYER PROCESSING UNIT

TERMINAL APPARATUS

1

# FIG. 6

REs for PBCH

REs for PSS

REs for SSS

700

710

720

713

711

712

Frequency

Time

# FIG. 7

FIG. 8

AP#900     AP#901     AP#902

Subcarrier →

OFDM symbol 910    OFDM symbol 911    OFDM symbol 912

# FIG. 9

| INTERNATIONAL SEARCH REPORT | International application No. |
|---|---|
| | **PCT/JP2023/021340** |

**A. CLASSIFICATION OF SUBJECT MATTER**

*H04W 72/232*(2023.01)i; *H04W 72/1268*(2023.01)i
FI: H04W72/232; H04W72/1268

According to International Patent Classification (IPC) or to both national classification and IPC

**B. FIELDS SEARCHED**

Minimum documentation searched (classification system followed by classification symbols)

H04W72/232; H04W72/1268

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | SAMSUNG. Views on DMRS enhancements. 3GPP TSG-RAN WG1 Meeting #109-e R1-2203891. [online]. 29 April 2022, pp. 1-11, [retrieved on 02 August 2023], Retrieved from <https://www.3gpp.org/ftp/tsg_ran/WG1_RL1/TSGR1_109-e/Docs/R1-2203891.zip> 3 UL DMRS enhancement enabling 8TX operation [pp. 8-9] | 1-3 |
| A | NTT DOCOMO, INC. Discussion on increased number of orthogonal DMRS ports. 3GPP TSG-RAN WG1 Meeting #109-e R1-2204370. [online]. 29 April 2022, pp. 1-7, [retrieved on 02 August 2023], Retrieved from <https://www.3gpp.org/ftp/tsg_ran/WG1_RL1/TSGR1_109-e/Docs/R1-2204370.zip> 2. Increasing orthogonal DMRS ports [pp. 1-5], 3. DMRS enhancement for 8 Tx UL SU-MIMO [pp. 5-6] | 1-3 |

☐ Further documents are listed in the continuation of Box C.  ☐ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **02 August 2023** | **15 August 2023** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2022097704 A

**Non-patent literature cited in the description**

- New SID proposal: Study on New Radio Access Technology. *RP-160671, NTT docomo, 3GPP TSG RAN Meeting #71*, 07 March 2016
- Release 17 package for RAN. *RP-193216, RAN chairman, RAN1 chairman, RAN2 chairman, RAN3 chairman, 3GPP TSG RAN Meeting #86*, 09 December 2019
- Release 18 package summary. *RP-213469, RAN chairman, RAN1 chairman, RAN2 chairman, RAN3 chairman, 3GPP TSG RAN Meeting #94-e*, 06 December 2021